# FASCICULE DE BREVET EUROPEEN

(11) **EP 4 166 246 B1**
(45) Date de publication et mention de la délivrance du brevet: **02.04.2025**
(21) Numéro de dépôt: 21020516.7
(22) Date de dépôt: 14.10.2021
(51) Int. Cl.: B06B 1/08, G01N 29/24, G01N 29/04, B06B 1/04

(54) **SYSTÈME EMAT POUR LA DÉTECTION DE DISCONTINUITÉS DE SURFACE ET INTERNES DANS DES STRUCTURES CONDUCTRICES À HAUTE TEMPÉRATURE**
EMAT-SYSTEM ZUR ERKENNUNG VON OBERFLÄCHEN- UND INNEREN DISKONTINUITÄTEN IN LEITFÄHIGEN STRUKTUREN BEI HOHEN TEMPERATUREN
EMAT SYSTEM FOR DETECTING SURFACE AND INTERNAL DISCONTINUITIES IN HIGH-TEMPERATURE CONDUCTIVE STRUCTURES

(43) Date de publication de la demande: 19.04.2023
(73) Titulaire: SteeLEMAT S.à r.l, 1468 Luxembourg (LU)
(72) Inventeur: Evdokimov, Alexey, 3143005 Moscou (RU); Subbotin, Artemii, 143003 Odintsovo (RU); Malynka, Sergii, 49126 Dnipro (UA)

(56) Documents cités:
- JP-A- H10 282 071
- JP-A- S6 175 259
- US-B2- 7 546 770

## Description

### Domaine technique

Cette invention se rapporte généralement à une technologie de test non destructif à ultrasons (UNDT). Elle concerne spécifiquement un transducteur acoustique électromagnétique (EMAT) pour les applications UNDT, ses modes de mise en œuvre et ses applications industrielles.

Le domaine technique de l'invention concerne spécifiquement les transducteurs EMAT:
a. Qui sont des transducteurs de type non vibrant, qui ne vibrent pas mécaniquement, mais induisent et/ou reçoivent des vibrations mécaniques ultrasoniques par des moyens électromagnétiques;
b. Pour étudier ou analyser des matériaux à l'aide de moyens émetteurs et/ou de de moyens récepteurs adaptés pour induire des ondes ultrasoniques dans un corps d'essai conducteur ou pour recevoir des ondes ultrasoniques de ce corps à des fins d'essai, ce par des moyens électromagnétiques; et, pour la visualisation de l'intérieur des objets en transmettant et/ou en recevant une telle onde ultrasonique émise à travers l'objet; et,
c. En tant que tel, qui appartiennent à la classe internationale des brevets Int. CI. G01N 29/24 et/ou à la classe des brevets des États-Unis U.S CI. 73/643.

Le domaine technique de l'invention est limité aux transducteurs EMAT qui sont en outre :
a. Équipés de moyens de couplage électromagnétique significatifs, situés entre les parties électromagnétiques actives du transducteur et le corps d'essai, pour accroitre le couplage d'un champ magnétique à haute fréquence entre les parties électromagnétiques actives du transducteur et la surface du corps d'essai conducteur parcourue par des courants de Foucault; et,
b. Du type spécifique dont les moyens de couplage électromagnétique sont constitués d'un noyau magnétique laminé, fait d'une matrice de feuilles minces laminées incorporant en interne soit un matériau ferromagnétique ou ferrimagnétique; et,
c. Du type spécifique dont les moyens de couplage électromagnétique sont équipés de moyens de refroidissement actifs, pour dissiper l'énergie thermique générée par des boucles de courant induit sur le pourtour des feuilles minces laminées de leurs moyens de couplage électromagnétique.

L'invention est de préférence mise en œuvre dans un équipement de type Laser-EMAT et/ou un équipement EMAT-EMAT, qui combine à la fois : un générateur d'ultrasons constitué d'un laser à impulsions de haute puissance ou un EMAT générant des ultrasons, et un récepteur EMAT à ultrasons.

L'utilisation préférée de l'invention est le scanning physique objectif 3D et le test non destructif à ultrasons UNDT, à haut débit de la surface et des discontinuités internes, dans une chaine de production de grandes structures, et/ou de structures épaisses, et/ou de composants fabriqués à partir d'un matériau conducteur, tels que des dalles d'acier lors de leur coulée, dans un environnement industriel à haute température supérieur à 1000°C.

L'invention peut être utilisée pour optimiser automatiquement le réglage des paramètres de la réduction dynamique (DNS) et/ou du refroidissement secondaire dynamique (DSC) d'un moulage en continu de dalles d'acier dans une aciérie, à une température supérieure à 1000°C.

### Technique antérieure

Les technologies EMAT sont utilisées pour le contrôle non destructif de structures faites d'un matériau conducteur, dans des conditions difficiles. Les technologies de contrôle non destructives (NDT) sont couramment utilisées dans les environnements industriels, pour la surveillance structurelle ou l'inspection des structures et des composants de différentes formes et tailles sans les endommager. Toutefois, les conditions d'exploitation et la température, le type de mise en œuvre, la taille et la complexité structurelle des composants testés en vue de leur inspection, limitent le nombre et les types des techniques de NDT disponibles qui peuvent être utilisées efficacement et leurs applications. Les données brutes fournies par les systèmes NDT de l'art antérieur ne conviennent pas à la détection sophistiquée et profonde des défauts et de leur emplacement 3D, dans de grands composants traités dans des conditions d'exploitation sévères et/ou extrêmement chaudes supérieures à 1000°C, comme celles rencontrées lors de la coulée continue de dalles d'acier dans les aciéries.

Le Contrôle Non-Destructif Ultrasonique (UNDT) est une famille de NDT basée sur la propagation d'ondes ultrasoniques dans l'objet ou le matériel testé. Dans les tests UNDT classiques, une sonde à ultrasons reliée à une machine de diagnostic est passée au-dessus de l'objet inspecté. Les méthodes UNDT classiques utilisent des faisceaux d'ondes mécaniques de courte longueur d'onde et de haute fréquence, transmis à partir d'une sonde générateur d'ultrasons à travers le matériau testé, et détectés par la même sonde ou une autre sonde récepteur d'ultrasons, ce pour identifier les défauts structurels du composant. Les principales sondes pour effectuer des essais de UNDT sont les transducteurs piézoélectriques, les transducteurs laser et les transducteurs électromagnétiques acoustiques (EMAT). Les tests classiques piézoélectriques UNDT offrent de nombreux avantages : la sécurité, la flexibilité et le coût. Toutefois, les tests piézoélectriques ont certaines limites, à savoir: la nécessité d'utiliser un couplant; et la nécessité d'avoir un bon état de surface. Ils nécessitent un contact mécanique entre les pièces testées et les sondes. Lors de l'essai de pièces chaudes, la difficulté de trouver un couplant approprié pour les tests piézoélectriques UNDT augmente avec la température. En général, les tests UNDT piézoélectriques ne peuvent pas être opérés au-dessus de 100°C.

L'aspect principal de l'art antérieur de l'invention concerne les transducteurs électromagnétiques acoustiques (EMAT). Parmi les technologies UNDT, la méthode EMAT est basée sur un mécanisme de couplage magnétique. Les ondes sonores sont générées dans le matériau, et non par contact avec la surface du matériau des pièces testées. Les EMATs offrent de forts avantages par rapport aux transducteurs piézoélectriques conventionnels. Un EMAT peut générer et recevoir différents modes d'onde dans des matériaux conducteurs et ferromagnétiques, sans contact physique ou couplant liquide avec les pièces testées. De telles fonctionnalités sans contact et sans couplant augmentent la fiabilité du test. Car les propriétés physiques du chemin de transmission ne changent pas. En outre, les spécifications requises de tolérance pour la position et la propulsion des pièces testées devant les sondes EMAT sont souples. Cela rend les EMATs classiques bien adaptés pour des applications industrielles impliquant une température moyenne d'inspection (jusqu'à 600°C), et de mauvaises conditions de surface des pièces testées en mouvement.

Il existe deux composantes principales dans un EMAT. L'un est un aimant, et l'autre est un une bobine électrique HF. L'aimant peut être un aimant permanent ou un électroaimant, qui produit un champ magnétique statique ou quasi-statique. La bobine électrique (ou circuit électrique) est parcourue par un courant HF. Elle émet ou est induite par un champ magnétique à haute fréquence. Le phénomène EMAT est réversible. Par conséquent, la même sonde EMAT peut être utilisée soit comme émetteur d'ultrasons dans un matériau inspecté, soit comme récepteur d'ultrasons d'un signal ultrasonique émis par un matériau inspecté, soit dans une combinaison des deux modes de fonctionnement. L'art antérieur utilise les EMATs dans un large éventail d'applications, y compris pour la mesure de l'épaisseur des produits métalliques, la détection des défauts de pipeline, la détection des défauts des rails, la détection des défauts dans les produits en acier, etc.

Il est connu par l'art antérieur d'attacher une plaque d'usure à un EMAT, pour protéger l'aimant et le circuit de bobine électrique de l'usure en raison du mouvement de l'EMAT en face du matériau inspecté. La plaque d'usure est généralement disposée entre le matériau inspecté et les composants actifs de l'EMAT, y compris l'aimant et le circuit de bobine électrique. Les plaques d'usure communes ont l'inconvénient d'introduire des trajectoires de réluctance plus élevées entre la partie magnétiquement active de l'EMAT et le matériau inspecté.

Le principal défi de la technologie EMAT commune est que les sondes EMAT souffrent d'une faible efficacité de transduction magnétique à la fois pour le champ magnétique statique généré par l'aimant(s) et pour le champ magnétique HF émis ou reçu. L'art antérieur sait qu'introduire un noyau magnétique, constitué d'un matériau à forte permittivité, de type ferromagnétique ou ferrimagnétique, entre un émetteur magnétique et un récepteur magnétique, peut augmenter l'intensité du champ magnétique induit par des centaines ou des milliers de fois. Le noyau magnétique crée lui-même un champ magnétique qui s'ajoute au champ émis. L'effet d'amplification de champ magnétique dépend de la permittivité magnétique du matériau du noyau magnétique. On sait également que l'interposition d'un noyau magnétique peut avoir des effets secondaires négatifs dans le cas d'un champ magnétique variable HF, liés aux courants de Foucault générés dans le noyau magnétique. Ceux-ci provoquent des pertes d'énergie importantes, qui dépendent de la fréquence du champ magnétique HF. Lorsque le noyau magnétique est constitué d'une seule pièce continue, le champ magnétique variable HF provoque de grands courants de Foucault, selon des boucles fermées de courant électriques parcourant l'intégralité de la section du noyau magnétique, déployées perpendiculairement au champ magnétique variable HF émis. Les courants de Foucault circulant à travers le noyau magnétique provoquent, par la résistance de son matériau, des pertes de puissance importante par effet Joule. C'est la raison pour laquelle l'art antérieur utilise fréquemment un noyau magnétique laminé matriciel, constitué d'un empilage de feuille minces actives, constituées d'un matériau magnétiquement actif, de type ferromagnétique ou ferrimagnétique, séparées par des feuilles minces passives isolantes. Les feuilles minces passives isolantes servent de barrières de courants de Foucault. De sorte que les courants de Foucault ne peuvent circuler que dans des boucles étroites, perpendiculaires au champ émis, dans l'épaisseur de chaque feuille mince magnétiquement active. Étant donné que le courant dans une boucle de Foucault est sensiblement proportionnel à l'aire de sa boucle, un noyau magnétique laminé matriciel selon l'art antérieur vise à réduire au maximum l'aire de toutes boucles de courant de Foucault, qui sont par nature perpendiculaires au champ magnétique HF émis.

Afin de surmonter la réluctance magnétique, il est connu par le document de l'art antérieur du brevet US 7,546,770 B2 d'inclure dans un EMAT un noyau magnétique laminé matriciel, constitué sous la forme d'une matrice en sandwich comprenant une multitude de feuilles minces laminées ferromagnétiques disposées en couches. Des feuilles minces isolantes sont interposées entre des feuilles minces ferromagnétiques, pour constituer la matrice sandwich du noyau magnétique laminé matriciel. L'EMAT est décrit spécifiquement et exclusivement dans une configuration selon laquelle la bobine électrique HF est configurée pour induire des courants de Foucault à la surface du matériau inspecté, et non pour en recevoir. Il convient donc de noter que cet art antérieur concerne et décrit une sonde configurée en tant qu'émetteur EMAT seulement, et non en tant que récepteur. Le noyau magnétique laminé est disposé entre l'aimant et le matériau inspecté. Il n'est pas disposé directement en face de la bobine électrique HF. L'intégralité de la surface extérieure du noyau magnétique laminé est recouverte d'une couche conductrice continue, faite d'un matériau électriquement conducteur. On sait qu'une bobine électrique ayant la forme d'une spire, et alimentée par un courant électrique, produit un faisceau de lignes de champ magnétique, constitué d'une multitude de boucles de champ magnétique sensiblement parallèles à l'axe de la spire circulaire, et passant par l'intérieur de la spire. L'intensité absolue de chaque boucle de champ magnétique est variable. Elle dépend de son point de passage et de sa distance du centre de de la spire. On sait également qu'une boucle de champ magnétique alternatif HF produit des courants de Foucault sur un matériau placé au voisinage de son centre, dont la direction est sensiblement perpendiculaire à la boucle de champ magnétique HF. Par conséquent, et bien que cela ne soit nullement décrit dans cet art antérieur, on comprend que lorsque cet EMAT fonctionne en mode émission HF, sa bobine électrique en spire génère en direction du noyau magnétique une multitude de boucles de champ magnétique alternatif HF, d'intensités absolues variables, passant par le centre de la spire. L'axe de la bobine électrique décrite est sensiblement parallèle au plan d'empilage des feuilles minces. Les boucles de champ magnétique alternatif HF sont donc sensiblement parallèles au plan d'empilage des feuilles minces de noyau magnétique laminé. Cela induit donc une multitude de boucles de courant induit, reparties uniquement sur la surface de la couche conductrice continue qui enveloppe intégralement le noyau magnétique laminé. Ces boucles de courant induit sont topologiquement réparties sur la surface de la couche conductrice de manière inhomogène, non organisée, continue et non discrète. Elles ont une intensité absolue variable inhomogène selon leur position sur la couche conductrice continue. Elles sont orientées sensiblement perpendiculairement au plan d'empilage des feuilles minces. Les boucles de courant induit à la surface de la couche conductrice sont donc sensiblement perpendiculaires aux feuilles minces laminées ferromagnétiques. De ce fait, aucune feuille mince laminée ferromagnétique n'est encerclée en sa périphérie par une boucle de courant induit. Les boucles de courant induit à la surface de la couche conductrice sont principalement parallèles à la surface de l'objet inspecté.

Le noyau magnétique laminé de cet art antérieur offre une protection mécanique de l'aimant et de la bobine électrique HF à haute fréquence. Il fournit également une transmission améliorée du flux magnétique statique de l'aimant vers le matériau inspecté. Ce noyau magnétique laminé fournit un couplage à haute fréquence, global, mais faible flou et topologiquement non homogène, du champ magnétique HF entre la bobine électrique HF et les courants de Foucault à la surface du matériau inspecté faisant face à la sonde et la bobine électrique HF. Le couplage de ce champ magnétique HF est fait globalement et de manière inhomogène, par la couche conductrice continue extérieure, et non pas sélectivement et/ou localement par chacune des feuilles minces laminées ferromagnétiques intérieures.

Selon cet art antérieur, la bobine électrique HF est disposée sur l'aimant, à une grande distance du noyau magnétique laminé et du matériau inspecté. Dans un tel arrangement de l'aimant, des pertes supplémentaires sont générées lors de la transmission de l'énergie électromagnétique HF entre la bobine électrique HF et le matériau inspecté. Cet arrangement du noyau magnétique laminé d'un EMAT minimise la fuite de flux du champ magnétique statique généré par l'aimant. Mais il dégrade la qualité du couplage du champ magnétique HF entre les courants de Foucault à la surface du matériau inspecté faisant face à la sonde et la bobine électrique HF de l'EMAT. Ce couplage magnétique HF est d'intensité inhomogène entre d'une part les différentes fractions actives locales du matériau faisant face à chacun des bords de chaque feuille mince laminée ferromagnétique et d'autre part la bobine électrique HF.

Selon cet art antérieur, le noyau magnétique laminé est thermodynamiquement passif. Il n'inclut aucun moyen de refroidissement actif qui puisse extraire activement une partie de l'énergie calorifique générée par les boucles de courant induit en surface du périmètre des feuilles minces laminées ferromagnétiques du noyau magnétique. Cet EMAT qui n'est pas activement protégé thermiquement, ne peut pas fonctionner durablement de manière fiable à des températures supérieures à 600°C.

Dans un EMAT traditionnel, une telle protection des parties actives est assurée par une plaque de protection électromagnétiquement passive constituée d'un matériau isolant, fixée du côté de travail du transducteur, distanciant ses parties actives du matériau inspecté. L'épaisseur de cette plaque de protection est le résultat d'un compromis entre la résistance mécanique, la température de fonctionnement requises, et l'efficacité de la transduction de l'EMAT.

L'art antérieur offre également des EMATs équipés de noyaux magnétique passif creux et non laminés. Ces noyaux magnétiques sont équipés ou non de moyens de refroidissement, pour une opération à haute température. Mais ces EMATs de l'art antérieur ne combinent pas un noyau magmatique laminé et des moyens de refroidissement internes à un tel noyau laminé, et ils n'optimisent pas et n'homogénéisent pas le couplage magnétique HF et/ou ne minimisent pas efficacement la fuite de flux du champ magnétique HF entre la bobine électrique HF et le matériau inspecté.

La réception de signaux ultrasoniques par un EMAT opérant en mode réception, fonctionne de la même manière qu'un EMAT opérant en mode émission. La direction de réception de l'EMAT opérant en mode réception peut être modifiée facilement et purement électroniquement. Cette directivité permet d'atteindre un rapport signal/bruit élevé d'un EMAT fonctionnant en mode réception.

Il y a eu une exploitation très limitée des EMATs de l'art antérieur, pour l'inspection dans un environnement industriel difficile et/ou dans des conditions de température élevée supérieures à 1000 °C, pour effectuer un scanning par balayage continu et mobile en ligne, de vastes zones de structures mobiles en forme de plaque à partir d'un seul endroit, d'une manière analogue à celle utilisée à basse température dans l'inspection des tuyaux et des rails.

Un deuxième aspect de l'art antérieur concerne la technologie Laser-EMAT UNDT, qui améliore la sensibilité globale des systèmes UNDT utilisant un EMAT, et leur adaptabilité à des températures moyennes allant jusqu'à 600°C. Le phénomène UNDT a besoin d'un générateur d'ultrasons et d'un récepteur d'ultrasons.

Un système Laser-EMAT commun combine à la fois un générateur d'ultrasons fait d'un laser à impulsions de haute puissance, et un EMAT fonctionnant en mode réception comme récepteur d'ultrasons. L'art antérieur décrit de tels dispositifs combinés UNDT pour la détection des discontinuités de surface et de sous-surface dans une structure. Ils sont basés sur l'exploitation conjointe de i) un émetteur ultrasonique fait d'un laser pulsé dirigeant un faisceau laser vers la structure en un point d'émission, et générant des ondes de surface ultrasoniques et des ondes de cisaillement dans la structure, lorsque le rayonnement du faisceau laser pulsé est absorbé par la structure; et ii) un récepteur ultrasonique fait d'un EMAT agissant en mode réception détectant les ondes de surface ultrasoniques et/ou les ondes de cisaillement à un point de détection. Lorsqu'un faisceau laser à forte densité d'énergie est tiré à la surface du matériau d'un composant testé, comme une dalle d'acier, l'impulsion locale provoque un chauffage rapide, ce qui conduit à l'explosion d'un plasma à la surface du composant. Une telle explosion génère des ondes ultrasoniques dans tout le matériau du composant. Le Laser génère dans le matériau deux types distincts d'ondes. L'une est propagée sur ou près de la surface du composant. Il s'agit du signal détectable le plus important, qui se propage transversalement à la surface du composant. L'autre est propagé profondément selon un grand angle dans la majeure partie du matériau du composant. Lorsque le matériau du composant est conducteur, le récepteur à ultrasons EMAT du système Laser-EMAT est utilisé pour détecter le signal ultrasonique généré dans le matériau testé, par la combinaison des effets de sa bobine électrique HF et de son aimant. Les vibrations à la surface et à l'intérieur du matériau, initiées par le signal ultrasonique produit par le Laser, et influencées par les échos des discontinuités du matériau et de leurs emplacements, induisent un courant électrique HF dans le circuit de détection du récepteur à ultrasons EMAT, via des courants de Foucault générés dans le matériau inspecté. Les discontinuités de surface et internes du composant situé entre l'impact laser et le récepteur à ultrasons EMAT peuvent ainsi être détectées et localisées par un traitement du signal du courant dans la bobine électrique HF, par l'identification des changements et des perturbations dans le signal ultrasonique reçu causés par les discontinuités dans le matériau inspecté.

Ces dispositifs UNDT combinés montrent une meilleure efficacité dans la détection des discontinuités que les dispositifs de type EMAT seul, basés sur des EMATs utilisés à la fois en mode émetteur et en mode récepteur. Parce que les lasers pulsés sont plus efficaces, directionnels et puissants en tant qu'émetteur de son ultrasonique, que les émetteurs classiques EMAT. Le principal inconvénient des systèmes Laser-EMAT communs est qu'ils conservent les limitations et les désavantages du récepteur EMAT commun qu'ils utilisent comme récepteur, comme indiqué ci-dessus. Le faisceau laser peut fonctionner à haute température au-dessus de 600°C. Mais les EMATs de l'art antérieur ne le peuvent pas.

Un troisième aspect de l'art antérieur de l'invention concerne le réglage automatique optimisé des paramètres de la réduction douce dynamique (« Dynamic Soft Reduction » DSR) d'un moulage continu de pièces d'acier à une température d'environ 1200°C, comme des dalles et/ou des billettes d'acier en cours de moulage, dans la production d'une aciérie. Les dalles d'acier sont habituellement ultérieurement transformées en produits finis en acier, qui incluent des tôles, des plaques, des rouleaux de métal en bande, des tuyaux, et des tubes.

Pendant la solidification de la coulée d'acier, entre la phase solide et la phase liquide du métal, il y a une région à l'intérieur de la dalle qui n'est ni complètement solide ni liquide. La fraction (pourcentage) de solide dans cette région « molle » dépend des propriétés thermiques et de la composition de l'acier. Le volume d'acier transformé du liquide en solide se rétracte en raison du changement de densité lié à l'abaissement de température de la coulée. Cette rétractation pendant la solidification conduit à des vides dans la structure inter-dendritique. Au cratère de la région de solidification finale, une zone de ségrégation centrale se produit. Les défauts de ségrégation interne, et la porosité au centre de la structure des dalles, pendant le processus de coulée continue en acier des dalles, ont un effet extrêmement négatif sur les propriétés des produits en acier finis élaborés ultérieurement à partir de la dalle. Cette ségrégation centrale dégrade la qualité des produits en acier, en particulier les plaques d'acier épaisses. Il donne lieu à des propriétés mécaniques incohérentes et à une défaillance potentielle des produits finaux en acier.

Il y a eu beaucoup de tentatives de l'art antérieur pour rechercher à réduire ou détoxifier la ségrégation centrale des dalles d'acier de ces défauts encourus pendant la coulée continue. Une pratique générale pour surmonter ce problème est de réduire la vitesse de coulée. Évidemment, cela affecte le débit global de la coulée. Une autre pratique de l'art antérieur consiste à appliquer une réduction douce (« Soft Reduction » SR) au cours de la dernière étape de la solidification, et/ou un refroidissement secondaire dynamique (DSC). L'idée de base de toute sorte de réduction douce (SR) est de supprimer la formation de la macro-ségrégation centrale et de la porosité, en compensant le rétrécissement de solidification et en interrompant le flux d'aspiration de l'acier résiduel. L'opération SR doit être effectuée selon une intensité de réduction approprié, et à la verticale de la zone molle appropriée de l'étape finale de solidification, ce en utilisant des rouleaux de pincement ou d'autres équipements spécialisés similaires. La SR ne peut être effectuée que là où le centre de la dalle n'est pas est encore raide. Le point optimal est la fin de la zone de solidification. Les intervalles de réduction doivent être situés entre la zone solide-liquide en deux phases et l'extrémité de solidification de la dalle de coulée; ce afin d'améliorer la densité et l'homogénéité du centre de la dalle. Le problème est que la position exacte de ce point optimal de fin de d'achèvement de la solidification est variable et inconnue, car située au centre de la dalle d'acier et donc invisible selon les moyens techniques de l'art antérieur.

Dans la « méthode de réduction légère en fin de solidification » (LSR), une pluralité de rouleaux de réduction sont disposés à plusieurs intervalles de réduction près de la position d'achèvement de la solidification de la dalle, et de la zone de réduction de la dalle lors de la coulée continue, estimées approximativement. La LSR est une méthode de réduction progressive de la génération des vides au centre de la dalle et du flux d'acier mou fondu. La réduction douce statique (SSR), fournie par l'ajustement de l'écartement de rouleaux de pincement fixe, a été employée par l'art antérieur pour améliorer la qualité interne des dalles d'acier en coulée continue. Toutefois, l'emplacement des rouleaux de pincement à intervalles de réduction fixes n'est optimisé et n'est applicable que pour un ensemble précis de paramètres de coulée. Cela signifie que l'opération de coulée doit être maintenue aussi stable que possible. La zone fixe de réduction SSR impose une restriction à l'opération globale de coulée. Les événements opérationnels font qu'il est difficile de maintenir un état stable des paramètres de coulée pendant de longues périodes. Les paramètres de coulée tels que la vitesse de coulée et le super-chauffage peuvent changer pendant le processus de coulée. Par conséquent, la plage de solidification se déplace au cours du processus. L'efficacité opérationnelle de la méthode SSR est faible.

Pour avoir une plus grande flexibilité opérationnelle, tout en maintenant une bonne qualité interne, l'art antérieur a proposé un système de réduction dynamique douce (DSR), qui prend en compte les conditions de coulée transitoires, les processus évolutifs de solidification et le comportement du matériau inspecté. La DSR combinée ou non à un refroidissement dynamique secondaire (DSC), s'est avéré être un moyen plus efficace que la SSR pour minimiser la ségrégation et la porosité des dalles d'acier coulées. Les paramètres de la DSR doivent être soigneusement définis afin d'éliminer efficacement la ségrégation du centre et d'améliorer la qualité interne de la dalle coulée. Il est important d'appliquer la réduction douce au bon endroit et avec un espacement et un écartement précis des rouleaux de pincement pendant la phase de solidification. Si la DSR a lieu trop tôt, la réduction déforme simplement les faces extérieures de la dalle et ne pénètre pas efficacement au centre. Appliqué trop tard, la dalle est déjà entièrement solide, et la résistance à la déformation est trop élevée, ce qui entraîne des charges trop élevées sur les rouleaux de l'équipement. Les principaux paramètres influençant la réduction, qui déterminent l'efficacité de la position de réduction dynamique douce DSR, sont le format de la dalle, la vitesse de coulée, l'analyse de l'acier (propriétés thermiques), le surchauffage et le taux de refroidissement. Pour réaliser une réduction dynamique douce DSR efficace, il est nécessaire de contrôler dynamiquement l'espacement des rouleaux de pincement, et préférentiellement leur position, selon l'état géométrique réel variable du processus de solidification interne, compte tenu des conditions actuelles et historiques de la coulée.

La mise à disposition précise dans le temps : i) d'une cartographie 3D dynamique (3DM) de la dalle en cours de fonte, et/ou ii) de l'emplacement 3D de la zone de ségrégation centrale des dalles d'acier et/ou de la position des défauts de ségrégation; procurée par un système dynamique de cartographie 3D (3DMS) de la coulée, sont les exigences de base pour la mise en œuvre d'une réduction dynamique douce DSR et/ou d'un refroidissement dynamique secondaire DSC efficaces.

Les systèmes DSR/DSC de l'art antérieur comprennent généralement les moyens suivants :
a. un système dynamique de cartographie 3D (3DMS) de la coulée d'acier;
b. un système d'optimisation de DSR (DSRM) informatisé, générant des paramètres d'optimisation dynamique de DSR (PCSD) basés sur la cartographie 3D dynamique (3DM) fournie par le système 3DMS et sur les paramètres de coulée;
c. un activateur numérique de DSR (ASR), ajustant dynamiquement les paramètres d'action de DSR (PASD), en fonction des PCSD générés par le DSRM;
d. éventuellement, un système d'optimisation de DSC (DSCM), générant des paramètres d'optimisation dynamique de DSC (PCSC) basés sur la cartographie 3D dynamique (3DM) fournie par le système 3DMS et les sur paramètres de coulée;
e. éventuellement, un activateur numérique de DSC (ASC), ajustant dynamiquement les paramètres d'action de DSC (PASC) du débit d'eau de la DSC, en fonction des PCSC générés par le DSCM.

Les trois paramètres importants de la réduction DSR, tels que la position et la géométrie de la zone de réduction, la dynamique et le taux de réduction, la valeur de l'espacement des rouleaux dans la section de réduction, doivent être pris en compte de manière exhaustive dans l'algorithme du modèle informatisé d'optimisation DSRM.

Les systèmes dynamiques de cartographie 3D 3DMS de coulée d'acier de l'art antérieur, fonctionnent uniquement par simulation. Ils effectuent :
a. une prédiction simulée numérique fondée sur des algorithmes théoriques; et basée sur un modèle mathématique de transfert de chaleur et de solidification dans la dalle coulée; et,
b. non pas par une détection physique d'une cartographie 3D dynamique (3DM) réelle observée de l'intérieur de la dalle coulée d'acier, de l'emplacement de la zone molle centrale, et de la position des discontinuités au milieu de la dalle coulée.

Une variante récente d'un système dynamique de cartographie 3D de coulée d'acier 3DMS de l'art antérieur, est basée notamment sur une interprétation algorithmique des données d'un système de suivi thermique 2D de l'extérieur de la dalle coulée.

Aucun des systèmes dynamiques de cartographie 3D (3DMS) de coulée d'acier de l'art antérieur n'offre une définition précise et fiable observée de la cartographie 3D des discontinuités dans la zone de réduction/solidification de la dalle en cours de coulée, et/ou de l'emplacement de la zone médiane molle de la dalle et/ou des défauts de ségrégation. Les paramètres de la réduction douce DSR, tels que la position et la géométrie de la zone de réduction, la dynamique et le taux de réduction, la valeur de l'espacement des rouleaux dans la section de réduction, sont ajustés par l'art antérieur sur la base d'une information prédite sur la base d'un modèle théorique, mais non observée, et souvent trompeuse, de la zone molle centrale et de l'état des discontinuités à l'intérieur de la dalle coulée. Ainsi, les paramètres DSR et/ou DSC sont souvent ajustés de manière inappropriée et inefficace dans une machine de coulée d'acier en continu. Ils ne parviennent pas à ajuster efficacement, par une réduction dynamique douce et/ou un refroidissement dynamique secondaire réglés de manière adéquate, la ségrégation et la porosité excessives du centre des dalles coulées pendant le processus de solidification.

### Problème technique

Il ressort de l'analyse de l'art antérieur ci-dessus qu'une autre approche est nécessaire pour résoudre entre autres le problème technique du Contrôle Non-Destructif Ultrasonique (UNDT) suivants:
a. Offrir dans une seule sonde EMAT une solution combinée aux trois problèmes techniques suivants :
   i. accroître la transmission de l'énergie du champ magnétique HF, maximiser le couplage magnétique HF et/ou minimiser les fuites de flux du champ magnétique HF, entre la bobine électrique et les courant de Foucault générés à la surface du matériau inspecté; et,
   ii. fournir une homogénéité topologique de surface de l'efficacité de ce couplage électromagnétique à haute fréquence, entre la bobine électrique et les courants de Foucault à la surface du matériau inspecté faisant face à la sonde; et,
   iii. avoir une capacité de fonctionnement à des températures élevées du matériau inspecté supérieures à 1000°C.
b. Offrir dans un seul dispositif UNDT une solution combinée aux deux problèmes techniques suivants :
   i. optimiser la résolution de la détection des discontinuités de surface et profondes de sous-surface dans une structure métallique épaisse; et,
   ii. avoir une capacité de fonctionnement à des températures élevées du matériau inspecté supérieures à 1000°C.
c. Offrir un scanner 3D de structures conductrices, donnant une solution combinée aux deux problèmes techniques suivants:
   i. fournir un scanning 3D continu par ligne de grandes structures mobiles conductrices épaisses, telles que des dalles métallurgiques, à partir d'un seul emplacement, en générant une cartographie 3D observée à haute résolution de cette structure, y compris en fournissant la localisation des discontinuités de surface et profondes de sous-surface ; et,
   ii. avoir capacité d'exploitation de fonctionnement dans un environnement industriel difficile, à des températures élevées du matériau inspecté supérieures à 1000°C.
d. Permettre un réglage automatique optimisé des paramètres d'action de DSR (PASD) de la réduction dynamique douce (DSR) et/ou des paramètres d'action de DSC (PASC) du refroidissement dynamique secondaire (DSC) d'une coulée en continu de dalles d'acier dans une aciérie, basé sur l'état observé de l'intérieur de la dalle coulée; en résolvant dans un seul appareil la combinaison des quatre problèmes techniques suivants:
   i. fournir de manière continue une cartographie 3D dynamique (3DM) observée de l'intérieur de dalle coulée ;
   ii. définir continument de manière observée en 3D l'emplacement de la zone de molle centrale en fusion de la dalle et/ou des défauts de ségrégation, basée sur une observation physique en 3D, et non simplement fournie par une prédiction de simulation numérique par un algorithme théorique basés sur un modèle mathématique ;
   iii. détecter précisément, la position observée du point de réduction des dalles coulée, basée sur une observation physique en 3D;
   iv. améliorer la précision et la fiabilité du réglage automatique des paramètres de la réduction dynamique douce (DNS) et/ou du refroidissement secondaire dynamique (DSC), d'un moulage continu des dalles, à des températures supérieures à 1000°C; afin de réduire les défauts de ségrégation et la porosité dans la zone de molle centrale en fusion de la structure des dalles d'aciers pendant le processus de coulée continue dans une aciérie.

### Solution technique

En bref, conformément à un aspect de l'invention, un Transducteur Électromagnétique Acoustique (EMAT) pour la détection des discontinuités de surface et internes dans un matériau inspecté électriquement conducteur est fourni; ce afin d'offrir une solution technique au problème technique ci-dessus (a). De manière contrintuitives pour l'Homme de Métier, et contrairement à la configuration classique des EMATs de l'art antérieur mettant en œuvre un noyau magnétique laminé, la solution technique de l'invention consiste notamment en ce que:
a. On ne cherche pas à réduire l'aire des boucles courants de Foucault à l'intérieur des plaquettes actives HF du noyau magnétique laminé. Au contraire, l'invention cherche à accroitre l'aire et l'effet des boucles de courant induit dans les plaquettes actives HF (ferromagnétiques); mais ceci dans une configuration et une orientation topologiquement organisée de manière adéquate, pour en tirer parti afin d'améliorer l'efficacité et l'homogénéité du couplage, ainsi que les performances de l'EMAT.
b. On ne configure pas l'EMAT en sorte qu'en mode émission : i) les boucles de champ magnétique alternatif HF induites par la bobine électrique HF dans le dans le noyau magnétique soient sensiblement parallèles au plan d'empilage des feuilles minces de noyau magnétique laminé ; et ii) une multitude de boucles de courant induit soient reparties uniquement sur la surface d'une couche conductrice continue qui enveloppe intégralement le noyau magnétique laminé , et iii) les boucles de courant induit soient topologiquement réparties sur toute la surface de la couche conductrice de manière inhomogène, non organisée, continue et non discrète, et iv) ces boucles de courant induit soient orientées sensiblement perpendiculairement au plan d'empilage des feuilles minces. Mais au contraire, selon l'invention, on configure l'EMAT en sorte qu'en mode émission : i) les boucles de champ magnétique alternatif HF induites par la bobine électrique HF dans le dans le noyau magnétique soient sensiblement perpendiculaires au plan d'empilage des feuilles minces de noyau magnétique laminé; et ii) les boucles de courants de induit soient positionnées uniquement sur le pourtour des plaquettes actives HF, et soient orientées dans un plan parallèle au plan des plaquettes actives HF qu'elles encerclent sur leurs périphéries, et qu'elles soient donc perpendiculaires à la surface de l'objet inspecté ;et iii) les boucles de courant induit soient topologiquement réparties de manière discrète et distante, mais homogène chacune sur le pourtour des plaquettes actives HF ; et iv) ces boucles de courant induit soient ainsi orientées sensiblement parallèlement au plan d'empilage des feuilles minces.
c. On ne configure pas l'EMAT en sorte que les plaquettes actives HF soient constituées d'une feuille pleine. Mais au contraire, selon l'invention, on perce les plaquettes actives HF en leurs centres, par un trou via, autour duquel tourne, perpendiculairement à son axe, une boucle de courant induit sur le pourtour de chaque plaquettes actives HF.
d. On ne configure pas l'EMAT avec une bobine électrique HF à circuit en spire, distante du noyau magnétique laminé, et séparée du noyau magnétique par un aimant, émettant en mode émission un flux de champ magnétique variable HF d'intensité absolue inhomogène sur une couche conductrice continue entourant toutes les plaquette actives HF du noyau magnétique. Mais au contraire, selon l'invention, on configure l'EMAT avec une bobine électrique HF à circuit en méandre, composée d'une succession de portions parallèles de conducteurs électriques. On ne recouvre pas le noyau magnétique par une couche conductrice continue. Chaque portion de conducteur électrique est parcourue par un courant électrique d'intensité absolue similaire mais de direction opposée à la portion de conducteur électrique voisin. Les portions de conducteur électrique sont alternativement superposées directement en regard et sur le bord supérieur de chaque plaquette actives HF du noyau magnétique laminé. En mode émission, la bobine électrique HF émet ainsi un flux de champ magnétique variable HF d'intensité équivalente dans chaque plaquette actives HF, et qui leur est sensiblement perpendiculaire.
e. Selon l'invention, en mode émission, les plaquette actives HF voisines sont entourées par des boucles de courant induit tournant en sens opposé. On induit ainsi, dans les portions successives de zones frontales de la surface du matériau faisant face à chacune des plaquettes actives HF du noyau magnétique laminé, un flux de champ magnétique variable HF, de directions opposées pour chaque plaquette actives HF, mais d'intensité absolue quasi-égale dans chaque zone frontale faisant face à une plaquette active HF voisine. On induit ainsi à la surface du matériau inspecté, faisant face au noyau magnétique laminé, une matrice de courants de Foucault formée de vecteurs parallèles, d'intensités sensiblement égales, mais de sens opposés. Cette configuration topologique élaborée conduit à une plus grande résolution de l'EMAT.

### Résumé de l'invention

L'EMAT comprend :
a. Au moins un Aimant ou un électro-aimant, configuré pour générer un Champ Magnétique Statique ou quasi statique dans le Matériau Inspecté;
b. Au moins une Bobine Électrique HF (ou circuit électrique) à haute fréquence, celle-ci étant soit configurée comme un Émetteur Électromagnétique HF d'un Champ Électromagnétique Émis HF si l'EMAT est utilisé en Mode Émission, et/ou, soit configuré comme Récepteur Électromagnétique HF d'un Champ Électromagnétique HF si l'EMAT est utilisé en Mode Réception;
c. Au moins un Noyau Magnétique Laminé Matriciel Perforé, configuré pour concentrer et diriger un Champ Électromagnétique Émis HF; du type comprenant une Matrice (en sandwich) constituée d'une multitude de Feuilles Minces laminées, empilés périodiquement le long de l'Axe De Matrice.

La Matrice en sandwich comprend une Première Multitude de Plaquettes Actives HF. Elles sont isolées les unes des autres. Elles incorporent intérieurement un Matériau Magnétique à forte perméabilité magnétique. Chaque Plaquette Active HF intègre extérieurement un matériau électriquement conducteur; et/ou est recouverte à l'extérieur d'une couche électriquement conductrice sur ses Bords Périphériques. Une Ouverture Cylindrique Rainurée passe à travers chaque Feuille Mince de la Matrice, et débouche sur chacune des deux Faces De Matrice latérales. Une multitude de Trous Via Magnétiques, de dimensions et de section similaires, et à périmètre latéral fermé, sont perforés à travers et sensiblement au centre de chacune des multiples Plaquettes Actives HF de la Matrice. Ils sont alignés pour former par leur alignement l'Ouverture Cylindrique Rainurée. Une multitude de Boucles De Courant Induit, sont générées dans les Plaquette Active HF.

La particularité de cet EMAT réside dans la combinaison de moyens techniques suivants. Chaque Trous Via Magnétique, pratiqué dans chaque Plaquettes Actives HF creuse, est situé entre la Première Face De Bordure faisant face à la Surface Inspectée, et la Seconde Face De Bordure faisant face à la Bobine Électrique. Chaque Trou Via Magnétique de l' Ouverture Cylindrique Rainurée est intérieurement libre de tout matériau dur; et est libre de tout conducteur électrique passant au travers. Lorsque l'EMAT est en fonctionnement, les Boucles De Courant Induit sont induites à l'intérieur de la Peau de Plaquette Active sur les Bords Périphériques de Plaquettes Actives HF, et sont sensiblement parallèles, et séparées les unes des autres. Elles encerclent les Trous Via Magnétique de leur Plaquette Active HF, et tournent autour.

Dans une variante de réalisation de l'invention, une Sonde Laser-EMAT (LEMAT), pour inspecter un Matériau Inspecté, en recevant un signal ultrasonique émis de ce Matériau Inspecté, est présentée; afin d'offrir une solution technique au problème technique ci-dessus (b).

Ce LEMAT comprend:
a. Un EMAT selon l'invention, tel qu'exposé ci-dessus, configuré en Mode Réception, pour recevoir un signal ultrasonore provenant du Matériau Inspecté; et
b. Une Source Laser configurée pour tirer un Faisceau Laser à haute énergie à un Point De Tir de la surface du Matériau Inspecté.

La Source Laser génère des ondes ultrasoniques produisant des Ondes Ultrasonores Primaires, se propageant sur la surface et/ou à l'intérieur et en profondeur du Matériau Inspecté. Cela génère des Ondes Ultrasonores Secondaires résultant des échos des interactions avec les discontinuités situées sur et/ou à l'intérieur du Matériel Inspecté et dépendant de leurs emplacements, se propageant sur la surface et/ou à l'intérieur du Matériau Inspecté. Cela génère des Courants de Foucault Du Matériau sur le Matériau Inspecté, induits par les Ondes Ultrasonores Secondaires, sous l'influence du Champ Magnétique Statique généré par l'Aimant de l'EMAT. Ceci induit à son tour un Champ Électromagnétique Émis HF, émis par les Courants de Foucault Du Matériau dans le Matériau Inspecté, qui est représentatif de la topographie de la surface et des Discontinuités internes du Matériau Inspecté.

Dans un autre mode de réalisation de l'invention, un Scanner 3D Multi Laser-EMAT (MLEMAT) est présenté pour la détection des Discontinuités sur et à l'intérieur d'une Structure Conductrice cylindrique mobile; afin d'offrir une solution technique au problème technique ci-dessus (c).

Le MLMAT comprend:
a. Une Structure Conductrice à numériser en 3D;
b. Un Cadre Châssis configuré pour entourer la Structure Conductrice;
c. Une multitude de sondes de Sondes Laser-EMAT (LEMAT) selon l'invention, comme indiqué ci-dessus, fixées sur le Cadre Châssis, positionnées et configurées de telle sorte que, chacune des Premières Faces De Bordure actives de chacun de leurs Noyaux Magnétique Laminé Matriciel Perforé, soit face à la Structure Conductrice; et,
d. Des Moyens De Déplacement configurés pour déplacer linéairement la Structure Conductrice cylindrique par rapport au Cadre Châssis.

La particularité de ce MLEMAT réside dans le fait que la Boucle d'Ouvertures, faite de la ligne virtuelle reliant les centres de chaque Ouverture Cylindrique Rainurée successive de chaque Noyau Magnétique Laminé Matriciel Perforé de chacun des EMATs adjacents du MLEMAT, encercle la Structure Conductrice.

Dans un autre mode de réalisation de l'invention, une adaptation du Scanner 3D Multi Laser-EMAT (MLEMAT) selon l'invention, comme indiqué ci-dessus, est présenté pour le réglage automatique de la Réduction Dynamique Douce (DSR) d'une coulée continue de dalles d'acier, à une température de coulée supérieure à 1000 ° C; et offre une solution technique au problème technique ci-dessus (d).

La dalle d'acier est poussée de manière continue continu à travers un Système Dynamique De Réduction Douce (DSRD), pour supprimer la formation d'une macro-ségrégation et de porosités dans la Zone Molle Centrale à l'intérieur de la Dalle d'Acier, en compensant dynamiquement le retrait de solidification et en interrompant le flux d'aspiration du métal fondu résiduel dans la Dalle d'Acier. Les Bobines Électriques de chaque EMAT de chaque Laser-EMAT du MLEMAT sont connectées à un Système Dynamique De Cartographie 3D De Coulée (3DMS). Ce 3DMS comporte des Moyens De Traitement Analogique Et Numérique (MDAN) configurés pour combiner et traiter les Courants Électriques Ultrasoniques Secondaires émis dans les Bobines Électriques de chaque Laser-EMAT du MLEMAT, qui sont induits dans chaque Bobine Électrique de ce Laser-EMAT par les Courants de Foucault Du Matériau dans la Zone Frontale du Matériau Inspecté de la Dalle D'acier. Ces Courants de Foucault Du Matériau résultent des interactions d'échos générées par les Sources Laser avec les Discontinuités sur et à l'intérieur du Matériau Inspecté dans la Zone Frontale de la Première Face De Bordure de ce Laser-EMAT. Les MDANs combinent les Courants Électriques Ultrasoniques Secondaires de chaque EMAT et génèrent une Cartographie 3D Dynamique (3DM) de la Dalle d'Acier coulée, dans la Section De Structure de la dalle du Plan De Cadre, sur la base de la combinaison et de l'analyse numérique de ces multiples Courants Électriques Ultrasoniques Secondaires dans chaque Laser-EMAT du MLEMAT. Un Système d'Optimisation De DSR (DSRM) de la DSR de la coulée, est connecté au 3DMS. Il reçoit la 3DM de la Dalle d'Acier et génère numériquement un ensemble de Paramètres D'optimisation Dynamique De DSR (PCSD). Un Activateur Numérique De DSR (ASR) est connecté au DSRM. Il ajuste dynamiquement les Paramètres d'Action De DSR (PASD), en fonction des PCSD générés par le DSRM.

La particularité de ce MLEMAT réside dans la combinaison suivante de moyens techniques. Les Moyens De Refroidissement de chacun de ses EMATs selon l'invention génèrent un Flux Calorifique d'un Fluide Calorifique de refroidissement. Il est poussé à l'intérieur de chaque Trou Via Magnétique et de chaque Trou Via Entretoise de l' Ouverture Cylindrique Rainurée de chaque Noyau Magnétique Laminé Matriciel Perforé de chaque EMAT adjacent du MLEMAT; ce à une Température De Refroidissement (TF) nettement inférieure (d'au moins 50°C) à la Température de Curie (TC) du Matériau Magnétique des Plaquettes Actives HF évidées. Ainsi la Réduction Dynamique Douce (DSR) et/ou le Refroidissement Dynamique Secondaire (DSC) sont automatiquement réglés dynamiquement, à une température de coulée supérieure à 1000 ° C.

### Brève description des dessins

Ces caractéristiques, aspects et avantages de la présente invention, ainsi que d'autres, seront mieux compris lorsque la description détaillée suivante sera lue en référence aux dessins annexés, dans lesquels des caractères similaires représentent des parties identiques sur l'ensemble des dessins, dans lesquels:
La figure 1 [Fig. 1] est une représentation schématique en perspective d'un transducteur EMAT de l'invention.
La figure 2 [Fig. 2] est une représentation schématique en coupe d'un transducteur EMAT de l'invention.
La figure 3 [Fig. 3] est une perspective schématique montrant le mode de fonctionnement d'une des Plaquettes Actives HF dans le Noyau Magnétique Laminé Matriciel Perforé d'un transducteur EMAT de l'invention, utilisé en Mode Émission.
La figure 4 [Fig. 4] est une perspective schématique montrant le mode de fonctionnement d'une des Plaquettes Actives HF dans le Noyau Magnétique Laminé Matriciel Perforé d'un transducteur EMAT de l'invention, utilisé en Mode Réception.
La figure 5 [Fig. 5] est une perspective schématique montrant le Noyau Magnétique Laminé Matriciel Perforé d'un transducteur EMAT de l'invention, constitué de l'empilage de ses Plaquettes Actives HF et de ses Plaquettes Passives.
La figure 6 [Fig. 6] est vue schématique partielle en perspective du fonctionnement électromagnétique des Plaquettes Actives HF du Noyau Magnétique Laminé Matriciel Perforé d'un transducteur EMAT de l'invention, utilisé en Mode Émission.
La figure 7 [Fig. 7] est une perspective schématique d'une variante de réalisation de certaines des Feuilles Minces du Noyau Magnétique Laminé Matriciel Perforé d'un transducteur EMAT de l'invention, pour soulever dynamiquement son Noyau Magnétique Laminé Matriciel Perforé hors du Matériau Inspecté.
La figure 8 [Fig. 8] est une vue schématique en section d'une sonde Laser-EMAT (LEMAT) selon l'invention.
La figure 9 [Fig. 9] est une schématique vue de côté d'un scanner 3D Multi Laser-EMAT(MLEMAT) selon l'invention.
La figure 10 [Fig. 10] est une perspective schématique en section d'un Scanner 3D Multi Laser-EMAT (MLEMAT) selon l'invention, pour le Réglage automatique de la Réduction Dynamique Douce (DSR) et/ou du Refroidissement Dynamique Secondaire (DSC) d'une coulée continue de Dalles d'Acier en fusion, réalisée au niveau de ses sondes EMAT.
La figure 11 [Fig. 11] est une perspective schématique en section d'un Scanner 3D Multi Laser-EMAT (MLEMAT) selon l'invention, pour le réglage automatique de la Réduction Dynamique Douce (DSR) et/ou du Refroidissement Dynamique Secondaire (DSC) d'une coulée continue de Dalles d'Acier en fusion, réalisée au niveau de ses sources Laser.
La figure 12 [Fig. 12] est un schéma fonctionnel d'un Scanner 3D Multi Laser-EMAT (MLEMAT) selon l'invention, pour le réglage automatique de la Réduction Dynamique Douce (DSR) et/ou du Refroidissement Dynamique Secondaire (DSC) d'une coulée continue de Dalles d'Acier en fusion.

### Description des modes de réalisation

Les modes de réalisation décrits ci-dessous sont généralement dirigés vers un système EMAT (1) amélioré, qui peut être utilisé pour le Contrôle Non Destructif (NDT) d'une Structure Conductrice (90) à une température supérieure à 1000 ° C.

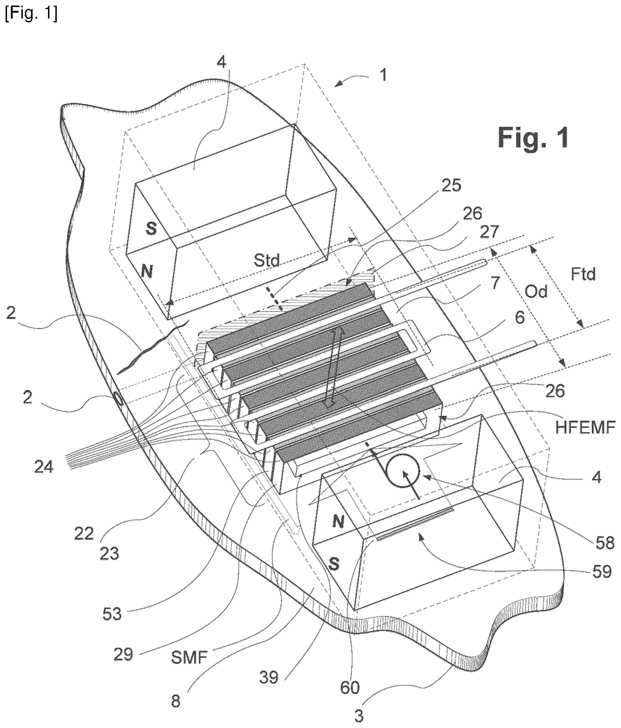

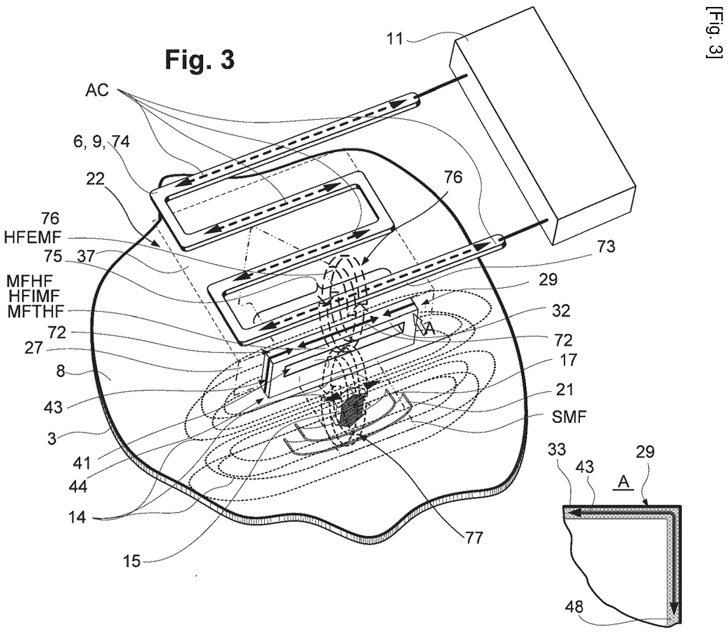

Se référant à la figure [Fig. 1], et à la figure [Fig.3] nous voyons un Transducteur Électromagnétique Acoustique (EMAT) (1) pour la détection de Discontinuités (2) de surface et internes dans un Matériau Inspecté (3) électriquement conducteur. Deux Aimants (4) sont configurés pour générer un Champ Magnétique Statique (SMF) ou quasi statique dans le Matériau Inspecté (3). On comprend que chaque Aimant (4) pourrait être remplacé par un électro-aimant. Une Bobine Électrique HF (6) (ou circuit électrique) est placée directement au-dessus d'un Noyau Magnétique Laminé Matriciel Perforé (22). Son Plan De Bobinage (7) (ou plan de circuit) est parallèle à la Surface Inspectée (8) locale du Matériau Inspecté (3) faisant face à l'EMAT (1). Les deux Aimants (4) sont positionnés de chaque côté du Noyau Magnétique Laminé Matriciel Perforé (22).

Se référant à la figure [Fig.3], nous constatons que l'EMAT (1) peut être utilisé en Mode Émission (EM). La Bobine Électrique HF (6) est configurée comme un Émetteur Électromagnétique HF (9) d'un Champ Électromagnétique Émis HF (HFEMF). Elle est connectée à la sortie d'au moins une Source De Courant Alternatif (11), entraînant dans la Bobine Électrique HF (6) un Courant Alternatif HF (AC) à fréquence ultrasonique. Ceci induit un Champ Électromagnétique Émis HF (HFEMF) en direction du Matériau Inspecté (3). Le Champ Électromagnétique Émis HF (HFEMF) produit des Courant de Foucault Du Matériau (14) sur la surface du Matériau Inspecté (3). Ceci génère des Forces de Lorentz (15) à fréquence ultrasonique dans le Matériau Inspecté (3), par l'interaction des Courant de Foucault Du Matériau (14) avec le Champ Magnétique Statique (SMF). Cela peut également générer une Magnétostriction si le Matériau Inspecté (3) est ferrimagnétique. La perturbation des Forces de Lorentz (15) génère des Ondes Ultrasonores Primaires (17) directement dans le Matériau Inspecté (3).

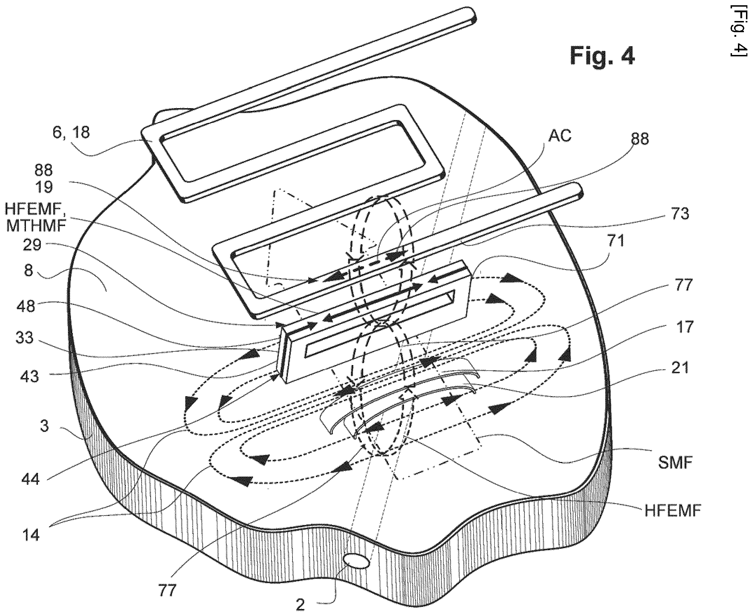

Se référant à la figure [Fig.4], on comprend que l'EMAT (1) peut également être utilisé en Mode Réception (RM). La Bobine Électrique HF (6) est alors configurée comme un Récepteur Électromagnétique HF (18). Elle est parcourue par un Courant Électrique Ultrasonique Secondaire (19) à fréquence ultrasonique. Ce courant HF est constitué de Signaux Électrique Ultrasonique Secondaire (88) générés par un Champ Électromagnétique Émis HF (HFEMF) induit par des Courants de Foucault Du Matériau (14). Ces Courants de Foucault Du Matériau (14) sont produits sur la Surface Inspectée (8) du Matériau Inspecté (3) par des par des Ondes Ultrasonores Secondaires (21), sous l'influence d'une source ultrasonique extérieure, en interaction avec le Champ Magnétique Statique (SMF). Ces Courants de Foucault Du Matériau (14) sont représentatifs des Discontinuités (2) de surface et internes du Matériau Inspecté (3).

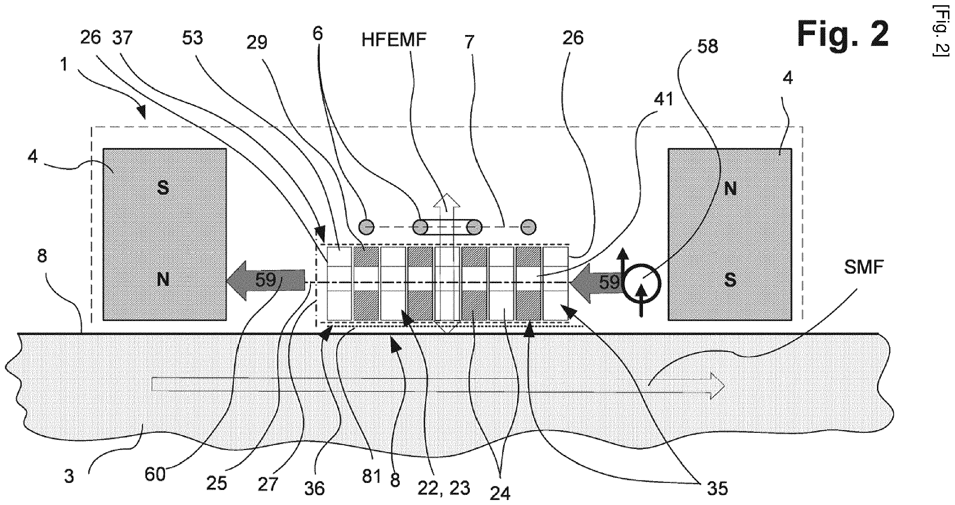

En se référant à nouveau à la figure [Fig. 1] et à la figure [Fig. 2], nous voyons qu'un Noyau Magnétique Laminé Matriciel Perforé (22) est positionné entre la Surface Inspectée (8) du Matériau Inspecté (3) et la Bobine Électrique HF (6), qui lui fait directement face. Le Noyau Magnétique Laminé Matriciel Perforé (22) est configuré pour concentrer et diriger le Champ Électromagnétique HF Émis (HFEMF) dans la direction et/ou en provenance du Matériau Inspecté (3), selon que le mode d'utilisation de l'EMAT (1) est en émission ou en réception. Il est du type comprenant une Matrice (23) en sandwich constituée d'une multitude de Feuilles Minces (24) laminées. Elles sont empilées périodiquement le long de l' Axe De Matrice (25), entre les deux Faces De Matrice (26) principales la Matrice (23), parallèlement à son Plan D'Empilage (27). Le Noyau Magnétique Laminé Matriciel Perforé (22) présente de multiples Faces De Bordure (35) latérales rainurées adjacentes, s'étendant sensiblement perpendiculairement au Plan D'Empilage (27) et parallèles à l'Axe De Matrice (25).

En se référant à la figure [Fig. 2], nous voyons que l'une des Faces De Bordure (35), la Première Face De Bordure (36) de la Matrice (23), fait face à la Surface Inspectée (8) du Matériau Inspecté (3). L'autre, la Seconde Face De Bordure (37) de la Matrice (23) est située sensiblement à l'opposé à la Première Face De Bordure (36), et fait face à la Bobine Électrique HF (6).

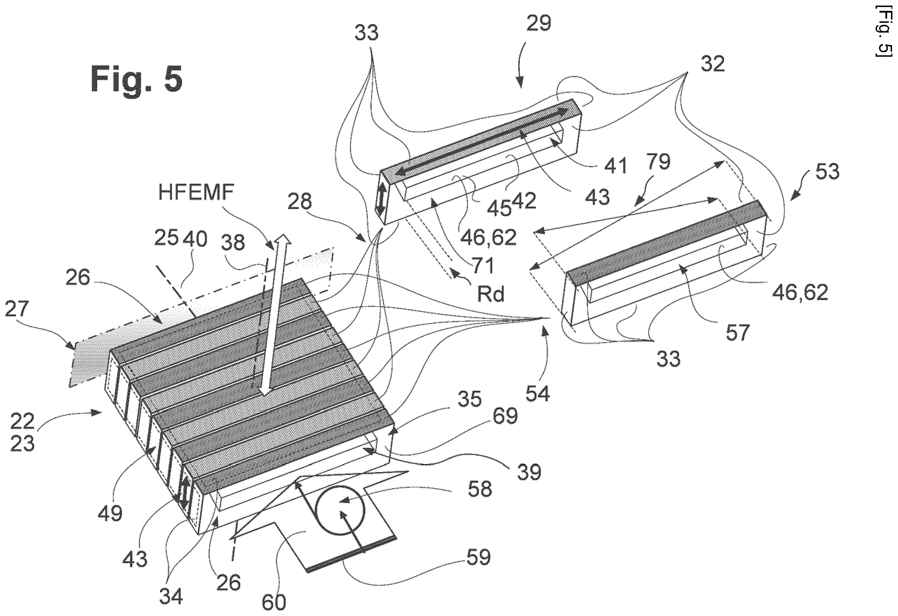

En se référant à la figure [Fig. 1] et à la figure [Fig. 5], nous voyons que chaque Feuille Mince (24) laminée de la Matrice (23) a une géométrie spatiale et des dimensions latérales similaires à celles des Feuilles Minces (24) voisines dans la Matrice (23). Elle présentant deux Surfaces De Feuille (32) latérales principales, parallèles au Plan D'Empilage (27).

En se référant à nouveau à la figure [Fig. 1] et à la figure [Fig. 5] , nous voyons que les Bords Périphériques (33) adjacents successifs combinés de chaque Feuille Mince (24) forment une Surface De Bordure (34) rainurée de la Matrice (23), entourant l' Axe De Matrice (25). L' Axe Du Noyau (38) de la Matrice (23), joint sensiblement les centres de la Première Face De Bordure (36) et de la Seconde Face De Bordure (37). Il est positionné sensiblement perpendiculairement à l'Axe De Matrice (25).

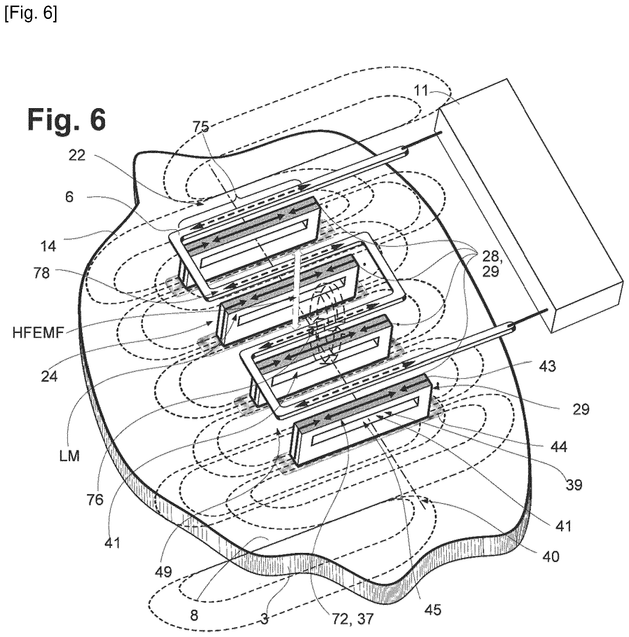

En se référant à figure [Fig. 5] et à la figure [Fig. 6], nous voyons que la Matrice (23) en sandwich comprend une Première Multitude (28) de Plaquettes Actives HF (29) (quatre sont représentées sur les figures), ou groupes de telles plaquettes. Chaque Plaquette Active HF (29) est isolée des autres. Elle incorpore intérieurement un Matériau Magnétique (notamment ferromagnétique ou ferrimagnétique) à forte perméabilité magnétique. Le Matériau Magnétique a une certaine Température De Curie (TC). Elle incorpore extérieurement un matériau électriquement conducteur. Elle peut alternativement être recouverte extérieurement d'une couche électriquement conductrice sur ses Bords Périphériques (33). Une Ouverture Cylindrique Rainurée (39) passe à travers de chaque Feuilles Mince (24) de la Matrice (23), le long d'un Axe d'Ouverture (40) de la Matrice (23), sensiblement parallèle à l'Axe De Matrice (25) et perpendiculaire à l'Axe Du Noyau (38). Elle débouche sur chacune des deux Faces De Matrice (26). Une multitude de Trous Via Magnétique (41), de dimensions de section similaires et à périmètre fermé, sont perforés à travers et sensiblement au centre de chacune des multiples Plaquette Active HF (29) ainsi évidées de la Matrice (23), selon un axe sensiblement parallèle à la Surface Inspectée (8). Ils sont alignés selon un axe parallèle à la Surface Inspectée (8) pour former par leur alignement l'Ouverture Cylindrique Rainurée (39). Ils présentent une Enveloppe Longitudinale De Trou Via (42), le long de l' Axe d'Ouverture (40) de la Matrice (23) en sandwich, dont le périmètre latéral fermé. En se référant à la figure [Fig. 3] et à la figure [Fig. 4] on voit que lorsque l'EMAT (1) est en fonctionnement, une multitude de Boucles De Courant Induit (43) fermées sont induites par le Champ Électromagnétique Émis HF (HFEMF). Celui-ci est soit émis par le Courant Alternatif HF (AC) à fréquence ultrasonique dans la Bobine Électrique HF (6) lorsque l'EMAT est en mode émission comme cela apparait à la figure [Fig. 3], et/ou émis par les Courant de Foucault Du Matériau (14) à fréquence ultrasonique dans le Matériel inspecté (3) lorsque l'EMAT est en mode réception comme cela apparait à la figure [Fig. 4]. Les Boucles De Courant Induit (43) sont situées à l'intérieur de la Peau de Plaquette Active (48) de la périphérie de chaque Plaquettes Actives HF (29) du Noyau Magnétique Laminé Matriciel Perforé (22). Comme cela apparait [Fig. 6] elles sont disposées selon une Cartographie De Boucles (LM), définissant la topologie, la répartition, et les positions relatives de l'ensemble des Boucles De Courant Induit (43).

En référence à la figure [Fig. 2] on constate les particularités suivantes de l'EMAT (1). Chaque Trou Via Magnétique (41) dans chaque Plaquette Active HF (29) est situé entre la Première Face De Bordure (36) faisant face à la Surface Inspectée (8), et, la Seconde Face De Bordure (37) faisant face à la Bobine Électrique HF (6). Chaque Trou Via Magnétique (41) de l'Ouverture Cylindrique Rainurée (39) est exempt intérieurement de tout matériau dur. En particulier il est exempt de tout conducteur électrique qui le traverse. En référence à la figure [Fig. 6] on voit que la Cartographie De Boucles (LM) est topologiquement discrète et constituée d'une multitude de Boucles De Courant Induit (43) dans chaque Plaquettes Actives HF (29), (ou de groupes de telles Plaquettes Actives) distantes les unes des autres. En référence à la figure [Fig. 3] on voit que les Boucles De Courant Induit (43) (ou groupe de telles Boucles) sont induites à l'intérieur de la Peau de Plaquette Active (48) sur les Bords Périphériques (33) des Plaquettes Actives HF (29). Elles sont chacune agencés selon un plan de boucles parallèle au Plan D'Empilage (27), et sensiblement perpendiculairement à la surface du Matériau Inspecté (3). Elles sont sensiblement parallèles, et séparés les unes des autres, entre leurs Plaquettes Active HF (29) respectives. Elles encerclent les Trous Via Magnétique (41) de leur Plaquette Active HF (29) et tournent autour. En référence à la figure [Fig. 6] on voit que chaque Tranche d'Espacement De Noyau (49) du Noyau Magnétique Laminé Matriciel Perforé (22) et de sa surface, localisée entre deux Plaquette Active HF (29) adjacentes (29) (ou groupe), est exempte de toute Boucles De Courant Induit (43), et plus généralement exempte de tout courant électrique induit.

En se référant à la figure [Fig. 3], on voit que le Champ Électromagnétique HF Émis (HFEMF), et le Noyau Magnétique Laminé Matriciel Perforé (22) sont configurés de telle manière que, lorsque l'EMAT (1) est en fonctionnement, le Champ Magnétique de Noyau HF (HFIMF) possède une composante significative de Champ Magnétique Transverse de Noyau HF (MFTHF), qui est perpendiculaire au Plan D'Empilage (27), perpendiculaire à chaque Plaquette Active HF (29), et sensiblement parallèle à la surface du Matériau Inspecté (3). Le Flux Magnétique HF (MFHF) à l'intérieur du Noyau Magnétique Laminé Matriciel Perforé (22) possède une composante importante perpendiculaire à l'Axe Du Noyau (38) et parallèle à la surface du Matériau Inspecté (3). Et donc il n'est pas perpendiculaire à la Surface Inspectée (8) du Matériau Inspecté (3). Les Boucles De Courant Induit (43) fermées sont générés par le Champ Magnétique Transverse de Noyau HF (MFTHF) sur le Bord Périphérique (33) de chaque Plaquette Active HF (29).

En se référant à la figure [Fig. 5] et à la figure [Fig. 6], Il est compréhensible qu'un double effet physique combiné et interactif se produit à l'intérieur du Noyau Magnétique Laminé Matriciel Perforé (22). D'une part, chacune des multiples Boucles De Courant Induit (43) parallèles et topologiquement discrètes et distantes de chaque Plaquette Active HF (29) évidée, génère séparément un champ magnétique haute fréquence. Cela accroit séparément et localement le couplage magnétique à haute fréquence discret et sélectif entre - une Fraction Active Locale (44) étroite de la Surface Inspectée (8) faisant face à sa Première Face De Bordure (36), - et la Bobine Électrique HF (6). Les Boucles De Courant Induit (43) parallèles des Plaquette Active HF (29) participent par mutualisation à la réduction globale de la réluctance magnétique à haute fréquence de l'EMAT (1). D'autre part, le Périmètre Interne (45) de chaque Trou Via Magnétique (41) dans chaque Plaquette Active HF (29) de la Matrice (23) crée une Surface Thermo-Conductrice et Convective (46) au centre de sa Plaquette Active HF (29). Cela produit un effet de Refroidissement Thermique interne pour dissiper une fraction de l'énergie électrique et calorifique locale générée par la Boucle De Courant Induit (43) spécifique de chaque Plaquette Active HF (29). Cela participe par mutualisation à l'amélioration de l'efficacité de l'EMAT (1).

En se référant à la figure [Fig. 5], nous voyons le Noyau Magnétique Laminé Matriciel Perforé (22), avec ses Plaquettes Actives HF (29) séparées par des Plaquettes Passives (53). Chaque Plaquette Active HF (29) évidée de la Matrice (23) (ou groupe de telles Plaquettes Active) est séparée de ses voisines, au niveau des Tranches d'Espacement De Noyau (49) adjacentes, par au moins une feuille d'une Seconde Multitude (54) de Plaquettes Passives (53) constituées d'un matériau Isolant électriquement. Chaque Plaquette Passive (53) est perforée par un Trou Via Entretoise (57). Chaque Plaquette Passive (53) est positionnée et configurée de telle sorte que les Trous Via Magnétique (41) dans la Première Multitude (28) de Plaquettes Actives HF (29) de la Matrice (23), ainsi que les Trous Via Entretoise (57) de la Seconde Multitude (54) de Plaquettes Passives (53) de la Matrice (23), sont alignés parallèlement à l' Axe De Matrice (25). Ils forment par leur alignement et leur combinaison l'Ouverture Cylindrique Rainurée (39).

Cette configuration du Transducteur Électromagnétique Acoustique (EMAT) (1) présente les caractéristiques suivantes. Chaque Trou Via Entretoise (57) dans chaque Plaquette Passive (53) est situé entre la Première Face De Bordure (36) faisant face au Matériau Inspecté (3), et la Seconde Face De Bordure (37) faisant face à la Bobine Électrique HF (6). Chaque Trou Via Entretoise (57) de l'Ouverture Cylindrique Rainurée (39), est exempt intérieurement de tout matériau dur. En particulier il est exempt de tout conducteur électrique qui le traverse. Il est compréhensible que la périphérie interne de chaque Trou Via Entretoise (57) dans chaque Plaquette Passive (53) de la Matrice (23) crée une Surface Thermo-Conductrice et Convective (46) libre interne au centre de la Plaquette Passive (53). Cela produit un effet de Refroidissement Thermique interne dans ce Trou Via Entretoise (57) pour dissiper une fraction de l'énergie électrique et calorifique générée par les Boucles De Courant Induit (43) des Plaquettes Active HF (29) voisines. Cela participe par mutualisation à l'amélioration de l'efficacité de l'EMAT (1).

Comme représenté à la figure [Fig. 5], il est recommandé par l'invention, que pour chaque Plaquette Passive (53), les Bords Périphériques (33) de leurs pourtours soient exemptes de tout matériau conducteur recouvrant leurs surfaces. En sorte que la Surface De Bordure (34) rainurée du Noyau Magnétique Laminé Matriciel Perforé (22), est non pas recouverte continument et/ou constituée d'une couche conductrice électriquement, mais au contraire elle est constituée d'une alternance bords à bords d'une part d'anneaux conducteurs autour des Plaquette Actives HF (29) et d'autre part d'anneaux isolants autour des Plaquette Passive (53).

Selon un mode de mise en œuvre préféré de l'invention, qui apparait sur la figure [Fig. 5], le Noyau Magnétique Laminé Matriciel Perforé (22) de l'EMAT (1) comprend des Moyens De Refroidissement (58). Ils génèrent un Flux Calorifique (59) d'un Fluide Calorifique (60) à une Température De Refroidissement (TF). Ce Flux Calorifique (59) est forcé à passer à travers l'Ouverture Cylindrique Rainurée (39) de la Matrice (23). Cette configuration de l' EMAT (1) présente les caractéristiques suivantes. Le Flux Calorifique (59) de refroidissement est configuré pour traverser successivement l'un des Trous Via Magnétique (41) de la Première Multitude (28) et, alternativement l'un au moins des Trous Via Entretoise (57) de la Seconde Multitude (54). Il lèche la totalité des Surfaces De Paroi De Trou (62) de chaque Trou Via Magnétique successif (41) et / ou de chaque Trou Via Entretoise (57) de la Matrice (23). Il est compréhensible que cela augmente l'effet de refroidissement thermique interne dans chaque Plaquette Active HF (29) de la Matrice (23); chacune d'elles étant assujettie à une Boucle De Courant Induit (43) et une dissipation de chaleur. Il est recommandé par l'invention que la Température De Refroidissement (TF) du Flux Calorifique (59) soit réglée de manière nettement inférieure (d'au moins 50 ° C) à la Température De Curie (TC) spécifique du Matériau Magnétique de chaque Plaquette Active HF (29) évidée.

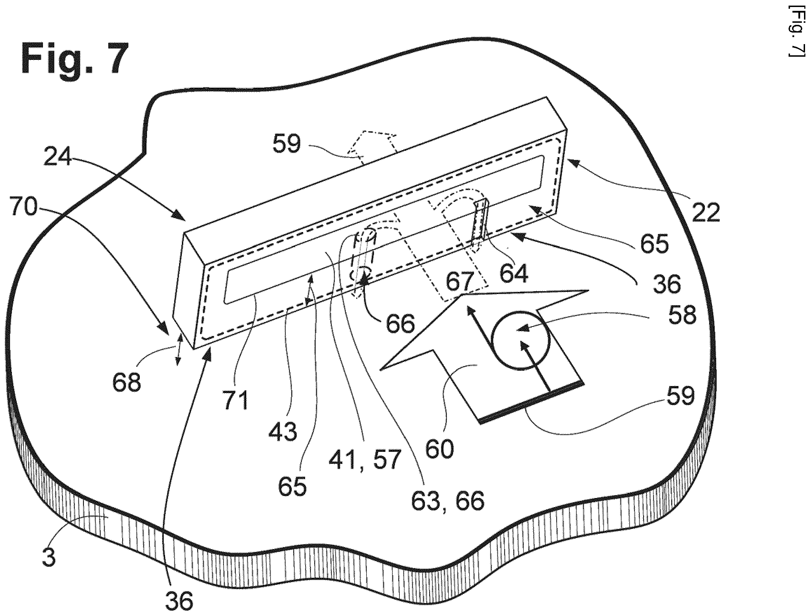

En se référant à la [Fig. 7], on voit une variante avantageuse de réalisation de l'EMAT (1) de l'invention. Au moins une (et de préférence une multitude de) Feuilles Mince(s) (24) du Noyau Magnétique Laminé Matriciel Perforé (22) est - soit percé par un Trou De Coussin (63), - soit, pourvu d'une Entaille De Coussin (64). Ces ouvertures passent à travers le Mur Annulaire (65) ménagé entre leur Trous Via (41, 57), et la portion de leur Première Face De Bordure (36) faisant face au Matériau Inspecté (3), ce dans une direction parallèle au Plan D'Empilage (27). Cela crée un Évidement De Coussin (66) entre les Trous Via (41, 57) de la Feuille Mince (24) et la Première Face De Bordure (36) faisant face au Matériau Inspecté (3). Les Moyens De Refroidissement (58) sont configurés pour extraire un Écoulement Fluide Coussin (67) du Flux Calorifique (59) parcourant les Trous Via (41, 57). Ils écoulent sous pression cet Écoulement Fluide Coussin (67) extrait à travers l'Évidement De Coussin (66). Cela crée un Coussin d'Air (70) de levage entre le Noyau Magnétique Laminé Matriciel Perforé (22) et le Matériau Inspecté (3), au niveau de l'Évidement De Coussin (66) faisant face au Matériau Inspecté (3). Ainsi cela soulève le Noyau Magnétique Laminé Matriciel Perforé (22) au-dessus du Matériau Inspecté (3) d'un Écartement De Coussin (68). Cette disposition est fiable. Elle assure un réglage mécanique automatique de l'Écartement De Coussin (68). On comprend que cette disposition diminue considérablement l'énergie calorifique transférée par conduction entre le Matériau Inspecté (3) et Noyau Magnétique Laminé Matriciel Perforé (22), ainsi que vers les parties actives. Cette disposition élimine les frottements. Elle accroit significativement la durée de fonctionnement et la disponibilité de l'EMAT (1), en limitant l'usure entre les phases de maintenance.

En se référant à la figure [Fig. 5], on voit une variante de réalisation de l'EMAT (1) de l'invention. Les deux Faces De Bordure (35) latérales externes des deux Feuilles Minces externes situées sur les Faces De Matrice (26) sont soit constituées, soit recouvertes (comme illustré) par une Couche De Couverture Conductrice (69), d'un matériau conducteur électrique. Cette configuration l'EMAT (1) présente les caractéristiques suivantes. Un Trou Via de dimensions transversales similaires à celles des Trous Via Magnétique (41) est perforé à travers chacune des deux Couches De Couverture Conductrice (69). Les multiples Feuilles Minces (24) et les deux Couches De Couverture Conductrice (69) de la Matrice (23) sont positionnées les unes par rapport aux autres, de sorte que leurs multiples trous via sont alignés pour former par continuité l' Ouverture Cylindrique Rainurée (39).

Selon une variante préférée de l'invention, qui est décrite à la figure [Fig. (5)], le périmètre de chaque Trous Via Magnétique (41) ménagé dans chaque Plaquette Active HF (29) est rectangulaire. Le centre de chaque Trou Via Magnétique (41) est sensiblement situé et centré au centre de gravité de sa Plaquette Active HF (29). Et, le périmètre de chaque Trou Via Magnétique (41) est positionné sensiblement à une Distance d'Anneau (Rd) constante du périmètre des Bords Périphériques (33) de sa Plaquette Active HF (29). Il est compréhensible que dans cette configuration, chaque Plaquette Active HF (29) est topologiquement configurée comme un Anneau Actif (71) rectangulaire, refroidi thermodynamiquement de l'échauffement de la Boucle De Courant Induit (43) générée autour d'elle.

En se référant à la figure [Fig. 1] et à la figure [Fig. 2, on voit une variante recommandée de réalisation de l'EMAT (1) de l'invention. La Seconde Face De Bordure (37) du Noyau Magnétique Laminé Matriciel Perforé (22) fait directement face à la Bobine Électrique HF (6). Aucun Aimant (4) ou autre élément n'est positionné entre - d'un côté la Seconde Face De Bordure (37) de la Matrice (23) et - de l'autre côté la Bobine Électrique HF (6).

En se référant à la figure [Fig. 6], on voit un autre mode de réalisation préféré de l'EMAT (1) de l'invention. La Bobine Électrique HF (6) et la Première Multitude (28) de Plaquette Active HF (29) dans la Matrice (23) sont configurés de telle sorte que: l'orientation, le pas, la taille et la forme de chacun des Bords Face Circuit (72) de chaque Plaquette Active HF (29), situés dans la Seconde Face De Bordure (37) de la Matrice (23), et faisant face à la Bobine Électrique HF (6); sont cohérents et corrélés avec les paramètres géométriques, y compris l'orientation, le pas, la taille et la forme, des Fractions De Conducteur (75) de la Bobine Électrique HF (6) faisant successivement face à chacun de ces Bords Face Circuit (72).

Une disposition préférée de la configuration ci-dessus apparait en référence à la figure [Fig. 3]. On voit que la Bobine Électrique HF (6) présente au moins une partie de Conducteur Linéaire (73). Celle-ci est positionné à proximité et directement au-dessus d'un Bord Face Circuit (72). Elle est tangente, le long d'un axe parallèle, à cette partie voisine du périmètre d'une Plaquette Active HF (29) située dans la Seconde Face De Bordure (37) de la Matrice (23) faisant face à la Bobine Électrique HF (6). On voit qu'une particularité de cette disposition de l'invention est que la fraction de Conducteur Linéaire (73) et le Noyau Magnétique Laminé Matriciel Perforé (22) sont configurés de telle sorte que, lorsque que l'EMAT (1) est en fonctionnement, une Boucle De Courant Induit (43) est induite dans la Peau de Plaquette Active (48) sur le pourtour de la Plaquette Active HF (29). Elle entoure son Trou Via Magnétique (41). En sorte que cela réalise un couplage magnétique HF sélectif local entre - d'une part un Courant Alternatif HF (AC) entraîné dans le Conducteur Linéaire (73) s'étendant sur et le long du périmètre de la Plaquette Active HF (29), et, - d'autre part les Courant de Foucault Du Matériau (14) générés dans la Fraction Active Locale (44) étroite de la Surface Inspectée (8) faisant face à la Plaquette Active HF (29).

On sait que le Champ Électromagnétique Émis HF (HFEMF) créé par un Conducteur Linéaire (73) parcouru par un courant est ortho radial. Par conséquent les lignes de Flux Magnétique HF (MFHF) sont sensiblement des cercles qui entourent le Conducteur Linéaire (73).

Si l'EMAT (1) est en Mode Émission (EM), comme cela est décrit sur la figure Fig.3, alors le Courant Alternatif HF (AC) parcourant la fraction de Conducteur Linéaire (73) produit un flux magnétique ortho radial en boucle, générant une Boucle De Flux Magnétique HF De Conducteur (76), créant un Champ Magnétique Transverse de Noyau HF (MFTHF), qui est sensiblement perpendiculaire à la Plaquette Active HF (29) qui lui fait face. Cela provoque une Boucle De Courant Induit (43) en surface de l'Anneau Actif (71) de la Plaquette Active HF (29). Cette Boucle De Courant Induit (43) émet une multitude de boucles de flux magnétique HF qui produisent des Courant de Foucault Du Matériau (14) topologiquement ordonnés et tous orientés selon un axe sensiblement parallèle au plan de la Plaquette Active HF (29) qui leur fait face à proximité directement au-dessus.

On sait également qu'une spire circulaire alimentée par un courant produit un faisceau de lignes de champ magnétique, sous la forme d'une multitude de boucles de flux magnétique parallèles à l'axe de la spire circulaire, et passant par son centre.

En référence à la figure [Fig. 4], on comprend que lorsque l'EMAT (1) est utilisé en Mode Réception (RM), alors la composante des Courant de Foucault Du Matériau (14) parallèle au Plan D'Empilage (27) générés à la surface du matériau, sous l'influence d'une source ultrasonique extérieure, induisent une Boucle De Flux Magnétique HF De Matériau (77), créant un Champ Magnétique Transverse de Noyau HF (MFTHF) sensiblement perpendiculaire à l'Anneau Actif (71) de la Plaquette Active HF (29) faisant face à ces Courant de Foucault Du Matériau (14). Cela crée une Boucle De Courant Induit (43) à l'intérieur de sa Peau de Plaquette Active (48). La Boucle De Boucle De Courant Induit (43) entourant longitudinalement cette Plaquette Active HF (29) émet alors une multitude de boucles de flux magnétique HF qui encerclent la fraction de Conducteur Linéaire (73) qui lui est tangent le long d'un axe parallèle à une partie du périmètre de cette Plaquette Active HF (29). Cela génère par induction un Signal Électrique Ultrasonique Secondaire (88) qui crée un Courant Alternatif HF (AC) dans la fraction de Conducteur Linéaire (73).

Selon un mode préféré de l'invention qui apparait à la figure [Fig. 3] et à la figure [Fig. 6], la Bobine Électrique HF (6) est un Circuit Méandre (74). Elle présente une multitude de (au moins deux) fractions de Conducteur Linéaire (73) (quatre sont représentés sur la figure [Fig. 6]). Elles sont parallèles et voisines les unes des autres. La multitude de ces fractions de Conducteur Linéaire (73) du Circuit Méandre (74) sont positionnés successivement à proximité, et directement au-dessus d'un Bord Face Circuit (72) d'une des Plaquette Active HF (29), situé dans la Seconde Face De Bordure (37) de la Matrice (23) faisant face à la Bobine Électrique HF (6). Ils sont configurés de manière que le Courant Alternatif HF (AC) parcourant successivement chacune des fractions de Conducteur Linéaire (73) parallèles et voisines du Circuit Méandre (74) soit orienté dans des directions opposées alternées. On constate qu'une Boucle De Flux Magnétique HF De Conducteur (76) entoure sensiblement perpendiculairement chaque fraction de Conducteur Linéaire (73) du Circuit Méandre (74), et pénètre sensiblement perpendiculairement à l'intérieur de la Plaquette Active HF (29) qui lui fait face. On constate également que cette disposition comporte les caractéristiques suivantes. Les fractions de Conducteur Linéaire (73) du Circuit Méandre (74) et le Noyau Magnétique Laminé Matriciel Perforé (22) sont configurés de telle sorte lorsque l'EMAT (1) est Mode Émission (EM), deux Plaquette Active HF (29) voisines, surmontées par deux fractions de Conducteur Linéaire (73) voisins, sont parcourues dans leur Peau de Plaquette Active (48) par deux Boucles De Courant Induit (43) voisines. Elles sont composées chacune d' un courant électrique alternatif HF tournant dans un Sens De Rotation (78) opposé, autour de l'Axe d'Ouverture (40) passant à travers leurs Trous Via Magnétique (41), l'un étant dans le sens horaire, tandis que l'autre est dans le sens antihoraire.

En se référant à la figure [Fig. 1], on voit que la Profondeur d'Ouverture (Od) de l'Ouverture Cylindrique Rainurée (39) du Noyau Magnétique Laminé Matriciel Perforé (22), le long de son Axe d'Ouverture (40), est sensiblement égale et cohérente avec une Première Dimension Transversale (FTd) de la Bobine Électrique HF (6) de l'EMAT (1). De plus, la Seconde Face De Bordure (37) rainurée de son Noyau Magnétique Laminé Matriciel Perforé (22), faisant face à la Bobine Électrique HF (6), a une dimension transversale, dans une direction perpendiculaire à l' Axe d'Ouverture (40) de la Matrice (23), qui sensiblement égale et cohérente avec une Seconde Dimension Transversale (STd) de la Bobine Électrique HF (6) de l'EMAT (1).

Selon une configuration préférée de mise en œuvre de l'invention, qui apparait à la figure [Fig. 5], les Dimensions Géométriques De Feuille (79) des Feuilles Minces (24) perforées de sa Matrice (23) et les dimensions géométriques combinées de son Noyau Magnétique Laminé Matriciel Perforé (22) sont sélectionnées pour être décorrélées des longueurs d'onde des principales harmoniques du Champ Électromagnétique Émis HF (HFEMF). Il est compréhensible que cela empêche une résonnance mécanique de son Noyau Magnétique Laminé Matriciel Perforé (22) à la fréquence ultrasonore d'opération de l'EMAT (1).

Selon une autre configuration préférée de mise en œuvre de l'invention, les Dimensions Géométriques De Feuille (79) des Feuilles Minces (24) perforées de son Noyau Magnétique Laminé Matriciel Perforé (22) sont choisies de telle manière que, à la fréquence ultrasonore d'opération de l'EMAT (1), elles soient soit beaucoup plus petites que les longueurs d'onde des ondes ultrasonores générées dans ces Feuilles Minces (24), soit, sensiblement égales à un nombre impair de quarts des longueurs d'onde des ondes ultrasonores générées dans ces Feuilles Minces (24).

Selon une autre configuration préférée de l'invention, décrite à la figure [Fig. 2], la Première Face De Bordure (36) rainurée du Noyau Magnétique Laminé Matriciel Perforé (22), faisant face au Matériau Inspecté (3) et parallèle à l'Ouverture Cylindrique Rainurée (39) est, soit recouverte, soit couverte d'une Couche Isolante (81) (comme illustré), constituée d'un matériau électriquement isolant. Une des faces de la Couche Isolante (81) est disposée en regard de l' Ouverture Cylindrique Rainurée (39), et recouvre le bord appartenant à la Première Face De Bordure (36), du périmètre de chacune des Plaquettes Actives HF (29).

L'EMAT (1) de l'invention, et ses variantes exposées ci-dessus, offrent une solution technique au problème technique (a) ci-dessus. Cet EMAT (1) accroît la transmission de l'énergie du Champ Électromagnétique Émis HF (HFEMF). Il maximise le couplage magnétique HF et minimise les fuites de flux du Champ Électromagnétique Émis HF (HFEMF), entre la Bobine Électrique HF (6) et les Courant de Foucault Du Matériau (14) générés à la surface du Matériau Inspecté (3). Il assure une homogénéité topologique de surface de l'efficacité de ce couplage électromagnétique à haute fréquence entre la Bobine Électrique HF (6) et les Courant de Foucault Du Matériau (14) inspectés faisant face au transducteur. Il fonctionne à des températures élevées du Matériau Inspecté (3) supérieures à 1000°C.

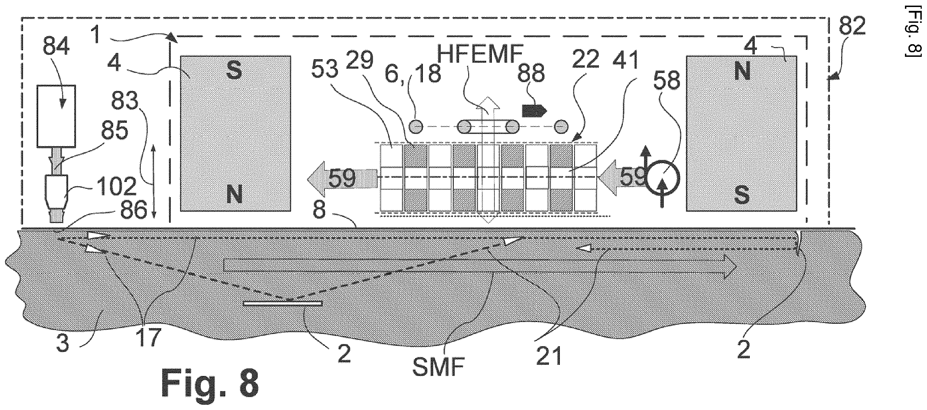

En se référant à la figure [Fig. 8], on voit une Sonde Laser-EMAT (LEMAT) (82), pour inspecter un Matériau Inspecté (3), en recevant un signal ultrasonique de ce Matériau Inspecté (3). Le LEMAT comprend la combinaison de: i) un Transducteur Électromagnétique Acoustique (EMAT) (1) selon l'invention tel que décrit plus haut, et ii) une Source Laser (84). L'EMAT (1) est configuré en Mode Réception (RM), pour recevoir un Signal Electrique Ultrasonique Secondaire (88) du Matériau Inspecté (3). la Bobine Électrique HF (6) est configurée comme un Récepteur Électromagnétique HF (18). Comme cela apparait à la figure [Fig. 4], ce Signal Electrique Ultrasonique Secondaire (88) est induit électriquement par un Champ Électromagnétique Émis HF (HFEMF) émis par le Matériau Inspecté (3), généré par des Courants de Foucault Du Matériau (14) produits dans le Matériau Inspecté (3) par des Ondes Ultrasonores Secondaires (21). Ces Courant de Foucault Du Matériau (14) sont représentatifs des Discontinuités (2) de surface et/ou internes du Matériau Inspecté (3). Comme cela apparait à la figure [Fig. 8], le Noyau Magnétique Laminé Matriciel Perforé (22) est situé entre la Bobine Électrique HF (6) de l'EMAT (1) et la surface locale du Matériau Inspecté (3). Il fait face directement à la Bobine Électrique HF (6). Il maintient un Espacement Protecteur (83) entre le Matériau Inspecté (3) et la Bobine Électrique HF (6). Il réduit la réluctance magnétique de l'EMAT (1). Il est activement protégé thermodynamiquement des températures élevées et des conditions de surface difficiles du Matériau Inspecté (3). La Source Laser (84) est configurée pour tirer un Faisceau Laser (85) à haute énergie en un Point De Tir (86) de la surface du Matériau Inspecté (3). Le Faisceau Laser (85) génère des Ondes Ultrasonores Primaires (17) se propageant sur la surface et/ou à l'intérieur du Matériau Inspecté (3). Cela provoque la génération d'Ondes Ultrasonores Secondaires (21) résultant des échos des interactions des Ondes Ultrasonores Primaires (17) avec les discontinuités (2) sur et/ou à l'intérieur du Matériau Inspecté (3). Ces Ondes Ultrasonores Secondaires (21) se propagent sur la surface et/ou à l'intérieur du Matériau Inspecté (3). Elles provoquent la génération de Courants de Foucault Du Matériau (14) en surface du Matériau Inspecté (3) induits par les vibrations mécaniques des Ondes Ultrasonores Secondaires (21) sous l'influence du Champ Magnétique Statique (SMF) généré par l'Aimant (4) de l'EMAT (1). Cela provoque l'induction d'un Champ Électromagnétique Émis HF (HFEMF) émis par les Courant de Foucault Du Matériau (14) présents en surface du Matériau Inspecté (3), représentatif de la géométrie et de la position des Discontinuités (2) de la surface et internes du Matériau Inspecté (3). Le traitement de ce Champ Électromagnétique Émis HF (HFEMF) au travers de l'EMAT (1) génère le Signal Electrique Ultrasonique Secondaire (88) dans la Bobine Electrique HF (6).

En se référant à la figure [Fig. 4], ou l'EMAT (1) est configuré en Mode Réception, on constate que la Sonde Laser-EMAT (LEMAT) (82) présente les caractéristiques techniques suivantes. Une multitude de Boucles De Courant Induit (43) distantes sont induites, par le Champ Électromagnétique Émis HF (HFEMF) émis par les courants de Foucault (14) dans le Matériau Inspecté (3) sous l'influence de la Source Laser (84), à l'intérieur de la Peau de Plaquette Active (48) sur les Bord Périphériques (33) de chaque Plaquette Active HF (29) du Noyau Magnétique Laminé Matriciel Perforé (22). Comme cela apparait à la figure [Fig. 6], ces Boucles De Courant induit (43) de chaque Plaquette Active HF (29) (ou groupe) sont éloignées les unes des autres. Ces Boucles De Courant de Foucault (43), entourent et tournent autour de l' Anneau Actif (71) magnétiquement, entourant les Trous Via Magnétique (41) des Plaquette Active HF (29). Elles sont situées entre la Première Face De Bordure (36) faisant face au Matériau Inspecté (3) et la Seconde Face De Bordure (37) face Bobine Électrique HF (6). Elles sont positionnées sensiblement perpendiculairement à ces deux Faces De Bordures (36, 37).

Il est compréhensible que dans un tel LEMAT (82), un double effet physique combiné et interactif se produit à l'intérieur du Noyau Magnétique Laminé Matriciel Perforé (22). D'une part, comme cela apparait [Fig. 4], chacune des multiples Boucle De Courant Induit (43) discrètes et parallèles de chaque Plaquette Active HF (29) évidée (ou groupe) , génère séparément un champ magnétique haute fréquence. Il accroit séparément et localement le couplage magnétique à haute fréquence entre - une Fraction Active Locale (44) de la Surface Inspectée (8) faisant face à la Première Face De Bordure (36), - et la Bobine Électrique HF (6). Cela homogénéise le couplage à haute fréquence, et participe par mutualisation à la réduction globale de la réluctance magnétique à haute fréquence de l'EMAT (1). D'autre part, comme cela apparait [Fig. 5], le Périmètre Interne (45) de chaque Trou Via Magnétique (41) dans chaque Plaquette Active HF (29) de la Matrice (23), crée une Surface Thermo-Conductrice et Convective (46) libre interne au centre de sa Plaquette Active HF (29). Cela produit un effet de Refroidissement Thermique interne pour dissiper une fraction de l'énergie électrique et calorifique générée par la Boucle De Courant de Induit (43) de sa Plaquette Active HF (29) spécifique. Et cela participe par mutualisation à l'amélioration de l'efficacité de l'EMAT (1).

Le LEMAT (82) de l'invention, offre une solution technique au problème technique (b) ci-dessus. Il optimise la résolution de la détection des Discontinuités (2) de surface, de sous-surface et profondes de sous-surface dans une structure métallique épaisse. Il fonctionne à des températures élevées du Matériau Inspecté (3) supérieures à 1000°C.

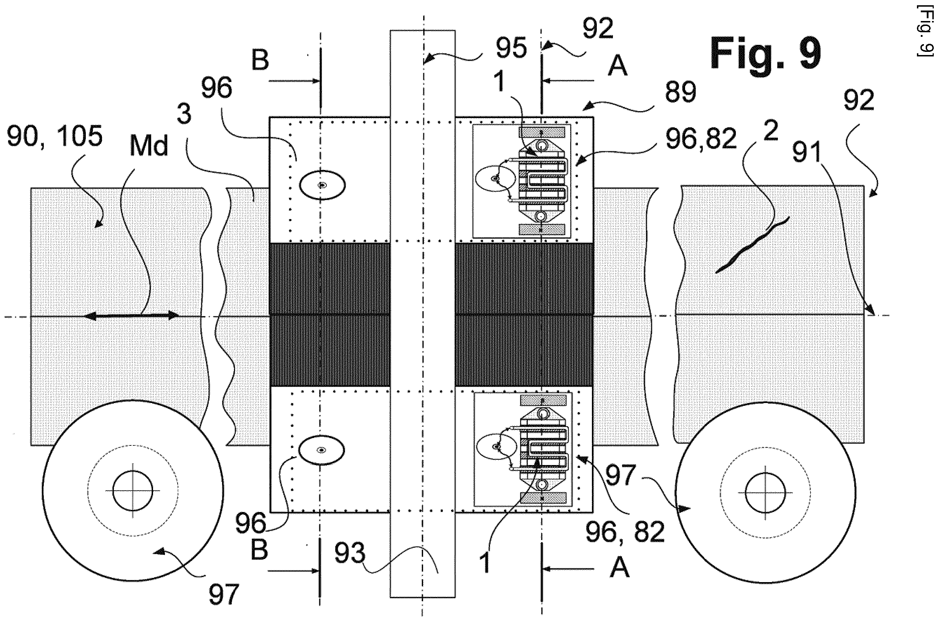

En se référant à la figure [Fig. 9], on voit un Scanner 3D Multi Laser-EMAT (MLEMAT) (89), pour la détection de Discontinuités (2) de surface et/ou internes à l'intérieur d'une Structure Conductrice (90) cylindrique mobile. Le MLEMAT (89) comprend: a) une Structure Conductrice (90) à scanner en 3D ; b) un Cadre Châssis (93); c) une Multitude De Sondes (96) faite d'au moins deux Sondes Laser-EMAT (LEMAT) (82) selon l'invention, et d) des Moyens De Déplacement (97). La Structure Conductrice (90) à scanner en 3D est faite d'un Matériau Inspecté (3) électriquement conducteur. Elle a une structure cylindrique générée le long d'un Axe De Structure (91), et une Section De Structure (92) sensiblement constante. Le Cadre Châssis (93) est configuré pour entourer la Structure Conductrice (90) à une Distance De Trame (Fd). Son Plan De Cadre (95) est sensiblement perpendiculaire à l'Axe De Structure (91) de la Structure Conductrice (90). Les Moyens De Déplacement (97) sont configurés pour déplacer linéairement la Structure Conductrice cylindrique (90) par rapport au Cadre Châssis (93), le long d'une Direction De Déplacement (Md), sensiblement combinée avec l'Axe De Structure (91).

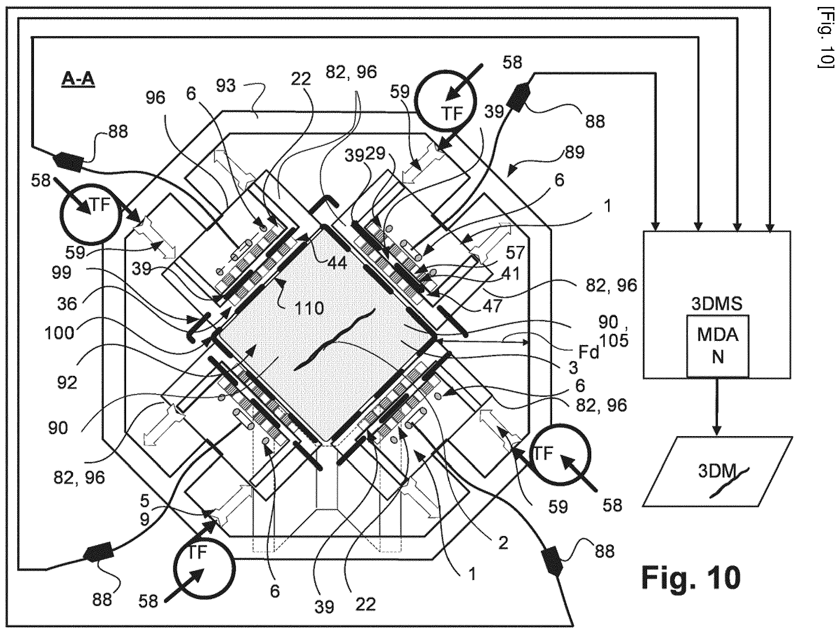

Ce Scanner 3D Multi Laser-EMAT (MLEMAT) (89) présente la caractéristique suivante qui apparaissent en se référant à la figure [Fig. 10]. La Boucle d'Ouvertures (99), constituée par la ligne virtuelle joignant les centres de chaque Ouverture Cylindrique Rainurée (39) successive du Noyau Magnétique Laminé Matriciel Perforé (22) de chaque EMAT (1) adjacent des Sondes Laser-EMAT (LEMAT) (82) du MLEMAT (89), encercle la Structure Conductrice (90).

On voit également que la Multitude De Sondes (96) faite de Laser-EMATs (82) sont fixées sur le Cadre Châssis (93), positionnées et configurées dans une position telle que la juxtaposition de la multitude des Premières Faces De Bordure (36) voisines des Noyaux Magnétique Laminé Matriciel Perforé (22) de chacune des Sonde Laser-EMAT (LEMAT) (82) adjacentes, faisant face au Matériau Inspecté (3), sont sensiblement contiguës les unes aux autres, constitue une Bague D'inspection (100) rainurée sensiblement continue. Cette Bague D'inspection (100) rainurée entoure et couvre le périmètre de la Structure Conductrice (90), dans une Section De Structure (92) de la Structure Conductrice (90) voisine du Plan De Cadre (95).

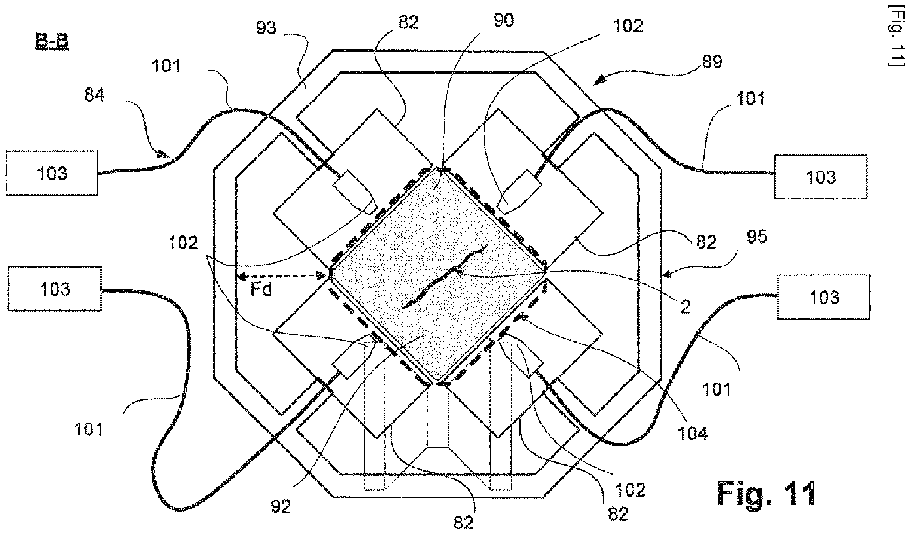

Dans un mode de réalisation préféré du Scanner 3D Multi Laser-EMAT (MLEMAT) (89), qui apparait en se référant à la figure [Fig. 11], la Source Laser (84) de chaque LEMAT (82) est constituée d'une Fibre Optique (101), fixée sur le Cadre Châssis (95), ayant une Extrémité De Tir (102) faisant face à la Structure Conductrice (90). Chaque Fibre Optique (101) est connectée à un Générateur Laser (103). Cette configuration du Scanner 3D Multi Laser-EMAT (MLEMAT) (89) présente la caractéristique suivante. La Boucle De Tir Laser (104), constituée par la ligne virtuelle joignant les Extrémité de Tir (102) de chaque Sondes Laser-EMAT (LEMAT) (82) adjacente du MLEMAT (89), encercle la Structure Conductrice (90) et est sensiblement parallèle à la Boucle d'Ouvertures (99).

Dans une variante de mise en œuvre préférée du scanner 3D Multi Laser-EMAT (MLEMAT) (89) de l'invention, il est opéré pour la détection de Discontinuités (2) de surface et/ou internes d'une Dalle Métallurgique (105). La Structure Conductrice (90) est alors une Dalle Métallurgique (105) cylindrique mobile par rapport au MLEMAT (89). La Boucle d'Ouvertures (99), constituée par la ligne virtuelle joignant les centres de chaque Ouverture Cylindrique Rainurée (39) successive du Noyau Magnétique Laminé Matriciel Perforé (22) de chaque EMAT (1) adjacent des Sondes Laser-EMAT (LEMAT) (82) du MLEMAT (89), encercle la Dalle Métallurgique (105) cylindrique mobile.

Dans une autre mise en œuvre préférée du Scanner 3D Multi Laser-EMAT (MLEMAT) (89) de l'invention, il est utilisé pour la détection de Discontinuités (2) de surface et/ou internes d'une Dalle d'Acier (105) cylindrique mobile; coulée en continu dans une aciérie à une Température De Coulée (TS) supérieure à 1000 ° C. Les Plaquettes Active HF (29) évidées de chaque Noyau Magnétique Laminé Matriciel Perforé (22) de chaque EMAT adjacent (1) du MLEMAT (89) sont constituées d'un Matériau Magnétique, du type par exemple ferromagnétique ou ferrimagnétique, ayant une Température De Curie (TC) inférieure à la Température De Coulée (TS). Ce Scanner 3D Multi Laser-EMAT (MLEMAT) (89) présente la caractéristique suivante. Comme cela apparait à la figure [Fig. 10], chaque Ouverture Cylindrique Rainurée (39) de chaque Noyau Magnétique Laminé Matriciel Perforé (22) de chaque EMAT (1) de chaque LEMAT (82) adjacent du MLEMAT ( 89), est connectée à des Moyens De Refroidissement (58) générant un Flux Calorifique (59) d'un Fluide Calorifique (60) de refroidissement. Le Fluide Calorifique (60) est poussé sous pression à l'intérieur de chaque trou via (41, 57) de l' Ouverture Cylindrique Rainurée (39) de chaque Noyau Magnétique Laminé Matriciel Perforé (22) de chaque EMAT (1) adjacent du MLEMAT (89), à une Température De Refroidissement (TF) nettement inférieure (d'au moins 50°c) à la Température de Curie (TC) du Matériau Magnétique des Plaquette Active HF(29) évidées.

Le MLEMAT (89) de l'invention, et ses variantes exposées ci-dessus, offrent une solution technique au problème technique (c) ci-dessus. Ce MLEMAT effectue un scanning 3D continu par ligne de Structures Conductrices (90) mobiles grandes et épaisses, telles que des dalles métallurgiques (105), à partir d'un seul emplacement, en générant une cartographie 3D observée à haute résolution de cette structure, y compris en fournissant la localisation des Discontinuités (2) de surface et sous-surface profondes. Il fonctionne à des températures élevées du Matériau Inspecté (3) supérieures à 1000°C.

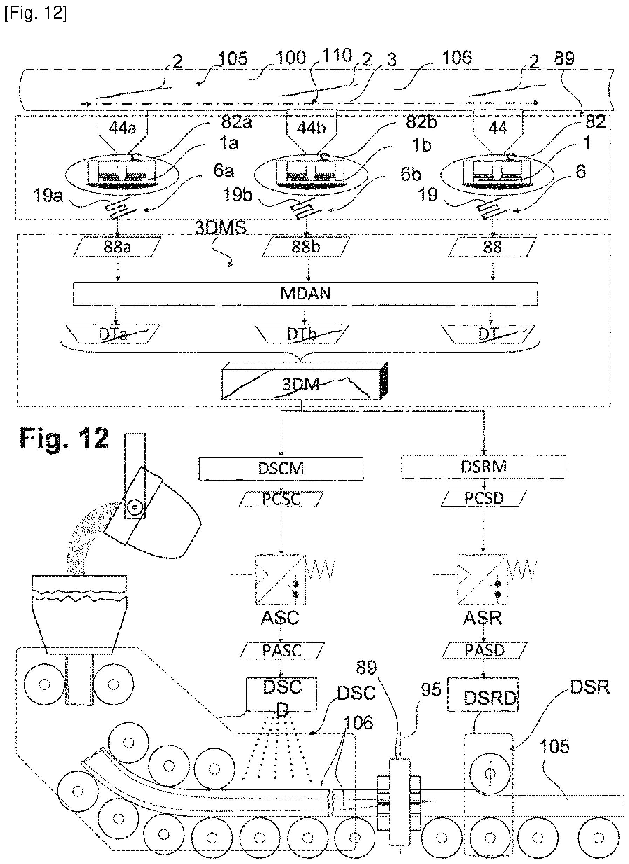

Se référant à la figure [Fig. 12], on voit le Scanner 3D Multi Laser-EMAT (MLEMAT) (89) selon l'invention comme indiqué ci-dessus, configuré pour le réglage automatique des paramètres dynamiques de la Réduction Dynamique Douce (DSR) d'une Dalle d'Acier (105) coulée en continu dans une aciérie à une Température De Coulée (TS) supérieure à 1000 ° C. La Dalle D'acier (105) est continuellement poussée à travers un Dispositif De Réduction Dynamique Douce (DSRD), pour supprimer la formation d'une zone de macro-ségrégation et de zones de porosité à l'intérieur de la Dalle d'Acier (105) ; ce en compensant dynamiquement le retrait de solidification de l'acier et en interrompant le débit d'aspiration du métal fondu résiduel dans la Zone Molle Centrale (106) de la Dalle d'Acier (105).

Ce MLMAT (89) est couplé à un Dispositif De Réduction Dynamique Douce (DSRD) qui comprend : i) un Système Dynamique De Cartographie 3D (3DMS), générant une Cartographie 3D Dynamique (3DM) de la coulée de la Dalle d'Acier (105); ii) un Système d'Optimisation De DSR (DSRM) informatisé, générant des Paramètres D'optimisation Dynamique De DSR (PCSD), basés la Cartographie 3D Dynamique (3DM) et sur les paramètres de coulée; et iii) un Activateur Numérique De DSR (ASR), ajustant dynamiquement les Paramètres d'Action De DSR (PASD) du Dispositif De Réduction Dynamique Douce (DSRD), en fonction des PCSD générés par le DSRM.

Ce Scanner 3D Multi Laser-EMAT (MLEMAT) (89) présente les caractéristiques suivantes. Les Bobine Électrique HF (6a, 6b, 6) de chaque EMAT (1a, 1b, 1) de chaque Laser-EMAT (82a, 82b, 82) du MLEMAT (89) sont chacune connectées au Système Dynamique De Cartographie 3D (3DMS). Elles lui transmettent un Signal Électrique Ultrasonique Secondaire (88a, 88b, 88) induit dans chaque Bobine Électrique HF (6a, 6b, 6) par les Courant de Foucault Du Matériau (14) sur la Zone Frontale (110) du Matériau Inspecté (3) de la Dalle d'Acier (105) faisant face localement à chaque EMAT (1a, 1b,1). Le Système d'Optimisation De DSR (DSRM) est doté de Moyens De Traitement Analogique Et Numérique (MDAN). Les MDANs sont configurés pour recevoir la multitude des Signaux Électriques Ultrasoniques Secondaires (88a, 88b, 88) inclus dans les Courants Electriques Ultrasoniques Secondaires (19a, 19b, 19) parcourant chaque Bobine Électrique HF (6) dans chaque Laser-EMAT (82a, 82b, 82) du MLEMAT (89). Les MDANs sont configurés également pour identifier les changements et les perturbations dans chaque Signal Électrique Ultrasonique Secondaire (88a, 88b, 88) de chaque Laser-EMAT (82a, 82b, 82), causés par les Discontinuités (2) dans la Fraction Active Locale (44a, 44b, 44) du Matériau Inspecté (3) faisant face à chaque Laser-EMAT (82a, 82b, 82), et en déduire numériquement la Topologie Frontale de Défauts (DTa, DTb, DT) dans cette Fraction Active Locale (44a, 44b, 44). Les MDANs sont configurés également pour combiner numériquement les Topologie Frontale de Défauts (DTa, DTb, DT), et générer numériquement une Cartographie 3D Dynamique (3DM) tridimensionnelle physiquement observée par le MLEMAT de l'intérieur de la coulée de la Dalle d'Acier (105), dans la Zone Frontale (110) faisant face à la Bague D'inspection (100) dans la Section de Structure (92) du Plan De Cadre (95), basée sur la combinaison et l'analyse numérique des signaux combinées des multiples Signaux Électriques Ultrasoniques Secondaires (88a, 88b, 88).

Comme cela apparait à la figure [Fig. 10], les Moyens De Refroidissement (58) génèrent un Flux Calorifique (59) d'un Fluide Calorifique (60), poussé sous pression à l'intérieur de chaque trou via (41, 57) de l' Ouverture Cylindrique Rainurée (39) de chaque Noyau Magnétique Laminé Matriciel Perforé (22) de chaque EMAT (1) adjacent du MLEMAT (89); ce à une Température De Refroidissement (TF) nettement inférieure (d'au moins 50°C) à la Température de Curie (TC) du Matériau Magnétique des Plaquettes Actives HF(29) évidées.

On comprend que grâce à ce MLEMAT (89), les Paramètres d'Action De DSR (PASD) du Dispositif De Réduction Dynamique Douce (DSRD) peuvent être ajusté dynamiquement de manière optimale, sur la base d'une Cartographie 3D Dynamique (3DM) de la coulée de la Dalle d'Acier (105) observée physiquement par le MLEMAT (89), ce à une Température De Coulée (TS) supérieure à 1000 ° C.

Se référant à la figure [Fig. 12], on voit une variante du Scanner 3D Multi Laser-EMAT (MLEMAT) (89) pour le réglage automatique des paramètres dynamiques de la Réduction Dynamique Douce (DSR) qui permet en outre le Réglage du Refroidissement Dynamique Secondaire (DSC) d'une Dalle d'Acier (105) coulée en continu dans une aciérie à une Température De Coulée (TS) supérieure à 1000 ° C. Le MLMAT (89) est couplé à un Dispositif De Refroidissement Dynamique Secondaire (DSCD) qui comprend en outre un Système d'Optimisation De DSC (DSCM) informatisé, générant des Paramètres D'optimisation Dynamique De DSC (PCSC) du Refroidissement Dynamique Secondaire (DSC) basés sur la Cartographie 3D Dynamique (3DM ) physiquement observée de la coulée de la Dalle d'Acier (105), dans la Section de Structure (92) du Plan De Cadre (95), par combinaison et analyse numérique des signaux combinées des multiples Signaux Électriques Ultrasonique Secondaire (88a, 88b, 88) dans chaque Laser-EMAT (82a, 82b, 82) du MLEMAT (89), et sur les paramètres de coulée. Il comprend également un Activateur Numérique De DSC (ASC), ajustant dynamiquement les Paramètres d'Action De DSC (PASC) du débit d'eau du Refroidissement Dynamique Secondaire (DSC), en fonction des PCSC générés par le DSCM, ce sur la base de la Cartographie 3D Dynamique (3DM ) physiquement observée par le MLEMAT (89).

Le MLEMAT (89) pour le réglage automatique des DSR et/ou DSC de l'invention offre une solution technique au problème technique (d) ci-dessus. Il assure un réglage automatique des Paramètres d'Action de DSR (PASD) de la réduction douce dynamique (DSR) et/ou des Paramètres d'Action De DSC (PASC) du Refroidissement Dynamique Secondaire (DSC), d'une coulée en continu de Dalles d'Acier (105) dans une aciérie, basé sur l'état observé de l'intérieur de la Dalle d'Acier (105) coulée. Il fournit de manière continue une Cartographie 3D Dynamique (3DM) observée de l'intérieur la Dalle d'Acier (105) coulée. Il définit continument de manière observée en 3D l'emplacement de la Zone Molle Centrale (106) en fusion d'une Dalle d'Acier (105) et de ses défauts de ségrégation, basée sur une observation physique en 3D, et non simplement fournie par une prédiction de simulation numérique par des un algorithme théorique basés sur un modèle mathématique. Il détecte précisément, la position observée du point de réduction d'une Dalle d'Acier (105) coulées, basée sur une observation physique en 3D. Il améliore la précision et la fiabilité du réglage automatique des paramètres de la réduction dynamique douce (DNS) et du Refroidissement Dynamique Secondaire (DSC), d'un moulage en continu de Dalles d'Acier (105), à des températures supérieures à 1000°C. Il permet de réduire les défauts de ségrégation et la porosité dans la zone de Zone Molle Centrale (106) en fusion de la structure des Dalles d'Acier (105) pendant le processus de coulée continue dans une aciérie.

### Avantages apportés

Le MLEMAT (89) pour DSR et DSC de l'invention offre de précieux avantages industriels dans le contrôle automatisé non destructif des Dalles d'Acier coulées à chaud, dans l'industrie sidérurgique:
a. Il peut fonctionner à une température de coulée de Dalles d'Acier pouvant dépasser 1200 ° C.
b. Il peut effectuer la cartographie 3D continue des Dalles d'Acier coulées à une vitesse allant jusqu'à 1 mètre par seconde.
c. Il permet un transit direct entre la coulée d'acier et le laminage d'acier, sans avoir besoin de refroidir les Dalles d'Acier jusqu'à 100 ° C max pour procéder à leur NDT avec des instruments communs.
d. Il économise le gaz couramment utilisé pour réchauffer les Dalles d'Acier à 1200 ° C après NDT et avant le laminage de l'acier.
e. Il fournit une cartographie 3D observée en continu des Dalles d'Acier coulées, pour ajuster automatiquement et dynamiquement les paramètres de l'équipement de coulée continue.
f. Il identifie en continu, avec une haute définition et fiabilité, tous les types de discontinuités (internes et de surface) dans les Dalles d'Acier coulées, ainsi que leurs coordonnées.
g. Il améliore la standardisation, le contrôle de qualité, et la précision du classement par grade de qualité des Dalles d'Acier produites, et accroit la valeur ajoutée de la coulée en continu.
h. Il fournit un réglage précis automatique en temps réel des paramètres dynamiques pour la DSR et/ou la DSC d'une coulée en continu de Dalles d'Acier.
i. Il fournit une détection précoce des discontinuités dans les Dalles d'Acier, et il permet de manière automatique leur orientation éventuelle vers les processus de production précédents en fonction de leur qualité, en induisant des économies considérables en temps, en énergie, en matériaux et en travail.
j. Il augmente les performances et la productivité d'une machine de coulée d'acier de 7% ou plus.
k. Il peut être installé sans changements structurels importants dans l'équipement de moulage existant d'une aciérie, car il est compact.

### Application industrielle

L'invention présente des applications industrielles dans l'industrie métallurgique, et notamment dans l'industrie sidérurgique, pour le test de qualité et le réglage automatique de la DSR et/ou de la DSC de Dalles d'Acier chaudes à plus de 1000°C dans des lignes de coulée continue d'aciéries, et pour le contrôle de qualités de semi-produits de l' industrie sidérurgique. L'invention présente également des applications industrielles dans l'industrie ferroviaire, pour le contrôle à grande vitesse des rails chemins de fer, et le contrôle des essieux montés. L'invention présente également des applications industrielles dans l'industrie pétrolière et gazière, la chimie et l'industrie nucléaire, pour les essais en ligne de tuyaux et de pipelines, de dispositifs de forage et d'équipements dans des environnement dangereux et/ou à haute température.

Bien que seules certaines caractéristiques de l'invention aient été illustrées et décrites ici, de nombreuses modifications et changements apparaîtront à l'homme du métier dans la portée des revendications ci-jointes.

## Revendications

1. Un Transducteur Électromagnétique Acoustique (EMAT) (1) pour la détection de Discontinuités (2) de surface et internes dans un Matériau Inspecté (3) électriquement conducteur, comprenant:
a. Au moins un Aimant (4) ou un électro-aimant, configuré pour générer un Champ Magnétique Statique (SMF) ou quasi statique dans le Matériau Inspecté (3);
b. Au moins une Bobine Électrique HF (6), celle-ci étant du type
i. soit, configurée comme un Émetteur Électromagnétique HF (9) d'un Champ Électromagnétique Émis HF (HFEMF), si l'EMAT (1) est utilisé en Mode Émission (EM), et alors, elle est connectée à la sortie d'au moins une Source De Courant Alternatif (11), entraînant dans la Bobine Électrique HF (6) un Courant Alternatif HF (AC) à fréquence ultrasonique,
• induisant le Champ Électromagnétique Émis HF (HFEMF) en direction du Matériau Inspecté (3),
• produisant des Courant de Foucault Du Matériau (14) sur la surface du Matériau Inspecté (3),
• générant des Forces de Lorentz (15) à fréquence ultrasonique dans le Matériau Inspecté (3), par interaction des Courant de Foucault Du Matériau (14) avec le Champ Magnétique Statique (SMF) et/ou une Magnétostriction,
• dont la perturbation génère des Ondes Ultrasonores Primaires (17) directement dans le Matériau Inspecté (3);
ii. et/ou, soit configuré comme un Récepteur Électromagnétique HF (18), si l'EMAT (1) est utilisé en Mode Réception (RM), et alors, elle est parcourue par un Signal Électrique Ultrasonique Secondaire (88) à fréquence ultrasonique,
• généré par un Champ Électromagnétique Émis HF (HFEMF),
• induit par des Courants de Foucault Du Matériau (14) produits sur la Surface Inspectée (8) du Matériau Inspecté (3) par des Ondes Ultrasonores Secondaires (21), sous l'influence d'une source ultrasonique, en interaction avec le Champ Magnétique Statique (SMF), et qui sont représentatifs des Discontinuités (2) de surface et internes du Matériau Inspecté (3);
c. Au moins un Noyau Magnétique Laminé Matriciel Perforé (22), configuré pour concentrer et diriger le Champ Électromagnétique HF Émis (HFEMF) dans la direction ou en provenance du Matériau Inspecté (3); du type comprenant une Matrice (23) en sandwich,
i. constituée d'une multitude de Feuilles Minces (24) laminées empilées périodiquement le long de l' Axe De Matrice (25), ces Feuilles Minces (24) étant positionnées entre les deux Faces De Matrice (26) principale, la Matrice (23), parallèlement à son Plan D'Empilage (27),
ii. présentant de multiples Faces De Bordure (35) latérales adjacentes, s'étendant sensiblement perpendiculairement au Plan D'Empilage (27) et perpendiculaires à l'Axe De Matrice (25);
• l'une d'elles, la Première Face De Bordure (36) de la Matrice (23), faisant face à la Surface Inspectée (8) du Matériau Inspecté (3),
• et l'autre, la Seconde Face De Bordure (37) de la Matrice (23) étant située sensiblement à l'opposé à la Première Face De Bordure (36), et faisant face à la Bobine Électrique HF (6);
iii. chaque Feuille Mince (24) laminée de la Matrice (23)
• ayant une géométrie spatiale et des dimensions latérales similaires à celles des Feuilles Minces (24) voisines dans la Matrice (23); et,
• présentant deux Surfaces De Feuille (32) latérales principales, parallèles au Plan D'Empilage (27);
iv. dont les Bords Périphériques (33) adjacents successifs combinés de chaque Feuille Mince (24) constituent une Surface De Bordure (34) rainurée de la Matrice (23) sandwich, entourant l' Axe De Matrice (25), et,
v. définissant un Axe Du Noyau (38) de la Matrice (23), joignant sensiblement les centres de la Première Face De Bordure (36) et de la Seconde Face De Bordure (37); positionné sensiblement perpendiculairement à l'Axe De Matrice (25);
vi. Cette Matrice (23) en sandwich comprenant au moins une Première Multitude (28) de Plaquettes Actives HF (29) (ou groupes de telles plaquettes), chacune d'elles
• étant isolée l'une de l'autre,
• incorporant extérieurement un matériau électriquement conducteur; et/ou étant recouverte extérieurement d'une couche électriquement conductrice sur ses Bords Périphériques (33), et,
• incorporant intérieurement un Matériau Magnétique de type ferromagnétique ou ferrimagnétique, et de Température De Curie (TC);
Ce Transducteur Électromagnétique Acoustique (EMAT) (1) étant caractérisé en combinaison en ce que:
d. Il comporte une Ouverture Cylindrique Rainurée (39),
i. passant à travers chaque Feuille Mince (24) de la Matrice (23), le long d'un Axe d'Ouverture (40) de la Matrice (23), sensiblement parallèle à l'Axe De Matrice (25) et perpendiculaire à l'Axe Du Noyau (38), et ,
ii. débouchant sur chacune des deux Faces De Matrice (26) latérales;
e. Il comporte une multitude de Trous Via Magnétique (41),
i. de dimensions de section similaires,
ii. perforés à travers et sensiblement au centre de chacune des multiples Plaquette Active HF (29) ainsi évidées de la Matrice (23), selon un axe sensiblement parallèle à la Surface Inspectée (8),
iii. ayant une Enveloppe Longitudinale De Via Hole (42), le long de l' Axe d'Ouverture (40) de la Matrice (23), dont le périmètre latéral fermé, et,
iv. alignés pour former par leur alignement l'Ouverture Cylindrique Rainurée (39); et,
f. Il comporte une multitude de Boucles De Courant Induit (43) fermées qui, lorsque l'EMAT (1) est en fonctionnement, sont
i. induites par le Champ Électromagnétique Émis HF (HFEMF), qui est soit émis par le Courant Alternatif HF (AC) à fréquence ultrasonique dans la Bobine Électrique HF (6), et/ou émis par les Courant de Foucault Du Matériau (14) à fréquence ultrasonique dans le Matériel inspecté (3),
ii. situées à l'intérieur de la Peau de Plaquette Active (48) de la périphérie de chaque Plaquette Active HF (29) du Noyau Magnétique Laminé Matriciel Perforé (22),
iii. disposées selon une Cartographie De Boucles (LM), définissant la topologie et les positions relatives de l'ensemble des Boucles De Courant Induit (43);
g. Chaque Trou Via Magnétique (41) dans chaque Plaquette Active HF (29) est situé entre - la Première Face De Bordure (36) faisant face à la Surface Inspectée (8), et, la Seconde Face De Bordure (37) faisant face à la Bobine Électrique HF (6);
h. Chaque Trou Via Magnétique (41) de l'Ouverture Cylindrique Rainurée (39) est exempt intérieurement de tout matériau dur, et en particulier est exempt de tout conducteur électrique le traversant ;
i. La Cartographie De Boucles (LM) est topologiquement discrète et constituée d'une multitude répartie discrètement de Boucles De Courant Induit (43) de Plaquettes Actives HF (29) , (ou de groupes de telles Plaquettes Actives) distantes les unes des autres;
j. Les Boucles De Courant Induit (43) distantes (ou groupe de telles Boucles),
i. sont induites à l'intérieur de la Peau de Plaquette Active (48) sur les Bords Périphériques (33) des Plaquettes Actives HF (29),
ii. sont chacune agencés selon un plan de boucles parallèle au Plan D'Empilage (27), et sensiblement perpendiculairement à la surface du Matériau Inspecté (3),
iii. sont sensiblement parallèles, et séparés les unes des autres, entre leurs Plaquettes Active HF (29) respectives,
iv. encerclent les Trous Via Magnétique (41) de leur Plaquette Active HF (29) et tournent autour; et,
k. Chaque Tranche d'Espacement De Noyau (49) du Noyau Magnétique Laminé Matriciel Perforé (22) et de sa surface, localisée entre deux Plaquettes Actives HF (29) adjacentes (29) (ou groupe), est exempte Boucles De Courant Induit (43) ;
En sorte qu'un double effet physique combiné et interactif se produit à l'intérieur du Noyau Magnétique Laminé Matriciel Perforé (22):
I. Chacune des multiples Boucles De Courant Induit (43) parallèles et topologiquement discrètes de chaque Plaquette Active HF (29) évidée,
i. génère séparément un champ magnétique haute fréquence,
ii. accroît séparément et localement le couplage magnétique à haute fréquence discret et sélectif entre - une Fraction Active Locale (44) étroite de la Surface Inspectée (8) faisant face à la Plaquette Active HF (29), - et la Bobine Électrique HF (6), et,
iii. participe par mutualisation à la réduction globale de la réluctance magnétique à haute fréquence de l'EMAT (1);
m. Le Périmètre Interne (45) de chaque Trou Via Magnétique (41) dans chaque Plaquette Active HF (29) de la Matrice (23),
i. crée une Surface Thermo-Conductrice et Convective (46) libre interne au centre de sa Plaquette Active HF (29),
ii. produit un effet de Refroidissement Thermique interne pour dissiper une fraction de l'énergie électrique et calorifique locale générée par la Boucle De Courant Induit (43) de sa Plaquette Active HF (29) spécifique, et,
iii. participe par mutualisation à l'amélioration de l'efficacité de l'EMAT (1).

2. Un Transducteur Électromagnétique Acoustique (EMAT) (1) selon la revendication 1, dans lequel:
a. Chaque Plaquette Active HF (29) évidée de la Matrice (23) (ou groupe de telles Plaquettes Active) est séparée de ses voisines, au niveau des Tranches d'Espacement De Noyau (49) adjacentes, par au moins une feuille d'une Seconde Multitude (54) de Plaquettes Passives (53) constituées d'un Matériau Isolant électriquement;
b. Chaque Plaquette Passive (53) est perforée par un Trou Via Entretoise (57), et,
c. Chaque Plaquette Passive (53) est positionnée et configurée de telle sorte que:
i. les Trous Via Magnétique (41) dans la Première Multitude (28) de Plaquettes Actives HF (29) de la Matrice (23), ainsi que les Trous Via Entretoise (57) de la Seconde Multitude (54) de Plaquettes Passives (53) de la Matrice (23),
ii. sont alignés parallèlement à l'Axe De Matrice (25), pour former par leur alignement et leur combinaison l' Ouverture Cylindrique Rainurée (39);
Ce Transducteur Électromagnétique Acoustique (EMAT) (1) étant caractérisé en combinaison en ce que:
d. Chaque Trou Via Entretoise (57) dans chaque Plaquette Passive (53) est situé entre
i. la Première Face De Bordure (36) faisant face au Matériau Inspecté (3), et,
ii. la Seconde Face De Bordure (37) faisant face à la Bobine Électrique HF (6); et,
e. Chaque Trou Via Entretoise (57) de son Ouverture Cylindrique Rainurée (39),
i. est intérieurement exempt intérieurement de tout matériau dur,
ii. et en particulier est exempt de tout conducteur électrique le traversant;
En sorte que la périphérie interne de chaque Trou Via Entretoise (57) dans chaque Plaquette Passive (53) de la Matrice (23) crée
f. une Surface Thermo-Conductrice et Convective (46) libre interne au centre de la Plaquette Passive (53),
g. qui produit un effet de Refroidissement Thermique interne dans ce Trou Via Entretoise (57) pour dissiper une fraction de l'énergie électrique et calorifique générée par les Boucles De Courant Induit (43) des Plaquette Active HF (29) voisines, et participe par mutualisation à l'amélioration de l'efficacité de l'EMAT (1).

3. Un Transducteur Électromagnétique Acoustique (EMAT) (1) selon la revendication 2, **caractérisé en ce que**, pour au moins une Plaquette Passive (53) et de préférence pour toutes,
a. Les Bords Périphériques (33) de leurs pourtours sont exempts de tout matériau conducteur recouvrant leurs surfaces;
b. En sorte que la Surface De Bordure (34) rainurée du Noyau Magnétique Laminé Matriciel Perforé (22), est non pas recouverte continument et/ou constituée d'une couche conductrice électriquement, mais au contraire elle est constituée d'une alternance bords à bords d'une part d'anneaux conducteurs autour des Plaquette Actives HF (29) et d'autre part d'anneaux isolants autour des Plaquette Passive (53).

4. Un Transducteur Électromagnétique Acoustique (EMAT) (1) selon la revendication 1, du type comprenant également:
a. des Moyens De Refroidissement (58)
i. générant un Flux Calorifique (59) d'un Fluide Calorifique (60) à une Température De Refroidissement (TF),
ii. configurés pour que le Flux Calorifique (59) soit forcé à passer à travers l'Ouverture Cylindrique Rainurée (39) de la Matrice (23);
Ce Transducteur Électromagnétique Acoustique (EMAT) (1) étant caractérisé en combinaison en ce que:
b. Le Flux Calorifique (59) est configuré
i. pour traverser successivement au moins un Trou Via Magnétique (41) de la Première Multitude (28) et, alternativement au moins un de Trous Via Entretoise (57) de la Seconde Multitude (54),
ii. pour lécher la totalité des Surfaces De Paroi De Trou (62) de chaque Trou Via Magnétique successif (41) et/ou de chaque Trou Via Entretoise (57) de la Matrice (23),
iii. pour augmenter l'effet de refroidissement thermique interne dans chaque Plaquette Active HF (29) de la Matrice (23); chacune d'elles étant assujettie à une Boucle De Courant Induit (43) et une dissipation de chaleur; et,
c. La Température De Refroidissement (TF) du Flux Calorifique (59) est inférieure de plus de 50° C à la Température De Curie (TC) spécifique du Matériau Magnétique de chaque Plaquette Active HF (29) évidée.

5. Un Transducteur Électromagnétique Acoustique (EMAT) (1) selon la revendication 4, **caractérisé en ce que**, en combinaison:
a. Au moins une (et de préférence une multitude de) Feuilles Mince(s) (24) du Noyau Magnétique Laminé Matriciel Perforé (22)
i. est - soit percé par un Trou De Coussin (63), - soit, pourvu d'une Entaille De Coussin (64), passant à travers le Mur Annulaire (65) ménagé entre leur Trous Via (41, 57), et la portion de leur Première Face De Bordure (36) faisant face au Matériau Inspecté (3), ce dans une direction parallèle au Plan D'Empilage (27),
ii. pour créer un Évidement De Coussin (66) entre les Trous Via (41, 57) de la Feuille Mince (24) et la Première Face De Bordure (36) faisant face au Matériau Inspecté (3); et,
b. Les Moyens De Refroidissement (58) sont configurés pour
i. extraire un Écoulement Fluide Coussin (67) du Flux Calorifique (59) parcourant les Trous Via (41, 57),
ii. écouler sous pression cet Écoulement Fluide Coussin (67) extrait à travers l'Évidement De Coussin (66),
iii. créer un Coussin d'Air (70) de levage entre le Noyau Magnétique Laminé Matriciel Perforé (22) et le Matériau Inspecté (3), au niveau de l'Évidement De Coussin (66) faisant face au Matériau Inspecté (3), et,
iv. ainsi soulever le Noyau Magnétique Laminé Matriciel Perforé (22) du Matériau Inspecté (3) d'un Écartement De Coussin (68).

6. Un Transducteur Électromagnétique Acoustique (EMAT) (1) selon la revendication 1, **caractérisé en ce que**, en combinaison:
a. Les deux Surfaces De Feuille (32) externes des deux Feuilles Minces externes situées sur les Faces De Matrice (26) sont soit constituées, soit recouvertes par une Couche De Couverture Conductrice (69), d'un matériau conducteur électrique;
b. Ce Transducteur Électromagnétique Acoustique (EMAT) (1) étant caractérisé en combinaison **en ce que**:
c. Un trou via de dimensions transversales similaires à celles des Trous Via Magnétique (41) est perforé à travers chacune des deux Couches De Couverture Conductrice (69);
d. Les multiples Feuilles Minces (24) et les deux Couches De Couverture Conductrice (69) de la Matrice (23) sont positionnées les unes par rapport aux autres, de sorte que leurs multiples trous via sont alignés pour former par continuité l' Ouverture Cylindrique Rainurée (39).

7. Un Transducteur Électromagnétique Acoustique (EMAT) (1) selon la revendication 1, **caractérisé en ce que**:
a. Le périmètre de chaque Trous Via Magnétique (41) dans chaque Plaquette Active HF (29) est rectangulaire.

8. Un Transducteur Électromagnétique Acoustique (EMAT) (1) selon la revendication 7, **caractérisé en ce que**, en combinaison:
a. Le centre de chaque Trou Via Magnétique (41) est sensiblement situé au centre de gravité de sa Plaquette Active HF (29); et,
b. Le périmètre de chaque trou de chaque Trou Via Magnétique (41) est disposé sensiblement à une Distance d'Anneau (Rd) constante du périmètre de sa Plaquette Active HF (29);
c. En sorte que chaque Plaquette Active HF (29) est topologiquement configurée comme un Anneau Actif (71) rectangulaire, refroidi thermodynamiquement de l'échauffement de la Boucle De Courant Induit (43) générée autour d'elle.

9. Un Transducteur Électromagnétique Acoustique (EMAT) (1) selon la revendication 1, caractérisé en combinaison en ce que:
a. la Seconde Face De Bordure (37) du Noyau Magnétique Laminé Matriciel Perforé (22) fait directement face à la Bobine Électrique HF (6), et,
b. aucun Aimant n'est positionné entre - d'un côté la Seconde Face De Bordure (37) de la Matrice (23) et - de l'autre côté la Bobine Électrique HF (6).

10. Un Transducteur Électromagnétique Acoustique (EMAT) (1) selon la revendication 1, caractérisé en combinaison en ce que:
a. l'orientation, le pas, la taille et la forme de chacun des Bords Face Circuit (72) de chaque Plaquette Active HF (29), situés dans la Seconde Face De Bordure (37) de la Matrice (23), et faisant face à la Bobine Électrique HF (6) ;
b. sont cohérents et corrélés avec les paramètres géométriques, y compris l'orientation, le pas, la taille et la forme, des Fractions De Conducteur (75) de la Bobine Électrique HF (6) faisant successivement face à chacun de ces Bords Face Circuit (72).

11. Un Transducteur Électromagnétique Acoustique (EMAT) (1) selon la revendication 10, dans lequel:
a. La Bobine Électrique HF (6) présente au moins une partie de Conducteur Linéaire (73); et,
b. Cette partie de Conducteur Linéaire (73), est positionnée à proximité et directement au-dessus d'un Bord Face Circuit (72), et est tangente le long d'un axe parallèle à cette partie voisine du périmètre d'une Plaquette Active HF (29) située dans la Seconde Face De Bordure (37) de la Matrice (23) faisant face à la Bobine Électrique HF (6) ;
Ce Transducteur Électromagnétique Acoustique (EMAT) (1) étant caractérisé en combinaison en ce que la fraction de Conducteur Linéaire (73) et le Noyau Magnétique Laminé Matriciel Perforé (22) sont configurés de telle sorte que, lorsque que l'EMAT (1) est en fonctionnement, une Boucle De Courant Induit (43)
c. est induite dans la Peau de Plaquette Active (48) sur le pourtour de la Plaquette Active HF (29),
d. entoure son Trou Via Magnétique (41),
e. en sorte que cela réalise un couplage magnétique HF sélectif local entre :
i. un Courant Alternatif HF (AC) entraîné dans le Conducteur Linéaire (73) s'étendant sur et le long du périmètre de la Plaquette Active HF (29) (29), et,
ii. des Courant de Foucault Du Matériau (14) générés dans la Fraction Active Locale (44) étroite de la Surface Inspectée (8) faisant face à la Plaquette Active HF (29).

12. Un Transducteur Électromagnétique Acoustique (EMAT) (1) selon la revendication 11, dans lequel:
a. La Bobine Électrique HF (6) est du type présentant une multitude de (au moins deux) fractions de Conducteur Linéaire (73); parallèles et voisins les uns aux autres, tel un Circuit Méandre (74),
b. Ces multiples fractions de Conducteur Linéaire (73) parallèles sont
i. positionnées successivement à proximité, et directement au-dessus d'un Bord Face Circuit (72) d'une Plaquette Active HF (29), situé dans la Seconde Face De Bordure (37) de la Matrice (23) faisant face à la Bobine Électrique HF (6), et,
ii. configurés afin que le courant alternatif (AC) parcourant successivement des fractions de Conducteur Linéaire (73) parallèles et voisines soit orienté dans des directions opposées alternées;
c. Au moins une Boucle De Flux Magnétique HF De Conducteur (76) entoure sensiblement perpendiculairement chaque fraction de Conducteur Linéaire (73), et pénètre sensiblement perpendiculairement à l'intérieur de Plaquette Active HF (29) qui lui fait face ;
Ce Transducteur Électromagnétique Acoustique (EMAT) (1) étant **caractérisé en ce que** les fractions de Conducteur Linéaire (73) de la Bobine Électrique HF (6) et le Noyau Magnétique Laminé Matriciel Perforé (22) sont configurés de telle sorte que lorsque l'EMAT (1) est Mode Émission (EM) :
d. Deux Plaquette Active HF (29) voisines, surmontées par deux fractions de Conducteur Linéaire (73) voisins,
e. Sont parcourues dans leur Peau de Plaquette Active (48) par deux Boucles De Courant Induit (43) voisines, composées chacune d' un courant électrique alternatif HF tournant dans un Sens De Rotation (78) opposé, autour de l'Axe d'Ouverture (40) passant à travers leurs Trous Via Magnétique (41), l'un étant dans le sens horaire, tandis que l'autre est dans le sens antihoraire.

13. Un Transducteur Électromagnétique Acoustique (EMAT) (1) selon la revendication 1, **caractérisé en ce que**, en combinaison:
a. la Profondeur d'Ouverture (Od) de l'Ouverture Cylindrique Rainurée (39) de son Noyau Magnétique Laminé Matriciel Perforé (22), le long de son Axe d'Ouverture (40),
b. est sensiblement égale et cohérente avec une Première Dimension Transversale (FTd) d'au moins une Bobine Électrique HF (6) de l'EMAT (1).

14. Un Transducteur Électromagnétique Acoustique (EMAT) (1) selon la revendication 1, **caractérisé en ce que**, en combinaison:
a. la Seconde Face De Bordure (37) rainurée de son Noyau Magnétique Laminé Matriciel Perforé (22), faisant face à une Bobine Électrique HF (6),
b. a une dimension transversale, dans une direction perpendiculaire à l' Axe d'Ouverture (40) de la Matrice (23), qui sensiblement égale et cohérente avec une Seconde Dimension Transversale (STd) d'au moins une Bobine Électrique HF (6) de l'EMAT (1).

15. Un Transducteur Électromagnétique Acoustique (EMAT) (1) selon la revendication 1, **caractérisé en ce que**, en combinaison, les dimensions géométriques des Feuilles Minces (24) perforées de son Noyau Magnétique Laminé Matriciel Perforé (22) et/ ou les dimensions géométriques combinées de son Noyau Magnétique Laminé Matriciel Perforé (22) sont sélectionnées pour:
a. Être décorrélées des longueurs d'onde des principales harmoniques du Champ Électromagnétique Émis HF (HFEMF), et,
b. Empêcher une résonnance mécanique de son Noyau Magnétique Laminé Matriciel Perforé (22) à la fréquence ultrasonore d'opération de l'EMAT (1).

16. Un Transducteur Électromagnétique Acoustique (EMAT) (1) selon la revendication 1, **caractérisé en ce que**, en combinaison, les dimensions géométriques des Feuilles Minces (24) perforées de son Noyau Magnétique Laminé Matriciel Perforé (22) sont, à la fréquence ultrasonore d'opération de l'EMAT (1) :
a. Soit, inférieures aux longueurs d'onde des ondes ultrasonores générées dans ces Feuilles Minces (24),
b. Soit, sensiblement égales à un nombre impair de quarts des longueurs d'onde des ondes ultrasonores générées dans ces Feuilles Minces (24).

17. Un Transducteur Électromagnétique Acoustique (EMAT) (1) selon la revendication 1, du type dont la Première Face De Bordure (36) rainurée du Noyau Magnétique Laminé Matriciel Perforé (22), faisant face au Matériau Inspecté (3) et parallèle à l'Ouverture Cylindrique Rainurée (39) est couverte d'une Couche Isolante (81), constituée d'un matériau électriquement isolant; cet EMAT (1) étant caractérisé en combinaison en ce qu'en outre une des faces de la Couche Isolante (81)
a. Est disposée du côté de l' Ouverture Cylindrique Rainurée (39), et,
b. Recouvre, sur le bord appartenant à la Première Face De Bordure (36), le périmètre de chacune des Plaquettes Active HF (29) perforées.

18. Une Sonde Laser-EMAT (LEMAT) (82), pour inspecter un Matériau Inspecté (3) conducteur, en recevant un signal ultrasonique de ce Matériau Inspecté (3), comprenant la combinaison de:
a. Un Transducteur Électromagnétique Acoustique (EMAT) (1) selon l'une quelconque des revendications 1 à 17,
i. configuré en Mode Réception (RM), pour recevoir un signal ultrasonique du Matériau Inspecté (3),
ii. dont la Bobine Électrique HF (6) est configurée comme un Récepteur Électromagnétique HF (18),
• induite par un Champ Électromagnétique Émis HF (HFEMF) émis par le Matériau Inspecté (3),
• généré par des Courant de Foucault Du Matériau (14), produits dans le Matériau Inspecté (3) par des Ondes Ultrasonores Secondaires (21), représentatives des Discontinuités (2) de surface et/ou internes du Matériau Inspecté (3), et,
iii. dont le Noyau Magnétique Laminé Matriciel Perforé (22)
• est situé entre la Bobine Électrique HF (6) de l'EMAT (1) et la surface locale du Matériau Inspecté (3), et,
• fait face directement la Bobine Électrique HF (6);
b. Une Source Laser (84) configurée pour:
i. tirer un Faisceau Laser (85) à haute énergie en un Point De Tir (86) de la surface du Matériau Inspecté (3),
ii. générer des ondes ultrasoniques produisant des Ondes Ultrasonores Primaires (17) se propageant sur la surface et/ou à l'intérieur du Matériau Inspecté (3), et,
iii. provoquer la génération d'Ondes Ultrasonores Secondaires (21) résultant des interactions des Ondes Ultrasonores Primaires (17) avec les Discontinuités (2) sur et/ou à l'intérieur du Matériau Inspecté (3), se propageant sur la surface et/ou à l'intérieur du Matériau Inspecté (3),
iv. provoquer la génération de Courants de Foucault Du Matériau (14) en surface du Matériau Inspecté (3), induits par les vibrations mécaniques des Ondes Ultrasonores Secondaires (21) sous l'influence du Champ Magnétique Statique (SMF) généré par l'Aimant (4) de l'EMAT (1), et,
v. provoquer l'induction d'un Champ Électromagnétique Émis HF (HFEMF) émis par les Courants de Foucault Du Matériau (14) présents en surface du Matériau Inspecté (3), représentatif de la géométrie et de la position des Discontinuités (2) de la surface et internes du Matériau Inspecté (3);
Cette Sonde Laser-EMAT (LEMAT) (82) étant **caractérisée en ce que**:
c. Une multitude de Boucles De Courant Induit (43) parallèles et distantes,
i. sont induites par le Champ Électromagnétique Émis HF (HFEMF) émis par les Courant de Foucault Du Matériau (14) à fréquence ultrasonore du Matériau Inspecté (3) sous l'influence de la Source Laser (84),
ii. à l'intérieur de la Peau de Plaquette Active (48) sur les Bords Périphériques (33) de chaque Plaquette Active HF (29) du Noyau Magnétique Laminé Matriciel Perforé (22);
d. Ces Boucles De Courant Induit (43) de chaque Plaquette Active HF (29)
i. sont éloignées les unes des autres,
ii. sont chacune agencée selon un plan de boucles parallèle au Plan D'Empilage (27), et sensiblement perpendiculairement à la surface du Matériau Inspecté (3);
iii. entourent et tournent autour des Trous Via Magnétique (41) de leur Plaquette Active HF (29);
iv. sont situées entre la Première Face De Bordure (36) faisant face au Matériau Inspecté (3) et la Seconde Face De Bordure (37) face Bobine Électrique HF (6), et
v. sont positionnées sensiblement perpendiculairement aux deux Faces De Bordures (36, 37);
En sorte qu'un double effet physique combiné et interactif se produit à l'intérieur du Noyau Magnétique Laminé Matriciel Perforé (22):
e. Chacune des multiples Boucles De Courant Induit (43) parallèles et topologiquement discrètes de chaque Plaquette Active HF (29),
i. génère séparément un champ magnétique haute fréquence,
ii. accroit séparément, localement et discrètement le couplage magnétique à haute fréquence entre - une Fraction Active Locale (44) étroite de la Surface Inspectée (8) faisant face à sa Plaquette Active HF (29), - et la Bobine Électrique HF (6), et,
iii. homogénéise le couplage à haute fréquence, et participe par mutualisation à la réduction globale de la réluctance magnétique à haute fréquence, et à l'accroissement de la résolution de l'EMAT (1);
f. Le Périmètre Interne (45) de chaque Trou Via Magnétique (41) dans chaque Plaquette Active HF (29) de la Matrice (23),
i. crée une Surface Thermo-Conductrice et Convective (46) libre interne au centre de sa Plaquette Active HF (29), et,
ii. produit un effet de Refroidissement Thermique interne pour dissiper une fraction de l'énergie électrique et calorifique locale générée par la Boucle De Courant Induit (43) de sa Plaquette Active HF (29) spécifique, et,
iii. participe par mutualisation à l'amélioration de l'efficacité de l'EMAT (1).

19. Un Scanner 3D Multi Laser-EMAT (MLEMAT) (89), pour la détection de Discontinuités (2) de surface et/ou internes à l'intérieur d'une Structure Conductrice (90) cylindrique mobile, comprenant la combinaison de:
a. Une Structure Conductrice (90) à scanner en 3D,
i. faite d'un Matériau Inspecté (3) électriquement conducteur,
ii. ayant une structure cylindrique générée le long d'un Axe De Structure (91),
iii. ayant une Section De Structure (92) sensiblement constante;
b. Un Cadre Châssis (93),
i. configuré pour entourer la Structure Conductrice (90) à une Distance De Trame (Fd),
ii. dont le Plan De Cadre (95) est sensiblement perpendiculaire à l'Axe De Structure (91) de la Structure Conductrice (90);
c. Une Multitude De Sondes (96) faite d'au moins deux Sondes Laser-EMAT (LEMAT) (82) selon la revendication 18, chacune des Sondes Laser-EMAT (82) étant
i. fixée sur le Cadre Châssis (93), et,
ii. positionnées et configurées de telle sorte que chacune des Premières Face De Bordure (36) de leur Noyau Magnétique Laminé Matriciel Perforé (22) soit en face de la Structure Conductrice (90);
d. Des Moyens De Déplacement (97) configurés pour déplacer linéairement
i. la Structure Conductrice (90) cylindrique par rapport au Cadre Châssis (93),
ii. selon une Direction De Déplacement (Md), sensiblement confondue avec l'Axe De Structure (91);
Ce Scanner 3D Multi Laser-EMAT (MLEMAT) (89) étant **caractérisé en ce que**:
e. la Boucle d'Ouvertures (99),
i. constituée par la ligne virtuelle joignant les centres de chaque Ouverture Cylindrique Rainurée (39) successive des Noyau Magnétique Laminé Matriciel Perforé (22) de chaque EMAT (1) adjacent des Sondes Laser-EMAT (LEMAT) (82) du MLEMAT (89),
ii. encercle la Structure Conductrice (90).

20. Un Scanner 3D Multi Laser-EMAT (MLEMAT) (89) selon la revendication 19, caractérisé en combinaison en ce que sa Multitude De Sondes (96) faite de Laser-EMAT (82) sont fixées sur le Cadre Châssis (93) positionnées et configurées dans une position telle que:
a. La juxtaposition de la multitude de Premières Faces De Bordure (36) voisines des Noyaux Magnétique Laminé Matriciel Perforé (22) de ses Sonde Laser-EMAT (LEMAT) (82) adjacentes, faisant face au Matériau Inspecté (3), sont sensiblement contiguës les unes aux autres ; et,
b. Elle constitue une Bague D'inspection (100) rainurée sensiblement continue, entourant et couvrant le périmètre de la Structure Conductrice (90), dans une Section De Structure (92) de la Structure Conductrice (90) voisine du Plan De Cadre (95).

21. Un Scanner 3D Multi Laser-EMAT (MLEMAT) (89) selon la revendication 19, du type dont
a. La Source Laser (84) de chaque LEMAT (82) est constituée d'une Fibre Optique (101), fixée sur le Cadre Châssis (95), ayant une Extrémité De Tir (102) faisant face à la Structure Conductrice (90); et,
b. Chaque Fibre Optique (101) est connectée à un Générateur Laser (103);
Ce Scanner 3D Multi Laser-EMAT (MLEMAT) (89) étant **caractérisé en ce que** la Boucle De Tir Laser (104),
c. constituée par la ligne virtuelle joignant les Extrémités de Tir (102) de chaque Sonde Laser-EMAT (LEMAT) (82) adjacente du MLEMAT (89),
d. encercle la Structure Conductrice (90) et est sensiblement parallèle à la Boucle d'Ouvertures (99).

22. Un Scanner 3D Multi Laser-EMAT (MLEMAT) (89) selon la revendication 19, pour la détection de Discontinuités (2) de surface et/ou internes d'une Dalle Métallurgique (105), dans laquelle:
a. La Structure Conductrice (90) est une Dalle Métallurgique (105) cylindrique mobile par rapport au MLEMAT (89) ;
Ce Scanner 3D Multi Laser-EMAT (MLEMAT) (89) étant **caractérisé en ce que**:
b. La Boucle d'Ouvertures (99),constituée par la ligne virtuelle joignant les centres de chaque Ouverture Cylindrique Rainurée (39) successive du Noyau Magnétique Laminé Matriciel Perforé (22) de chaque EMAT (1) adjacent des Sondes Laser-EMAT (LEMAT) (82) du MLEMAT (89), encercle la Dalle Métallurgique (105) cylindrique mobile.

23. Un Scanner 3D Multi Laser-EMAT (MLEMAT) (89) selon la revendication 22, pour la détection de Discontinuités (2) de surface et/ou internes d'une Dalle d'Acier (105), du type dont:
a. La Structure Conductrice (90) est une Dalle d'Acier (105) cylindrique mobile; coulée en continu dans une aciérie à une Température De Coulée (TS) supérieure à 1000 ° C, et,
b. Les Plaquettes Actives HF (29) évidées de chaque Noyau Magnétique Laminé Matriciel Perforé (22) de chaque EMAT adjacent (1) du MLEMAT (89) sont constituées d'un Matériau Magnétique, ferromagnétique ou ferrimagnétique, ayant une Température De Curie (TC) inférieure à la Température De Coulée (TS);
Ce Scanner 3D Multi Laser-EMAT (MLEMAT) (89) étant caractérisé en combinaison en ce que chaque Ouverture Cylindrique Rainurée (39) de chaque Noyau Magnétique Laminé Matriciel Perforé (22) de chaque EMAT (1) adjacent du MLEMAT ( 89), est connectée à des Moyens De Refroidissement (58) générant un Flux Calorifique (59) d'un Fluide Calorifique (60) de refroidissement,
c. poussé sous pression à l'intérieur de chaque trou via (41, 57) de l' Ouverture Cylindrique Rainurée (39) de chaque Noyau Magnétique Laminé Matriciel Perforé (22) de chaque EMAT (1) adjacent du MLEMAT (89);
d. à une Température De Refroidissement (TF) inférieure de plus de 50° C à la Température de Curie (TC) du Matériau Magnétique des Plaquette Active HF(29) évidées.

24. Un Scanner 3D Multi Laser-EMAT (MLEMAT) (89) selon la revendication 23, pour le réglage automatique des paramètres dynamiques de la Réduction Dynamique Douce (DSR) d'une Dalle d'Acier (105) coulée en continu dans une aciérie à une Température De Coulée (TS) supérieure à 1000 ° C, du type dont:
a. La Dalle D'acier (105) est continuellement poussée à travers un Dispositif De Réduction Dynamique Douce (DSRD), pour supprimer la formation d'une zone de macro-ségrégation et de zones de porosité à l'intérieur de la Dalle d'Acier (105), en compensant dynamiquement le retrait de solidification de l'acier et en interrompant le débit d'aspiration du métal fondu résiduel dans la Zone Molle Centrale (106);
b. Le MLMAT (89) est couplé à ce Dispositif De Réduction Dynamique Douce (DSRD) qui comprend :
i. Un Système Dynamique De Cartographie 3D (3DMS), générant une Cartographie 3D Dynamique (3DM) de la coulée de la Dalle d'Acier (105),
ii. Un Système d'Optimisation De DSR (DSRM) informatisé, générant des Paramètres D'optimisation Dynamique De DSR (PCSD), basés la Cartographie 3D Dynamique (3DM) et sur les paramètres de coulée, et,
c. Un Activateur Numérique De DSR (ASR), ajustant dynamiquement les Paramètres d'Action De DSR (PASD) du Dispositif De Réduction Dynamique Douce (DSRD), en fonction des PCSD générés par le DSRM;
Ce Scanner 3D Multi Laser-EMAT (MLEMAT) (89) étant caractérisé en combinaison en ce que :
d. Les Bobine Électrique HF (6a, 6b, 6) de chaque EMAT (1a, 1b, 1) de chaque Laser-EMAT (82a, 82b, 82) du MLEMAT (89) sont chacune connectées au Système Dynamique De Cartographie 3D (3DMS), et lui transmettent un signal de leur Signal Électrique Ultrasonique Secondaire (88a, 88b, 88) induit dans chaque Bobine Électrique HF (6a, 6b, 6) par les Courant de Foucault Du Matériau (14) sur la Zone Frontale (110) du Matériau Inspecté (3) de la Dalle d'Acier (105) faisant face localement à chaque EMAT (1a, 1b,1) ;
e. Le Système d'Optimisation De DSR (DSRM) est doté de Moyens De Traitement Analogique Et Numérique (MDAN) configurés pour
i. Recevoir la multitude des Signaux Électriques Ultrasoniques Secondaires (88a, 88b, 88) inclus dans les Courants Electriques Ultrasoniques Secondaires (19a, 19b, 19) parcourant chaque Bobine Électrique HF (6a, 6b, 6) dans chaque Laser-EMAT (82a, 82b, 82) du MLEMAT (89), et,
ii. Identifier les changements et les perturbations dans chaque Signal Électrique Ultrasonique Secondaire (88a, 88b, 88) de chaque Laser-EMAT (82a, 82b, 82), causés par les Discontinuités (2) dans la Fraction Active Locale (44a, 44b, 44) du Matériau Inspecté (3) faisant face à chaque Laser-EMAT (82a, 82b, 82), et en déduire et générer numériquement la Topologie Frontale de Défauts (DTa, DTb, DT) dans cette Fraction Active Locale (44a, 44b, 44), et,
iii. Combiner numériquement les Topologie Frontale de Défauts (DTa, DTb, DT), et générer numériquement une Cartographie 3D Dynamique (3DM) tridimensionnelle physiquement observée par le MLEMAT (89) de l'intérieur de la coulée de la Dalle d'Acier (105), dans la Zone Frontale (110) faisant face à la Bague D'inspection (100) dans la Section de Structure (92) du Plan De Cadre (95), basée sur la combinaison et l'analyse numérique de signaux combinées des multiples Signaux Électriques Ultrasoniques Secondaires (88a, 88b, 88) ; et,
f. Les Moyens De Refroidissement (58) génèrent un Flux Calorifique (59) d'un Fluide Calorifique (60) de refroidissement,
i. poussé sous pression à l'intérieur de chaque trou via (41, 57) de l' Ouverture Cylindrique Rainurée (39) de chaque Noyau Magnétique Laminé Matriciel Perforé (22) de chaque EMAT (1a, 1b, 1) adjacent du MLEMAT (89);
ii. à une Température De Refroidissement (TF) nettement inférieure (d'au moins 50°C) à la Température de Curie (TC) du Matériau Magnétique des Plaquette Active HF(29) évidées ;
g. En sorte que les Paramètres d'Action De DSR (PASD) du Dispositif De Réduction Dynamique Douce (DSRD) puissent être ajusté dynamiquement et automatiquement de manière optimale, sur la base d'une Cartographie 3D Dynamique (3DM) de la coulée de la Dalle d'Acier (105) observée physiquement par le MLEMAT (89), ce à une Température De Coulée (TS) supérieure à 1000 ° C.

25. Un Scanner 3D Multi Laser-EMAT (MLEMAT) (89) selon la revendication 24, pour le réglage automatique des paramètres dynamiques de la Réduction Dynamique Douce (DSR) et pour le Refroidissement Dynamique Secondaire (DSC) d'une Dalle d'Acier (105) coulée en continu dans une aciérie à une Température De Coulée (TS) supérieure à 1000 ° C, **caractérisé en ce que** le MLMAT (89) est couplé à un Dispositif De Refroidissement Dynamique Secondaire (DSCD) qui comprend en outre:
a. Un Système d'Optimisation De DSC (DSCM) informatisé, générant des Paramètres D'optimisation Dynamique De DSC (PCSC) du Refroidissement Dynamique Secondaire (DSC) basés
i. sur la Cartographie 3D Dynamique (3DM ) physiquement observée de la coulée de la Dalle d'Acier (105), dans la Section de Structure (92) du Plan De Cadre (95), par combinaison et analyse numérique des signaux combinés des multiples Signaux Électriques Ultrasonique Secondaire (88a, 88b, 88) dans chaque Laser-EMAT (82a, 82b, 82) du MLEMAT (89),
ii. et sur les paramètres de coulée;
b. Un Activateur Numérique De DSC (ASC), ajustant dynamiquement les Paramètres d'Action De DSC (PASC) du débit d'eau du Refroidissement Dynamique Secondaire (DSC), en fonction des PCSC générés par le Système d'Optimisation De DSC (DSCM) sur la base de la Cartographie 3D Dynamique (3DM ) observée physiquement par le MLEMAT(89).

## Patentansprüche

1. Ein elektromagnetisch-akustischer Wandler (EMAT) (1) zur Detektion von Oberflächen- und inneren Unregelmäßigkeiten (2) in einem elektrisch leitfähigen zu untersuchenden Material (3), umfassend:
a. Mindestens einen Magneten (4) oder Elektromagneten, der so konfiguriert ist, dass er ein statisches oder quasistatisches Magnetfeld (SMF) im zu untersuchenden Material (3) erzeugt;
b. Mindestens eine Hochfrequenz-Spule (HF) (6), die so konfiguriert ist,
i. entweder als Hochfrequenz-Elektromagnetischer Sender (9) eines ausgesendeten Hochfrequenz-Magnetfelds (HFEMF), wenn der EMAT (1) im Sendemodus (EM) verwendet wird, und dann ist sie mit der Ausgang eines mindestens einen Wechselstromquelle (11) verbunden, was in der Hochfrequenz-Spule (HF) (6) einen Hochfrequenz-Wechselstrom (AC) mit Ultraschallfrequenz induziert,
• der das ausgesendete Hochfrequenz-Magnetfeld (HFEMF) in Richtung des zu untersuchenden Materials (3) induziert,
• der Wirbelströme im Material (14) auf der Oberfläche des zu untersuchenden Materials (3) erzeugt,
• der Lorentz-Kräfte (15) mit Ultraschallfrequenz im zu untersuchenden Material (3) erzeugt, durch Interaktion der Wirbelströme im Material (14) mit dem statischen Magnetfeld (SMF) und/oder durch Magnetostriktion,
• deren Störung Ultraschall-Primärwellen (17) direkt im zu untersuchenden Material (3) erzeugt;
ii. und/oder als Hochfrequenz-Empfänger (18), wenn der EMAT (1) im Empfangsmodus (RM) verwendet wird, und dann wird sie von einem sekundären Ultraschall-Elektrosignal (88) mit Ultraschallfrequenz durchlaufen,
• das durch ein ausgesendetes Hochfrequenz-Magnetfeld (HFEMF) erzeugt wird,
• das durch Wirbelströme im Material (14) induziert wird, die auf der untersuchten Oberfläche (8) des zu untersuchenden Materials (3) durch sekundäre Ultraschallwellen (21) erzeugt werden, unter dem Einfluss einer Ultraschallquelle, in Wechselwirkung mit dem statischen Magnetfeld (SMF), und die repräsentativ für die Oberflächen- und inneren Unregelmäßigkeiten (2) des zu untersuchenden Materials (3) sind;
c. Mindestens einen laminierten perforierten Matrix-Magnetkern (22), der so konfiguriert ist, dass er das ausgesendete Hochfrequenz-Magnetfeld (HFEMF) in Richtung des zu untersuchenden Materials (3) konzentriert und leitet; der eine Sandwich-Matrix (23) umfasst,
i. bestehend aus einer Vielzahl dünner laminierten Blätter (24), die periodisch entlang der Matrix-Achse (25) gestapelt sind, wobei diese dünnen Blätter (24) zwischen den beiden Haupt-Matrixflächen (26) der Matrix (23) parallel zu ihrer Stapelungsebene (27) positioniert sind,
ii. die mehrere seitliche Randflächen (35) aufweisen, die sich im Wesentlichen senkrecht zur Stapelungsebene (27) und senkrecht zur Matrix-Achse (25) erstrecken;
• wobei eine davon, die erste Randfläche (36) der Matrix (23), zur untersuchten Oberfläche (8) des zu untersuchenden Materials (3) zeigt,
• und die andere, die zweite Randfläche (37) der Matrix (23), im Wesentlichen gegenüber der ersten Randfläche (36) liegt und zur Hochfrequenz-Spule (HF) (6) zeigt;
iii. wobei jedes laminierte dünne Blatt (24) der Matrix (23)
• eine räumliche Geometrie und ähnliche seitliche Abmessungen wie die benachbarten dünnen Blätter (24) in der Matrix (23) hat; und,
• zwei Hauptblattflächen (32) aufweist, die parallel zur Stapelungsebene (27) sind;
iv. wobei die kombinierten benachbarten peripheren Ränder (33) jedes dünnen Blattes (24) eine gerillte Randfläche (34) der Sandwich-Matrix (23) bilden, die die Matrix-Achse (25) umgibt, und,
v. die eine Kernachse (38) der Matrix (23) definiert, die im Wesentlichen die Mittelpunkte der ersten Randfläche (36) und der zweiten Randfläche (37) verbindet; im Wesentlichen senkrecht zur Matrix-Achse (25) positioniert;
vi. wobei diese Sandwich-Matrix (23) mindestens eine erste Vielzahl (28) von HF-Aktivplättchen (29) (oder Gruppen solcher Plättchen) umfasst, von denen jedes
• voneinander isoliert ist,
• außen ein elektrisch leitfähiges Material enthält; und/oder außen mit einer elektrisch leitfähigen Schicht auf seinen peripheren Rändern (33) bedeckt ist, und,
• innen ein ferromagnetisches oder ferrimagnetisches Material mit einer Curie-Temperatur (TC) enthält;
Dieser elektromagnetisch-akustische Wandler (EMAT) (1) ist **dadurch gekennzeichnet, dass** er in Kombination
d. eine gerillte zylindrische Öffnung (39) aufweist,
i. die durch jedes dünne Blatt (24) der Matrix (23) entlang einer Öffnungsachse (40) der Matrix (23), die im Wesentlichen parallel zur Matrix-Achse (25) und senkrecht zur Kernachse (38) ist, verläuft, und,
ii. die auf jeder der beiden seitlichen Matrixflächen (26) mündet;
e. eine Vielzahl von magnetischen Via-Löchern (41) aufweist,
i. mit ähnlichen Querschnittsabmessungen,
ii. die durch und im Wesentlichen in der Mitte jedes der vielen HF-Aktivplättchen (29) der Matrix (23) perforiert sind, entlang einer Achse, die im Wesentlichen parallel zur untersuchten Oberfläche (8) ist,
iii. die eine längliche Via-Loch-Hülle (42) entlang der Öffnungsachse (40) der Matrix (23) aufweisen, deren seitlicher Umfang geschlossen ist, und,
iv. die durch ihre Ausrichtung die gerillte zylindrische Öffnung (39) bilden; und,
f. eine Vielzahl von geschlossenen induzierten Stromschleifen (43) aufweist, die, wenn der EMAT (1) in Betrieb ist,
i. durch das ausgesendete Hochfrequenz-Magnetfeld (HFEMF) induziert werden, das entweder durch den Hochfrequenz-Wechselstrom (AC) mit Ultraschallfrequenz in der Hochfrequenz-Spule (HF) (6) ausgesendet wird, und/oder durch die Wirbelströme im Material (14) mit Ultraschallfrequenz im untersuchten Material (3) ausgesendet wird,
ii. die sich innerhalb der Plättchenhaut (48) an der Peripherie jedes HF-Aktivplättchens (29) des laminierten perforierten Matrix-Magnetkerns (22) befinden,
iii. die in einer Schleifenkarte (LM) angeordnet sind, die die Topologie und die relativen Positionen aller induzierten Stromschleifen (43) definiert;
g. wobei jedes magnetische Via-Loch (41) in jedem HF-Aktivplättchen (29) zwischen der ersten Randfläche (36), die zur untersuchten Oberfläche (8) zeigt, und der zweiten Randfläche (37), die zur Hochfrequenz-Spule (6) zeigt, liegt;
h. wobei jedes magnetische Via-Loch (41) der gerillten zylindrischen Öffnung (39) innen frei von jeglichem harten Material ist und insbesondere frei von jeglichem elektrischen Leiter, der es durchquert;
i. wobei die Schleifenkarte (LM) topologisch diskret ist und aus einer Vielzahl von diskret verteilten induzierten Stromschleifen (43) von HF-Aktivplättchen (29) (oder Gruppen solcher Aktivplättchen) besteht, die voneinander entfernt sind;
j. wobei die entfernten induzierten Stromschleifen (43) (oder Gruppen solcher Schleifen),
i. innerhalb der Plättchenhaut (48) an den peripheren Rändern (33) der HF-Aktivplättchen (29) induziert werden,
ii. jeweils in einer Schleifenebene angeordnet sind, die parallel zur Stapelungsebene (27) und im Wesentlichen senkrecht zur Oberfläche des untersuchten Materials (3) ist,
iii. im Wesentlichen parallel und voneinander getrennt sind, zwischen ihren jeweiligen HF-Aktivplättchen (29),
iv. die magnetischen Via-Löcher (41) ihres HF-Aktivplättchens (29) umkreisen und sich darum drehen; und,
k. Jedes Abstandstrennscheibenstück (49) des laminierten perforierten Matrix-Magnetkerns (22) und seine Oberfläche, die sich zwischen zwei benachbarten HF-Aktivplättchen (29) (oder Gruppen) befindet, ist frei von induzierten Stromschleifen (43);
Infolgedessen tritt ein doppelter, kombinierter und interaktiver physikalischer Effekt im Inneren des laminierten perforierten Matrix-Magnetkerns (22) auf:
I. Jede der vielen parallelen und topologisch diskreten induzierten Stromschleifen (43) in jedem HF-Aktivplättchen (29):
i. erzeugt getrennt und lokal ein Hochfrequenz-Magnetfeld,
ii. erhöht getrennt und lokal die diskrete und selektive Hochfrequenz-Magnetkopplung zwischen - einem schmalen lokalen aktiven Abschnitt (44) der inspizierten Oberfläche (8), der dem HF-Aktivplättchen (29) gegenüberliegt, - und der Hochfrequenz-Spule (6), und,
iii. trägt durch gegenseitige Beeinflussung zur Gesamtreduzierung des Hochfrequenz-Magnetwiderstands des EMAT (1) bei;
m. Der innere Umfang (45) jedes magnetischen Via-Lochs (41) in jedem HF-Aktivplättchen (29) der Matrix (23):
i. schafft eine thermoleitende und konvektive Fläche (46) im Inneren des Zentrums seines HF-Aktivplättchens (29),
ii. erzeugt einen thermischen Kühleffekt im Inneren, um einen Teil der elektrischen und wärmebedingten Energie zu dissipieren, die lokal durch die spezifische induzierte Stromschleife (43) seines HF-Aktivplättchens (29) erzeugt wird, und,
iii. trägt durch gegenseitige Beeinflussung zur Effizienzsteigerung des EMAT (1) bei.

2. Ein elektromagnetischer akustischer Wandler (EMAT) (1) nach Anspruch 1, wobei:
a. Jedes HF-Aktivplättchen (29) der Matrix (23) (oder Gruppe solcher Aktivplättchen) durch mindestens ein Blatt einer zweiten Vielzahl (54) von Passivplättchen (53) aus einem elektrisch isolierenden Material von seinen benachbarten Abstandstrennscheibenstücken (49) getrennt ist;
b. Jedes Passivplättchen (53) von einem Abstandshalter-Via-Loch (57) durchbohrt ist; und,
c. Jedes Passivplättchen (53) so positioniert und konfiguriert ist, dass:
i. die Magnet-Via-Löcher (41) in der ersten Vielzahl (28) von HF-Aktivplättchen (29) der Matrix (23) sowie die Abstandshalter-Via-Löcher (57) der zweiten Vielzahl (54) von Passivplättchen (53) der Matrix (23),
ii. parallel zur Matrixachse (25) ausgerichtet sind, um durch ihre Ausrichtung und Kombination die zylindrische Schlitzöffnung (39) zu bilden;
Der elektromagnetische akustische Wandler (EMAT) (1) ist dadurch in Kombination gekennzeichnet, dass:
d. Jedes Abstandshalter-Via-Loch (57) in jedem Passivplättchen (53) sich befindet zwischen
i. der ersten Randfläche (36), die dem inspizierten Material (3) zugewandt ist, und,
ii. der zweiten Randfläche (37), die der HF-Spule (6) zugewandt ist; und,
e. Jedes Abstandshalter-Via-Loch (57) seiner zylindrischen Schlitzöffnung (39),
i. innerlich frei von jeglichem harten Material ist,
ii. und insbesondere frei von jeglichem elektrischen Leiter, der es durchquert;
Sodass der innere Umfang jedes Abstandshalter-Via-Lochs (57) in jedem Passivplättchen (53) der Matrix (23) eine
f. interne thermoleitende und konvektive Oberfläche (46) im Zentrum des Passivplättchens (53) schafft,
g. die einen inneren thermischen Kühleffekt in diesem Abstandshalter-Via-Loch (57) erzeugt, um einen Teil der durch die induzierten Stromschleifen (43) der benachbarten HF-Aktivplättchen (29) erzeugten elektrischen und wärmebedingten Energie zu dissipieren, und durch gegenseitige Beeinflussung zur Verbesserung der Effizienz des EMAT (1) beiträgt.

3. Ein elektromagnetischer akustischer Wandler (EMAT) (1) nach Anspruch 2, **dadurch gekennzeichnet, dass**, für mindestens ein Passivplättchen (53) und vorzugsweise für alle,
a. Die Randbereiche (33) ihrer Umrisse frei von jeglichem leitfähigen Material sind, das ihre Oberflächen bedeckt;
b. Sodass die gerillte Randfläche (34) des laminierten perforierten Matrix-Magnetkerns (22) nicht kontinuierlich und/oder aus einer elektrisch leitenden Schicht besteht, sondern stattdessen aus einer alternierenden Anordnung von leitenden Ringen um die HF-Aktivplättchen (29) und isolierenden Ringen um die Passivplättchen (53) besteht.

4. Ein elektromagnetischer akustischer Wandler (EMAT) (1) nach Anspruch 1, vom Typ, der auch umfasst:
a. Kühlmittel (58),
i. die einen Wärmestrom (59) eines Kühlmittelfluids (60) bei einer Kühltemperatur (TF) erzeugen,
ii. konfiguriert sind, um den Wärmestrom (59) gezwungen durch die zylindrische Schlitzöffnung (39) der Matrix (23) zu leiten;
Der elektromagnetische akustische Wandler (EMAT) (1) ist dadurch in Kombination gekennzeichnet, dass:
b. Der Wärmestrom (59) konfiguriert ist,
i. um nacheinander mindestens ein Magnet-Via-Loch (41) der ersten Vielzahl (28) und alternativ mindestens ein Abstandshalter-Via-Loch (57) der zweiten Vielzahl (54) zu durchqueren,
ii. um die gesamten Wandflächen (62) jedes aufeinanderfolgenden Magnet-Via-Lochs (41) und/oder jedes Abstandshalter-Via-Lochs (57) der Matrix (23) zu berühren,
iii. um die innere thermische Kühlwirkung in jedem HF-Aktivplättchen (29) der Matrix (23) zu erhöhen; jedes von ihnen ist einer induzierten Stromschleife (43) und einer Wärmeableitung ausgesetzt; und,
c. Die Kühltemperatur (TF) des Wärmestroms (59) ist mehr als 50° C niedriger als die spezifische Curie-Temperatur (TC) des magnetischen Materials jedes ausgehöhlten HF-Aktivplättchens (29).

5. Ein elektromagnetischer akustischer Wandler (EMAT) (1) nach Anspruch 4, **dadurch gekennzeichnet, dass** in Kombination:
a. Mindestens ein (und vorzugsweise eine Vielzahl) dünne Blätter (24) des laminierten perforierten Matrix-Magnetkerns (22),
i. entweder durch ein Polsterloch (63) durchbohrt oder mit einem Polsterausschnitt (64) versehen sind, der durch die ringförmige Wand (65) zwischen ihren Via-Löchern (41, 57) und dem Teil ihrer ersten Randfläche (36), die dem inspizierten Material (3) zugewandt ist, in einer Richtung parallel zur Stapelungsebene (27) verläuft,
ii. um eine Polsterausnehmung (66) zwischen den Via-Löchern (41, 57) des dünnen Blatts (24) und der ersten Randfläche (36), die dem inspizierten Material (3) zugewandt ist, zu schaffen; und,
b. Die Kühlmittel (58) konfiguriert sind,
i. um einen Polsterfluidstrom (67) aus dem Wärmestrom (59) zu extrahieren, der durch die Via-Löcher (41, 57) fließt,
ii. diesen extrahierten Polsterfluidstrom (67) unter Druck durch die Polsterausnehmung (66) fließen zu lassen,
iii. um ein Luftpolster (70) zwischen dem laminierten perforierten Matrix-Magnetkern (22) und dem inspizierten Material (3) auf Höhe der Polsterausnehmung (66), die dem inspizierten Material (3) zugewandt ist, zu erzeugen, und,
iv. den laminierten perforierten Matrix-Magnetkern (22) durch ein Polsterabstand (68) vom inspizierten Material (3) anzuheben.

6. Ein elektromagnetischer akustischer Wandler (EMAT) (1) nach Anspruch 1, **dadurch gekennzeichnet, dass** in Kombination:
a. Die beiden äußeren Blattflächen (32) der beiden äußeren dünnen Blätter an den Matrixseiten (26) entweder aus einer elektrisch leitenden Abdeckschicht (69) bestehen oder mit dieser bedeckt sind;
b. Dieser elektromagnetische akustische Wandler (EMAT) (1) ist in Kombination **dadurch gekennzeichnet, dass**:
c. Ein Via-Loch mit ähnlichen Querschnittsabmessungen wie die der Magnet-Via-Löcher (41) durch jede der beiden leitenden Abdeckschichten (69) gebohrt ist;
d. Die mehreren dünnen Blätter (24) und die beiden leitenden Abdeckschichten (69) der Matrix (23) zueinander so positioniert sind, dass ihre mehreren Via-Löcher ausgerichtet sind, um durch ihre Kontinuität die zylindrische Schlitzöffnung (39) zu bilden.

7. Ein elektromagnetischer akustischer Wandler (EMAT) (1) nach Anspruch 1, **dadurch gekennzeichnet, dass**:
a. Der Umfang jedes Magnet-Via-Lochs (41) in jedem HF-Aktivplättchen (29) rechteckig ist.

8. Ein elektromagnetischer akustischer Wandler (EMAT) (1) nach Anspruch 7, **dadurch gekennzeichnet, dass** in Kombination:
a. Das Zentrum jedes Magnet-Via-Lochs (41) sich im Wesentlichen im Schwerpunkt seines HF-Aktivplättchens (29) befindet; und,
b. Der Umfang jedes Via-Lochs jedes Magnet-Via-Lochs (41) im Wesentlichen in einem konstanten Ringabstand (Rd) vom Umfang seines HF-Aktivplättchens (29) angeordnet ist;
c. Sodass jedes HF-Aktivplättchen (29) topologisch als rechteckiger Aktivring (71) konfiguriert ist, der thermodynamisch gekühlt wird, um die Erwärmung der um ihn herum erzeugten induzierten Stromschleife (43) zu verringern.

9. Ein elektromagnetischer akustischer Wandler (EMAT) (1) nach Anspruch 1, **dadurch gekennzeichnet** in Kombination, dass:
a. Die zweite Randfläche (37) des laminierten perforierten Matrix-Magnetkerns (22) direkt der HF-Spule (6) gegenüberliegt, und,
b. Kein Magnet zwischen der zweiten Randfläche (37) der Matrix (23) und der HF-Spule (6) positioniert ist.

10. Ein elektromagnetischer akustischer Wandler (EMAT) (1) nach Anspruch 1, **dadurch gekennzeichnet** in Kombination, dass:
a. Die Orientierung, der Abstand, die Größe und die Form jedes Leiterflächenrands (72) jedes HF-Aktivplättchens (29), die sich in der zweiten Randfläche (37) der Matrix (23) befinden und der HF-Spule (6) gegenüberliegen,
b. konsistent und korreliert sind mit den geometrischen Parametern, einschließlich Orientierung, Abstand, Größe und Form, der Leiteranteile (75) der HF-Spule (6), die nacheinander jedem dieser Leiterflächenränder (72) gegenüberliegen.

11. Ein elektromagnetischer akustischer Wandler (EMAT) (1) nach Anspruch 10, wobei:
a. die HF-Spule (6) mindestens einen linearen Leiterabschnitt (73) aufweist; und,
b. dieser lineare Leiterabschnitt (73) in der Nähe und direkt oberhalb eines Leiterflächenrands (72) positioniert ist und tangential entlang einer Achse verläuft, die parallel zu diesem benachbarten Umfangsteil einer HF-Aktivplättchen (29) liegt, das sich in der zweiten Randfläche (37) der Matrix (23) befindet und der HF-Spule (6) zugewandt ist;
Der elektromagnetische akustische Wandler (EMAT) (1) ist dadurch in Kombination gekennzeichnet, dass die Fraktion des linearen Leiters (73) und der laminierte perforierte Matrix-Magnetkern (22) so konfiguriert sind, dass, wenn der EMAT (1) in Betrieb ist, eine induzierte Stromschleife (43)
c. in der Haut des HF-Aktivplättchens (48) am Umfang des HF-Aktivplättchens (29) induziert wird,
d. sein Magnet-Via-Loch (41) umgibt,
e. so dass ein selektives lokales HF-magnetisches Kopplung erfolgt zwischen:
i. einem durch den linearen Leiter (73) geführten HF-Wechselstrom (AC), der sich entlang des Umfangs des HF-Aktivplättchens (29) erstreckt, und,
ii. den Wirbelströmen des Materials (14), die in der engen aktiven Fraktion (44) der inspizierten Oberfläche (8) erzeugt werden, die dem HF-Aktivplättchen (29) gegenüberliegt.

12. Ein elektromagnetischer akustischer Wandler (EMAT) (1) nach Anspruch 11, wobei:
a. die HF-Spule (6) vom Typ ist, der eine Vielzahl von (mindestens zwei) parallelen linearen Leiterabschnitten (73) aufweist, ähnlich einem Mäanderkreis (74),
b. diese mehreren parallelen linearen Leiterabschnitte (73)
i. nacheinander in der Nähe und direkt oberhalb eines Leiterflächenrands (72) eines HF-Aktivplättchens (29) positioniert sind, das sich in der zweiten Randfläche (37) der Matrix (23) befindet und der HF-Spule (6) zugewandt ist, und,
ii. so konfiguriert sind, dass der Wechselstrom (AC), der nacheinander durch parallele und benachbarte lineare Leiterabschnitte (73) fließt, in entgegengesetzten Richtungen orientiert ist;
c. mindestens eine HF-Magnetfluss-Schleife (76) jede lineare Leiterfraktion (73) im Wesentlichen senkrecht umgibt und im Wesentlichen senkrecht in das ihr gegenüberliegende HF-Aktivplättchen (29) eindringt;
Der elektromagnetische akustische Wandler (EMAT) (1) ist **dadurch gekennzeichnet, dass** die linearen Leiterfraktionen (73) der HF-Spule (6) und der laminierte perforierte Matrix-Magnetkern (22) so konfiguriert sind, dass, wenn der EMAT (1) im Sendemodus (EM) ist:
d. zwei benachbarte HF-Aktivplättchen (29), die von zwei benachbarten linearen Leiterfraktionen (73) überlagert werden,
e. in ihrer Haut des HF-Aktivplättchens (48) von zwei benachbarten induzierten Stromschleifen (43) durchflossen werden, die jeweils aus einem HF-Wechselstrom bestehen, der in entgegengesetzter Drehrichtung (78) um die Öffnungsachse (40) fließt, die durch ihre Magnet-Via-Löcher (41) verläuft, wobei einer im Uhrzeigersinn und der andere gegen den Uhrzeigersinn fließt.

13. Ein elektromagnetischer akustischer Wandler (EMAT) (1) nach Anspruch 1, **dadurch gekennzeichnet, dass** in Kombination:
a. die Öffnungstiefe (Od) der zylindrischen Schlitzöffnung (39) seines laminierten perforierten Matrix-Magnetkerns (22) entlang seiner Öffnungsachse (40),
b. im Wesentlichen gleich und konsistent mit einer ersten Querdimension (FTd) von mindestens einer HF-Spule (6) des EMAT (1) ist.

14. Ein elektromagnetischer akustischer Wandler (EMAT) (1) nach Anspruch 1, **dadurch gekennzeichnet, dass** in Kombination:
a. die gerillte zweite Randfläche (37) seines laminierten perforierten Matrix-Magnetkerns (22), die einer HF-Spule (6) zugewandt ist,
b. eine Querdimension in einer Richtung senkrecht zur Öffnungsachse (40) der Matrix (23) aufweist, die im Wesentlichen gleich und konsistent mit einer zweiten Querdimension (STd) von mindestens einer HF-Spule (6) des EMAT (1) ist.

15. Ein elektromagnetischer akustischer Wandler (EMAT) (1) nach Anspruch 1, **dadurch gekennzeichnet, dass** in Kombination die geometrischen Abmessungen der perforierten dünnen Blätter (24) seines laminierten perforierten Matrix-Magnetkerns (22) und/oder die kombinierten geometrischen Abmessungen seines laminierten perforierten Matrix-Magnetkerns (22) ausgewählt sind, um:
a. von den Wellenlängen der Hauptoberwellen des ausgesandten HFelektromagnetischen Feldes (HFEMF) zu entkoppeln, und,
b. eine mechanische Resonanz seines laminierten perforierten Matrix-Magnetkerns (22) bei der Ultraschallbetriebsfrequenz des EMAT (1) zu verhindern.

16. Ein elektromagnetischer akustischer Wandler (EMAT) (1) nach Anspruch 1, **dadurch gekennzeichnet, dass** in Kombination die geometrischen Abmessungen der perforierten dünnen Blätter (24) seines laminierten perforierten Matrix-Magnetkerns (22) bei der Ultraschallbetriebsfrequenz des EMAT (1):
a. entweder kleiner als die Wellenlängen der in diesen dünnen Blättern (24) erzeugten Ultraschallwellen sind,
b. oder im Wesentlichen gleich einer ungeraden Anzahl von Viertelwellenlängen der in diesen dünnen Blättern (24) erzeugten Ultraschallwellen sind.

17. Ein elektromagnetischer akustischer Wandler (EMAT) (1) nach Anspruch 1, vom Typ, bei dem die gerillte erste Randfläche (36) seines laminierten perforierten Matrix-Magnetkerns (22), die dem inspizierten Material (3) zugewandt ist und parallel zur zylindrischen Schlitzöffnung (39) verläuft, mit einer Isolierschicht (81) bedeckt ist, die aus einem elektrisch isolierenden Material besteht; dieser EMAT (1) ist dadurch in Kombination gekennzeichnet, dass außerdem eine der Flächen der Isolierschicht (81)
a. auf der Seite der zylindrischen Schlitzöffnung (39) angeordnet ist, und,
b. den Umfang jedes perforierten HF-Aktivplättchens (29) auf dem Rand, der zur ersten Randfläche (36) gehört, bedeckt.

18. Eine Laser-EMAT-Sonde (LEMAT) (82), zur Inspektion eines zu inspizierenden Materials (3), das leitfähig ist, durch Empfang eines Ultraschallsignals von diesem zu inspizierenden Material (3), umfassend die Kombination von:
a. Einem elektromagnetisch-akustischen Wandler (EMAT) (1) gemäß einem der Ansprüche 1 bis 17,
i. konfiguriert im Empfangsmodus (RM), um ein Ultraschallsignal vom zu inspizierenden Material (3) zu empfangen,
ii. dessen HF-Spule (6) als ein HF-Elektromagnetikempfänger (18) konfiguriert ist,
• nduziert durch ein vom zu inspizierenden Material (3) ausgesendetes HF-Elektromagnetikfeld (HFEMF),
• erzeugt durch Wirbelströme des Materials (14), die im zu inspizierenden Material (3) durch sekundäre Ultraschallwellen (21) erzeugt werden, die für Oberflächen- und/oder interne Unregelmäßigkeiten (2) des zu inspizierenden Materials (3) repräsentativ sind, und,
iii. dessen perforierter Matrixlaminierter Magnetkern (22)
• sich zwischen der HF-Spule (6) des **EMAT** (1) und der lokalen Oberfläche des zu inspizierenden Materials (3) befindet, und,
• direkt der HF-Spule (6) gegenüberliegt;
b. Einer Laserquelle (84) konfiguriert zum:
i. Abfeuern eines hochenergetischen Laserstrahls (85) auf einen Schusspunkt (86) der Oberfläche des zu inspizierenden Materials (3),
ii. Erzeugen von Ultraschallwellen, die primäre Ultraschallwellen (17) erzeugen, die sich auf der Oberfläche und/oder im Inneren des zu inspizierenden Materials (3) ausbreiten, und,
iii. Verursachen der Erzeugung von sekundären Ultraschallwellen (21), die aus den Interaktionen der primären Ultraschallwellen (17) mit den Unregelmäßigkeiten (2) auf und/oder im Inneren des zu inspizierenden Materials (3) resultieren, und sich auf der Oberfläche und/oder im Inneren des zu inspizierenden Materials (3) ausbreiten,
iv. Verursachen der Erzeugung von Wirbelströmen des Materials (14) auf der Oberfläche des zu inspizierenden Materials (3), induziert durch die mechanischen Schwingungen der sekundären Ultraschallwellen (21) unter dem Einfluss des vom Magneten (4) des EMAT (1) erzeugten statischen Magnetfeldes (SMF), und,
v. Verursachen der Induktion eines vom zu inspizierenden Material (3) ausgesendeten HF-Elektromagnetikfeldes (HFEMF), das durch die Wirbelströme des Materials (14) auf der Oberfläche des zu inspizierenden Materials (3) repräsentativ für die Geometrie und Position der Oberflächen- und internen Unregelmäßigkeiten (2) des zu inspizierenden Materials (3) ist;
Diese Laser-EMAT-Sonde (LEMAT) (82) ist **dadurch gekennzeichnet, dass**:
c. Eine Vielzahl von parallelen und distanzierten induzierten Stromschleifen (43),
i. induziert werden durch das vom zu inspizierenden Material (3) ausgesendete HF-Elektromagnetikfeld (HFEMF) bei Ultraschallfrequenz unter dem Einfluss der Laserquelle (84),
ii. im Inneren der Haut der aktiven Plakette (48) auf den peripheren Kanten (33) jeder HF-Aktivplakette (29) des perforierten Matrixlaminierten Magnetkerns (22);
d. Diese induzierten Stromschleifen (43) jeder HF-Aktivplakette (29)
i. voneinander entfernt sind,
ii. jeweils in einer Schleifenebene parallel zur Stapelplanebene (27) und wesentlich senkrecht zur Oberfläche des zu inspizierenden Materials (3) angeordnet sind,
iii. die magnetischen Durchgangslöcher (41) ihrer HF-Aktivplakette (29) umgeben und umkreisen;
iv. sich zwischen der ersten Randfläche (36), die dem zu inspizierenden Material (3) zugewandt ist, und der zweiten Randfläche (37), die der HF-Spule (6) zugewandt ist, befinden, und,
v. im Wesentlichen senkrecht zu den beiden Randflächen (36, 37) positioniert sind;
Sodass ein doppelter, kombinierter und interaktiver physikalischer Effekt innerhalb des perforierten Matrixlaminierten Magnetkerns (22) auftritt:
e. Jede der mehrfachen parallelen und topologisch diskreten induzierten Stromschleifen (43) jeder HF-Aktivplakette (29),
i. separat ein hochfrequentes Magnetfeld erzeugt,
ii. separat, lokal und diskret die hochfrequente magnetische Kopplung zwischen - einem schmalen lokalen aktiven Bruchteil (44) der inspizierten Oberfläche (8), die ihrer HF-Aktivplakette (29) zugewandt ist, - und der HF-Spule (6) erhöht, und,
iii. die hochfrequente Kopplung homogenisiert und durch gegenseitige Verstärkung zur globalen Reduktion der hochfrequenten magnetischen Reluktanz und zur Erhöhung der Auflösung des EMAT (1) beiträgt;
f. Der innere Umfang (45) jedes magnetischen Durchgangslochs (41) in jeder HF-Aktivplakette (29) der Matrix (23),
i. eine interne thermisch leitfähige und konvektive Oberfläche (46) im Zentrum ihrer spezifischen HF-Aktivplakette (29) schafft, und,
ii. einen internen thermischen Kühleffekt erzeugt, um einen Bruchteil der lokalen elektrischen und kalorischen Energie, die durch die spezifische induzierte Stromschleife (43) ihrer HF-Aktivplakette (29) erzeugt wird, zu dissipieren, und,
iii. durch gegenseitige Verstärkung zur Verbesserung der Effizienz des EMAT (1) beiträgt.

19. Ein Multi-Laser-EMAT-3D-Scanner (MLEMAT) (89) zur Erkennung von Oberflächen- und/oder inneren Diskontinuitäten (2) in einem beweglichen, leitfähigen zylindrischen Gebilde (90), bestehend aus der Kombination von:
a. Einem zu scannenden leitfähigen Gebilde (90) in 3D,
i. hergestellt aus einem elektrisch leitfähigen Inspektionsmaterial (3),
ii. mit einer zylindrischen Struktur, die entlang einer Strukturachse (91) verläuft,
iii. mit einem im Wesentlichen konstanten Strukturquerschnitt (92);
b. Einem Rahmenchassis (93),
i. konfiguriert, um das leitfähige Gebilde (90) in einem Rahmenabstand (Fd) zu umgeben,
ii. dessen Rahmenebene (95) im Wesentlichen senkrecht zur Strukturachse (91) des leitfähigen Gebildes (90) steht;
c. Einer Vielzahl von Sonden (96), bestehend aus mindestens zwei Laser-EMAT-Sonden (LEMAT) (82) gemäß Anspruch 18, wobei jede Laser-EMAT-Sonde (82)
i. am Rahmenchassis (93) befestigt ist und
ii. so positioniert und konfiguriert ist, dass jede der ersten Kantenflächen (36) ihres perforierten Matrix-Laminat-Magnetkerns (22) dem leitfähigen Gebilde (90) gegenüberliegt;
d. Bewegungsvorrichtungen (97), konfiguriert zur linearen Bewegung
i. des zylindrischen leitfähigen Gebildes (90) relativ zum Rahmenchassis (93),
ii. in einer Bewegungsrichtung (Md), die im Wesentlichen mit der Strukturachse (91) übereinstimmt;
Dieser Multi-Laser-EMAT-3D-Scanner (MLEMAT) (89) ist **dadurch gekennzeichnet, dass**:
e. Die Öffnungsschleife (99),
i. gebildet durch die virtuelle Linie, die die Zentren jeder aufeinanderfolgenden zylindrischen Schlitzöffnung (39) der perforierten Matrix-Laminat-Magnetkerne (22) jeder benachbarten EMAT (1) der Laser-EMAT-Sonden (LEMAT) (82) des MLEMAT (89) verbindet,
ii. das leitfähige Gebilde (90) umschließt.

20. Ein Multi-Laser-EMAT-3D-Scanner (MLEMAT) (89) nach Anspruch 19, **gekennzeichnet durch** die Kombination, dass seine Vielzahl von Laser-EMAT-Sonden (96) (82) am Rahmenchassis (93) befestigt sind und so positioniert und konfiguriert sind, dass:
a. Die nebeneinanderliegenden ersten Kantenflächen (36) der benachbarten perforierten Matrix-Laminat-Magnetkerne (22) der Laser-EMAT-Sonden (LEMAT) (82), die dem Inspektionsmaterial (3) gegenüberliegen, im Wesentlichen aneinander angrenzen; und,
b. Es bildet einen im Wesentlichen durchgehenden geschlitzten Inspektionsring (100), der den Umfang des leitfähigen Gebildes (90) in einem Strukturquerschnitt (92) des leitfähigen Gebildes (90) in der Nähe der Rahmenebene (95) umschließt und abdeckt.

21. Ein Multi-Laser-EMAT-3D-Scanner (MLEMAT) (89) nach Anspruch 19, wobei:
a. Die Laserquelle (84) jeder LEMAT (82) aus einer optischen Faser (101) besteht, die am Rahmenchassis (95) befestigt ist und deren Abschussende (102) dem leitfähigen Gebilde (90) gegenüberliegt; und,
b. Jede optische Faser (101) mit einem Lasergenerator (103) verbunden ist; Dieser Multi-Laser-EMAT-3D-Scanner (MLEMAT) (89) ist **dadurch gekennzeichnet, dass** die Laserabschussschleife (104),
c. gebildet durch die virtuelle Linie, die die Abschussenden (102) jeder benachbarten Laser-EMAT-Sonde (LEMAT) (82) des MLEMAT (89) verbindet,
d. das leitfähige Gebilde (90) umschließt und im Wesentlichen parallel zur Öffnungsschleife (99) verläuft.

22. Ein Multi-Laser-EMAT-3D-Scanner (MLEMAT) (89) nach Anspruch 19 zur Erkennung von Oberflächen- und/oder inneren Diskontinuitäten (2) einer metallurgischen Platte (105), wobei:
a. Das leitfähige Gebilde (90) eine zylindrische, bewegliche metallurgische Platte (105) in Bezug auf den MLEMAT (89) ist;
Dieser Multi-Laser-EMAT-3D-Scanner (MLEMAT) (89) ist **dadurch gekennzeichnet, dass**:
b. Die Öffnungsschleife (99), gebildet durch die virtuelle Linie, die die Zentren jeder aufeinanderfolgenden zylindrischen Schlitzöffnung (39) der perforierten Matrix-Laminat-Magnetkerne (22) jeder benachbarten EMAT (1) der Laser-EMAT-Sonden (LEMAT) (82) des MLEMAT (89) verbindet, die zylindrische, bewegliche metallurgische Platte (105) umschließt.

23. Ein Multi-Laser-EMAT-3D-Scanner (MLEMAT) (89) nach Anspruch 22 zur Erkennung von Oberflächen- und/oder inneren Diskontinuitäten (2) einer Stahlplatte (105), wobei:
a. Das leitfähige Gebilde (90) eine zylindrische, bewegliche Stahlplatte (105) ist, die in einem Stahlwerk kontinuierlich gegossen wird bei einer Gießtemperatur (TS) von über 1000 °C, und,
b. Die HF-Aktivplatten (29) jedes perforierten Matrix-Laminat-Magnetkerns (22) jeder benachbarten EMAT (1) des MLEMAT (89) aus einem magnetischen, ferromagnetischen oder ferrimagnetischen Material bestehen, dessen Curie-Temperatur (TC) unter der Gießtemperatur (TS) liegt;
Dieser Multi-Laser-EMAT-3D-Scanner (MLEMAT) (89) ist **dadurch gekennzeichnet, dass** jede zylindrische Schlitzöffnung (39) jedes perforierten Matrix-Laminat-Magnetkerns (22) jeder benachbarten EMAT (1) des MLEMAT (89) an Kühlmittelvorrichtungen (58) angeschlossen ist, die einen Wärmefluss (59) eines Kühlfluids (60) erzeugen,
c. der unter Druck in jedes Loch (41, 57) der zylindrischen Schlitzöffnung (39) jedes perforierten Matrix-Laminat-Magnetkerns (22) jeder benachbarten EMAT (1) des MLEMAT (89) gepresst wird;
d. bei einer Kühltemperatur (TF), die mindestens 50°C unter der Curie-Temperatur (TC) des magnetischen Materials der HF-Aktivplatten (29) liegt.

24. Ein 3D-Multi-Laser-EMAT-Scanner (MLEMAT) (89) gemäß Anspruch 23, zur automatischen Einstellung der dynamischen Parameter der Soft Dynamic Reduction (DSR) einer kontinuierlich gegossenen Stahldiele (105) in einem Stahlwerk bei einer Gießtemperatur (TS) von mehr als 1000 °C, vom Typ:
a. Die Stahldiele (105) wird kontinuierlich durch eine Soft Dynamic Reduction Device (DSRD) geschoben, um die Bildung einer Makrosegregationszone und Porositätszonen innerhalb der Stahldiele (105) zu unterdrücken, indem der Rückzug der Stahlverfestigung dynamisch ausgeglichen und der Abfluss des restlichen geschmolzenen Metalls in der Central Soft Zone (106) unterbrochen wird;
b. Der MLEMAT (89) ist mit diesem Soft Dynamic Reduction Device (DSRD) gekoppelt, das Folgendes umfasst:
i. Ein dynamisches 3D-Kartierungssystem (3DMS), das eine dynamische 3D-Kartierung (3DM) des Gießens der Stahldiele (105) erzeugt,
ii. Ein computergestütztes DSR-Optimierungssystem (DSRM), das dynamische DSR-Optimierungsparameter (PCSD) generiert, basierend auf der dynamischen 3D-Kartierung (3DM) und den Gießparametern, und
c. Ein digitales DSR-Aktivierungssystem (ASR), das die Aktionsparameter des Soft Dynamic Reduction Device (DSRD) (PASD) dynamisch anpasst, basierend auf den durch das DSRM generierten PCSD;
Dieser 3D-Multi-Laser-EMAT-Scanner (MLEMAT) (89) ist **gekennzeichnet durch** die Kombination:
d. Die HF-Elektrospulen (6a, 6b, 6) jedes EMAT (1a, 1b, 1) jedes Laser-EMAT (82a, 82b, 82) des MLEMAT (89) sind jeweils mit dem dynamischen 3D-Kartierungssystem (3DMS) verbunden und übertragen ihm ein Signal ihres sekundären elektrischen Ultraschallsignals (88a, 88b, 88), das in jeder HF-Elektrospule (6a, 6b, 6) **durch** Foucaultströme des Materials (14) auf der Frontzone (110) des zu inspizierenden Materials (3) der Stahldiele (105) erzeugt wird, das lokal jedem EMAT (1a, 1b, 1) gegenüberliegt;
e. Das DSR-Optimierungssystem (DSRM) ist mit analogen und digitalen Verarbeitungsmitteln (MDAN) ausgestattet, die konfiguriert sind, um
i. Das vielfache sekundäre elektrische Ultraschallsignale (88a, 88b, 88) zu empfangen, die in den jedes Laser-EMAT (82a, 82b, 82) des MLEMAT (89) durchlaufenden elektrischen Ultraschallströmen (19a, 19b, 19) enthalten sind, und
ii. Änderungen und Störungen in jedem sekundären elektrischen Ultraschallsignal (88a, 88b, 88) jedes Laser-EMAT (82a, 82b, 82) zu identifizieren, die **durch** Diskontinuitäten (2) in der lokalen aktiven Materialfraktion (44a, 44b, 44) des zu inspizierenden Materials (3) verursacht werden, die jedem Laser-EMAT (82a, 82b, 82) gegenüberliegt, und numerisch die Frontdefekttopologie (DTa, DTb, DT) in dieser lokalen aktiven Materialfraktion (44a, 44b, 44) zu generieren,
iii. Die Frontdefekttopologien (DTa, DTb, DT) numerisch zu kombinieren und eine dreidimensionale dynamische 3D-Kartierung (3DM) zu generieren, die vom MLEMAT (89) physisch im Inneren des Gießens der Stahldiele (105) in der Frontzone (110) gegenüber der Inspektionsring (100) in der Strukturabschnitt (92) des Rahmens (95) beobachtet wird, basierend auf der Kombination und numerischen Analyse der kombinierten Signale der vielfachen sekundären elektrischen Ultraschallsignale (88a, 88b, 88); und
f. Die Kühlungseinrichtungen (58) erzeugen einen Wärmestrom (59) eines Kühlmediums (60),
i. unter Druck in jeden Durchgang (41, 57) der gerillten zylindrischen Öffnung (39) jedes perforierten laminierten Magnetkerns (22) jedes benachbarten EMAT (1a, 1b, 1) des MLEMAT (89) gepresst;
ii. bei einer Kühltemperatur (TF), die deutlich niedriger (um mindestens 50°C) als die Curie-Temperatur (TC) des magnetischen Materials der ausgesparten HF-Aktivplatte (29) ist;
g. So dass die Aktionsparameter des Soft Dynamic Reduction Device (DSRD) (PASD) dynamisch und optimal auf Basis einer physikalisch beobachteten dynamischen 3D-Kartierung (3DM) des Gießens der Stahldiele (105) **durch** den MLEMAT (89) bei einer Gießtemperatur (TS) von mehr als 1000 °C angepasst werden können.

25. Ein 3D-Multi-Laser-EMAT-Scanner (MLEMAT) (89) gemäß Anspruch 24, zur automatischen Einstellung der dynamischen Parameter der Soft Dynamic Reduction (DSR) und des Secondary Dynamic Cooling (DSC) einer kontinuierlich gegossenen Stahldiele (105) in einem Stahlwerk bei einer Gießtemperatur (TS) von mehr als 1000 °C, **gekennzeichnet durch** die Kopplung des MLEMAT (89) mit einer Secondary Dynamic Cooling Device (DSCD), die zusätzlich Folgendes umfasst:
a. Ein computergestütztes DSC-Optimierungssystem (DSCM), das dynamische DSC-Optimierungsparameter (PCSC) des Secondary Dynamic Cooling (DSC) basierend
i. auf der physikalisch beobachteten dynamischen 3D-Kartierung (3DM) des Gießens der Stahldiele (105) in der Strukturabschnitt (92) des Rahmens (95) **durch** Kombination und numerische Analyse der kombinierten Signale der vielfachen sekundären elektrischen Ultraschallsignale (88a, 88b, 88) in jedem Laser-EMAT (82a, 82b, 82) des MLEMAT (89) generiert,
ii. und auf den Gießparametern;
b. Ein digitales DSC-Aktivierungssystem (ASC), das die Aktionsparameter des Secondary Dynamic Cooling (DSC) (PASC) der Wasserflussrate dynamisch anpasst, basierend auf den **durch** das DSCM generierten PCSC auf Basis der physikalisch beobachteten dynamischen 3D-Kartierung (3DM) **durch** den MLEMAT (89).

## Claims

1. An Electromagnetic Acoustic Transducer (EMAT) (1) for the detection of surface and internal Discontinuities (2) in an electrically conductive Inspected Material (3), comprising:
a. At least one Magnet (4) or an electromagnet, configured to generate a Static Magnetic Field (SMF) or quasi-static field in the Inspected Material (3);
b. At least one HF Electrical Coil (6), this being of the type
i. either configured as an HF Electromagnetic Transmitter (9) of an Emitted HF Electromagnetic Field (HFEMF), if the EMAT (1) is used in Transmission Mode (EM), and then connected to the output of at least one Alternating Current Source (11), causing an HF Alternating Current (AC) at ultrasonic frequency to flow in the HF Electrical Coil (6),
• inducing the Emitted HF Electromagnetic Field (HFEMF) in the direction of the Inspected Material (3),
• producing Eddy Currents (14) on the surface of the Inspected Material (3),
• generating ultrasonic frequency Lorentz Forces (15) in the Inspected Material (3) through interaction of the Eddy Currents (14) with the Static Magnetic Field (SMF) and/or a Magnetostriction,
• the perturbation of which generates Primary Ultrasonic Waves (17) directly in the Inspected Material (3);
ii. and/or configured as an HF Electromagnetic Receiver (18), if the EMAT (1) is used in Reception Mode (RM), and then traversed by a Secondary Ultrasonic Electric Signal (88) at ultrasonic frequency,
• generated by an Emitted HF Electromagnetic Field (HFEMF),
• induced by Eddy Currents (14) produced on the Inspected Surface (8) of the Inspected Material (3) by Secondary Ultrasonic Waves (21), under the influence of an ultrasonic source, interacting with the Static Magnetic Field (SMF), and representative of surface and internal Discontinuities (2) of the Inspected Material (3);
c. At least one Perforated Matrix Laminated Magnetic Core (22), configured to concentrate and direct the Emitted HF Electromagnetic Field (HFEMF) in the direction or from the Inspected Material (3); of the type comprising a sandwich Matrix (23),
i. composed of a multitude of Thin Laminated Sheets (24) stacked periodically along the Matrix Axis (25), these Thin Sheets (24) being positioned between the two main Matrix Faces (26) of the Matrix (23), parallel to its Stacking Plane (27),
ii. having multiple adjacent lateral Border Faces (35), extending substantially perpendicular to the Stacking Plane (27) and perpendicular to the Matrix Axis (25);
• one of them, the First Border Face (36) of the Matrix (23), facing the Inspected Surface (8) of the Inspected Material (3),
• and the other, the Second Border Face (37) of the Matrix (23) being located substantially opposite to the First Border Face (36), and facing the HF Electrical Coil (6);
iii. each Thin Laminated Sheet (24) of the Matrix (23)
• having a spatial geometry and lateral dimensions similar to those of the neighbouring Thin Sheets (24) in the Matrix (23); and,
• having two main lateral Sheet Surfaces (32), parallel to the Stacking Plane (27);
iv. whose successive adjacent Peripheral Edges (33) combined of each Thin Sheet (24) constitute a grooved Border Surface (34) of the sandwich Matrix (23), surrounding the Matrix Axis (25), and,
v. defining a Core Axis (38) of the Matrix (23), substantially joining the centers of the First Border Face (36) and the Second Border Face (37); positioned substantially perpendicular to the Matrix Axis (25);
vi. This sandwich Matrix (23) comprising at least a First Multitude (28) of Active HF Plates (29) (or groups of such plates), each of them
• being isolated from each other,
• externally incorporating an electrically conductive material; and/or being externally covered with an electrically conductive layer on its Peripheral Edges (33), and,
• internally incorporating a ferromagnetic or ferrimagnetic Magnetic Material, and a Curie Temperature (TC);
This Electromagnetic Acoustic Transducer (EMAT) (1) being **characterized in** combination by the fact that:
d. It includes a Grooved Cylindrical Opening (39),
i. passing through each Thin Sheet (24) of the Matrix (23), along an Opening Axis (40) of the Matrix (23), substantially parallel to the Matrix Axis (25) and perpendicular to the Core Axis (38), and,
ii. leading to each of the two lateral Matrix Faces (26);
e. It includes a multitude of Magnetic Via Holes (41),
i. of similar cross-sectional dimensions,
ii. drilled through and substantially in the center of each of the multiple Active HF Plates (29) thus hollowed out of the Matrix (23), along an axis substantially parallel to the Inspected Surface (8),
iii. having a Via Hole Longitudinal Envelope (42), along the Opening Axis (40) of the Matrix (23), whose closed lateral perimeter, and,
iv. aligned to form the Grooved Cylindrical Opening (39) by their alignment; and,
f. It includes a multitude of closed Induced Current Loops (43) which, when the EMAT (1) is in operation, are
i. induced by the Emitted HF Electromagnetic Field (HFEMF), which is either emitted by the ultrasonic frequency HF Alternating Current (AC) in the HF Electrical Coil (6), and/or emitted by the ultrasonic frequency Eddy Currents (14) in the Inspected Material (3),
ii. located inside the Active Plate Skin (48) of the periphery of each Active HF Plate (29) of the Perforated Matrix Laminated Magnetic Core (22),
iii. arranged according to a Loop Mapping (LM), defining the topology and relative positions of all the Induced Current Loops (43);
g. Each Magnetic Via Hole (41) in each Active HF Plate (29) is located between - the First Border Face (36) facing the Inspected Surface (8), and, the Second Border Face (37) facing the HF Electrical Coil (6);
h. Each Magnetic Via Hole (41) of the Grooved Cylindrical Opening (39) is internally free of any hard material, and in particular free of any electrical conductor passing through it;
i. The Loop Mapping (LM) is topologically discrete and consists of a multitude of discretely distributed Induced Current Loops (43) of Active HF Plates (29) (or groups of such Active Plates) distant from each other;
j. The distant Induced Current Loops (43) (or groups of such Loops),
i. are induced inside the Active Plate Skin (48) on the Peripheral Edges (33) of the Active HF Plates (29),
ii. are each arranged according to a loop plane parallel to the Stacking Plane (27), and substantially perpendicular to the surface of the Inspected Material (3);
iii. are substantially parallel, and separated from each other, between their respective Active HF Plates (29),
iv. encircle the Magnetic Via Holes (41) of their respective Active HF Plates (29) and rotate around; and,
k. Each Core Spacing Slice (49) of the Perforated Matrix Laminated Magnetic Core (22) and its surface, located between two adjacent Active HF Plates (29) (or group), is free of Induced Current Loops (43);
So that a combined and interactive double physical effect occurs inside the Perforated Matrix Laminated Magnetic Core (22):
I. Each of the multiple parallel and topologically discrete Induced Current Loops (43) of each hollowed Active HF Plate (29),
i. separately and locally generates a high-frequency magnetic field,
ii. separately and locally increases the discrete and selective high-frequency magnetic coupling between - a narrow Local Active Fraction (44) of the Inspected Surface (8) facing the Active HF Plate (29), - and the HF Electrical Coil (6), and,
iii. participates through mutualization in the overall reduction of the high-frequency magnetic reluctance of the EMAT (1);
m. The Internal Perimeter (45) of each Magnetic Via Hole (41) in each Active HF Plate (29) of the Matrix (23),
i. creates a free internal Thermo-Conductive and Convective Surface (46) in the center of its specific Active HF Plate (29),
ii. produces an internal Thermal Cooling effect to dissipate a fraction of the local electric and calorific energy generated by the Induced Current Loop (43) of its specific Active HF Plate (29), and,
iii. participates through mutualization in the improvement of the efficiency of the EMAT (1).

2. An Electromagnetic Acoustic Transducer (EMAT) (1) according to claim 1, in which:
a. Each hollowed Active HF Plate (29) of the Matrix (23) (or group of such Active Plates) is separated from its neighbors at the level of the adjacent Core Spacing Slices (49) by at least one sheet of a Second Multitude (54) of Passive Plates (53) made of an electrically insulating material;
b. Each Passive Plate (53) is perforated by a Spacer Via Hole (57); and,
c. Each Passive Plate (53) is positioned and configured such that:
i. the Magnetic Via Holes (41) in the First Multitude (28) of Active HF Plates (29) of the Matrix (23), as well as the Spacer Via Holes (57) of the Second Multitude (54) of Passive Plates (53) of the Matrix (23),
ii. are aligned parallel to the Matrix Axis (25), to form by their alignment and combination the Grooved Cylindrical Opening (39);
This Electromagnetic Acoustic Transducer (EMAT) (1) being **characterized in** combination **in that**:
d. Each Spacer Via Hole (57) in each Passive Plate (53) is located between:
i. the First Border Face (36) facing the Inspected Material (3), and,
ii. the Second Border Face (37) facing the HF Electrical Coil (6); and,
e. Each Spacer Via Hole (57) of its Grooved Cylindrical Opening (39):
i. is internally free of any hard material,
ii. and in particular is free of any electrical conductor passing through it;
So that the internal perimeter of each Spacer Via Hole (57) in each Passive Plate (53) of the Matrix (23) creates:
f. a free internal Thermo-Conductive and Convective Surface (46) in the center of the Passive Plate (53),
g. which produces an internal Thermal Cooling effect in this Spacer Via Hole (57) to dissipate a fraction of the electrical and calorific energy generated by the Induced Current Loops (43) of the neighboring Active HF Plates (29), and participates through mutualization in the improvement of the efficiency of the EMAT (1).

3. An Electromagnetic Acoustic Transducer (EMAT) (1) according to claim 2, **characterized in that**, for at least one Passive Plate (53) and preferably for all:
a. The Peripheral Edges (33) of their perimeters are free of any conductive material covering their surfaces;
b. So that the Grooved Border Surface (34) of the Perforated Matrix Laminated Magnetic Core (22) is not continuously covered and/or composed of an electrically conductive layer, but on the contrary is composed of an alternating edge-to-edge arrangement of, on one hand, conductive rings around the Active HF Plates (29) and, on the other hand, insulating rings around the Passive Plates (53).

4. An Electromagnetic Acoustic Transducer (EMAT) (1) according to claim 1, of the type also comprising:
a. Cooling Means (58)
i. generating a Heat Flow (59) of a Cooling Fluid (60) at a Cooling Temperature (TF),
ii. configured so that the Heat Flow (59) is forced to pass through the Grooved Cylindrical Opening (39) of the Matrix (23);
This Electromagnetic Acoustic Transducer (EMAT) (1) being **characterized in** combination **in that**:
b. The Heat Flow (59) is configured:
i. to successively pass through at least one Magnetic Via Hole (41) of the First Multitude (28) and, alternatively, at least one Spacer Via Hole (57) of the Second Multitude (54),
ii. to sweep the entire Surface of the Wall of the Hole (62) of each successive Magnetic Via Hole (41) and/or each Spacer Via Hole (57) of the Matrix (23),
iii. to increase the internal thermal cooling effect in each Active HF Plate (29) of the Matrix (23); each being subjected to an Induced Current Loop (43) and heat dissipation; and,
c. The Cooling Temperature (TF) of the Heat Flow (59) is more than 50° C lower than the Curie Temperature (TC) specific to the Magnetic Material of each hollowed Active HF Plate (29).

5. An Electromagnetic Acoustic Transducer (EMAT) (1) according to claim 4, **characterized in that**, in combination:
a. At least one (and preferably a multitude of) Thin Sheets (24) of the Perforated Matrix Laminated Magnetic Core (22):
i. is either perforated by a Cushion Hole (63), or, provided with a Cushion Notch (64), passing through the Annular Wall (65) between their Via Holes (41, 57), and the portion of their First Border Face (36) facing the Inspected Material (3), in a direction parallel to the Stacking Plane (27),
ii. to create a Cushion Recess (66) between the Via Holes (41, 57) of the Thin Sheet (24) and the First Border Face (36) facing the Inspected Material (3); and,
b. The Cooling Means (58) are configured to:
i. extract a Cushion Fluid Flow (67) from the Heat Flow (59) passing through the Via Holes (41, 57),
ii. flow this extracted Cushion Fluid Flow (67) under pressure through the Cushion Recess (66),
iii. create a Lifting Air Cushion (70) between the Perforated Matrix Laminated Magnetic Core (22) and the Inspected Material (3), at the level of the Cushion Recess (66) facing the Inspected Material (3), and,
iv. thus lift the Perforated Matrix Laminated Magnetic Core (22) from the Inspected Material (3) by a Cushion Spacing (68).

6. An Electromagnetic Acoustic Transducer (EMAT) (1) according to claim 1, **characterized in that**, in combination:
a. The two external Sheet Surfaces (32) of the two outermost Thin Sheets located on the Matrix Faces (26) are either composed of, or covered by a Conductive Covering Layer (69), of an electrically conductive material;
b. This Electromagnetic Acoustic Transducer (EMAT) (1) being **characterized in** combination **in that**:
c. A via hole of similar transverse dimensions to those of the Magnetic Via Holes (41) is perforated through each of the two Conductive Covering Layers (69);
d. The multiple Thin Sheets (24) and the two Conductive Covering Layers (69) of the Matrix (23) are positioned relative to each other so that their multiple via holes are aligned to form by continuity the Grooved Cylindrical Opening (39).

7. An Electromagnetic Acoustic Transducer (EMAT) (1) according to claim 1, **characterized in that**:
a. The perimeter of each Magnetic Via Hole (41) in each Active HF Plate (29) is rectangular.

8. An Electromagnetic Acoustic Transducer (EMAT) (1) according to claim 7, **characterized in that**, in combination:
a. The center of each Magnetic Via Hole (41) is substantially located at the center of gravity of its Active HF Plate (29); and,
b. The perimeter of each hole of each Magnetic Via Hole (41) is arranged substantially at a constant Ring Distance (Rd) from the perimeter of its Active HF Plate (29);
c. So that each Active HF Plate (29) is topologically configured as a rectangular Active Ring (71), thermodynamically cooled from the heating of the Induced Current Loop (43) generated around it.

9. An Electromagnetic Acoustic Transducer (EMAT) (1) according to claim 1, **characterized in** combination **in that**:
a. the Second Border Face (37) of the Perforated Matrix Laminated Magnetic Core (22) directly faces the HF Electrical Coil (6), and,
b. no Magnet is positioned between - on one side the Second Border Face (37) of the Matrix (23) and - on the other side the HF Electrical Coil (6).

10. An Electromagnetic Acoustic Transducer (EMAT) (1) according to claim 1, **characterized in** combination **in that**:
a. the orientation, pitch, size, and shape of each Circuit-Facing Edge (72) of each Active HF Plate (29), located in the Second Border Face (37) of the Matrix (23), and facing the HF Electrical Coil (6);
b. are consistent and correlated with the geometric parameters, including orientation, pitch, size, and shape, of the Conductor Fractions (75) of the HF Electrical Coil (6) successively facing each of these Circuit-Facing Edges (72).

11. An Electromagnetic Acoustic Transducer (EMAT) (1) according to claim 10, wherein:
a. The HF Electrical Coil (6) has at least one part of Linear Conductor (73); and,
b. This part of Linear Conductor (73) is positioned near and directly above an Edge Circuit Surface (72), and is tangent along an axis parallel to this neighboring part of the perimeter of an HF Active Wafer (29) located in the Second Edge Surface (37) of the Matrix (23) facing the HF Electrical Coil (6);
This Electromagnetic Acoustic Transducer (EMAT) (1) being **characterized in** combination **in that** the fraction of Linear Conductor (73) and the Perforated Matrix Laminated Magnetic Core (22) are configured such that, when the EMAT (1) is in operation, an Induced Current Loop (43)
c. is induced in the Skin of the Active Wafer (48) around the perimeter of the HF Active Wafer (29),
d. surrounds its Magnetic Via Hole (41),
e. so that it achieves a selective local HF magnetic coupling between:
i. an HF Alternating Current (AC) driven in the Linear Conductor (73) extending over and along the perimeter of the HF Active Wafer (29), and,
ii. the Eddy Currents of the Material (14) generated in the narrow Local Active Fraction (44) of the Inspected Surface (8) facing the HF Active Wafer (29).

12. An Electromagnetic Acoustic Transducer (EMAT) (1) according to claim 11, wherein:
a. The HF Electrical Coil (6) is of the type with multiple (at least two) fractions of Linear Conductor (73); parallel and adjacent to each other, like a Meander Circuit (74),
b. These multiple parallel fractions of Linear Conductor (73) are
i. positioned successively near and directly above an Edge Circuit Surface (72) of an HF Active Wafer (29), located in the Second Edge Surface (37) of the Matrix (23) facing the HF Electrical Coil (6), and,
ii. iconfigured so that the alternating current (AC) flowing successively through parallel and adjacent fractions of Linear Conductor (73) is oriented in alternating opposite directions;
c. At least one HF Magnetic Flux Loop of Conductor (76) substantially perpendicularly surrounds each fraction of Linear Conductor (73), and penetrates substantially perpendicularly inside the HF Active Wafer (29) facing it;
This Electromagnetic Acoustic Transducer (EMAT) (1) being **characterized in that** the fractions of Linear Conductor (73) of the HF Electrical Coil (6) and the Perforated Matrix Laminated Magnetic Core (22) are configured such that when the EMAT (1) is in Transmission Mode (EM):
d. Two neighbouring HF Active Wafers (29), surmounted by two neighboring fractions of Linear Conductor (73),
e. Are traversed in their Skin of Active Wafer (48) by two neighboring Induced Current Loops (43), each composed of an HF alternating electric current rotating in an opposite Rotation Direction (78), around the Opening Axis (40) passing through their Magnetic Via Holes (41), one being clockwise, while the other is counterclockwise.

13. An Electromagnetic Acoustic Transducer (EMAT) (1) according to claim 1, **characterized in that**, in combination:
a. the Opening Depth (Od) of the Slotted Cylindrical Opening (39) of its Perforated Matrix Laminated Magnetic Core (22), along its Opening Axis (40),
b. is substantially equal and consistent with a First Transverse Dimension (FTd) of at least one HF Electrical Coil (6) of the EMAT (1).

14. An Electromagnetic Acoustic Transducer (EMAT) (1) according to claim 1, **characterized in that**, in combination:
a. the slotted Second Edge Surface (37) of its Perforated Matrix Laminated Magnetic Core (22), facing an HF Electrical Coil (6),
b. has a transverse dimension, in a direction perpendicular to the Opening Axis (40) of the Matrix (23), that is substantially equal and consistent with a Second Transverse Dimension (STd) of at least one HF Electrical Coil (6) of the EMAT (1).

15. An Electromagnetic Acoustic Transducer (EMAT) (1) according to claim 1, **characterized in that**, in combination, the geometric dimensions of the perforated Thin Sheets (24) of its Perforated Matrix Laminated Magnetic Core (22) and/or the combined geometric dimensions of its Perforated Matrix Laminated Magnetic Core (22) are selected to:
a. Be decorrelated from the wavelengths of the main harmonics of the HF Electromagnetic Field (HFEMF) emitted, and,
b. Prevent mechanical resonance of its Perforated Matrix Laminated Magnetic Core (22) at the ultrasonic operating frequency of the EMAT (1).

16. An Electromagnetic Acoustic Transducer (EMAT) (1) according to claim 1, **characterized in that**, in combination, the geometric dimensions of the perforated Thin Sheets (24) of its Perforated Matrix Laminated Magnetic Core (22) are, at the ultrasonic operating frequency of the EMAT (1):
a. Either less than the wavelengths of the ultrasonic waves generated in these Thin Sheets (24),
b. Or, substantially equal to an odd number of quarters of the wavelengths of the ultrasonic waves generated in these Thin Sheets (24).

17. An Electromagnetic Acoustic Transducer (EMAT) (1) according to claim 1, of the type where the grooved First Edge Surface (36) of the Perforated Matrix Laminated Magnetic Core (22), facing the Inspected Material (3) and parallel to the Slotted Cylindrical Opening (39) is covered with an Insulating Layer (81), made of an electrically insulating material; this EMAT (1) being **characterized in** combination **in that** furthermore one of the faces of the Insulating Layer (81)
a. Is disposed on the side of the Slotted Cylindrical Opening (39), and,
b. overs, on the edge belonging to the First Edge Surface (36), the perimeter of each perforated HF Active Wafer (29).

18. A Laser-EMAT Probe (LEMAT) (82), for inspecting a conductive Inspected Material (3), by receiving an ultrasonic signal from this Inspected Material (3), comprising the combination of:
a. An Electromagnetic Acoustic Transducer (EMAT) (1) according to any one of claims 1 to 17,
i. configured in Reception Mode (RM), to receive an ultrasonic signal from the Inspected Material (3),
ii. whose HF Electric Coil (6) is configured as an HF Electromagnetic Receiver (18),
• induced by an Emitted HF Electromagnetic Field (HFEMF) emitted by the Inspected Material (3),
• generated by Eddy Currents From The Material (14), produced in the Inspected Material (3) by Secondary Ultrasonic Waves (21), representative of surface and/or internal Discontinuities (2) of the Inspected Material (3), and,
iii. whose Perforated Matrix Laminated Magnetic Core (22)
• is located between the HF Electric Coil (6) of the EMAT (1) and the local surface of the Inspected Material (3), and,
• directly faces the HF Electric Coil (6);
b. A Laser Source (84) configured to:
i. fire a high-energy Laser Beam (85) at a Shooting Point (86) on the surface of the Inspected Material (3),
ii. generate ultrasonic waves producing Primary Ultrasonic Waves (17) propagating on the surface and/or inside the Inspected Material (3), and,
iii. cause the generation of Secondary Ultrasonic Waves (21) resulting from interactions of Primary Ultrasonic Waves (17) with Discontinuities (2) on and/or inside the Inspected Material (3), propagating on the surface and/or inside the Inspected Material (3),
iv. cause the generation of Eddy Currents From The Material (14) on the surface of the Inspected Material (3), induced by the mechanical vibrations of Secondary Ultrasonic Waves (21) under the influence of the Static Magnetic Field (SMF) generated by the Magnet (4) of the EMAT (1), and,
v. cause the induction of an Emitted **HF** Electromagnetic Field (HFEMF) emitted by the Eddy Currents From The Material (14) present on the surface of the Inspected Material (3), representative of the geometry and position of the surface and internal Discontinuities (2) of the Inspected Material (3);
This Laser-EMAT Probe (LEMAT) (82) being **characterized in that**:
c. A multitude of parallel and spaced Induced Current Loops (43),
i. are induced by the Emitted HF Electromagnetic Field (HFEMF) emitted by the Eddy Currents From The Material (14) at ultrasonic frequency of the Inspected Material (3) under the influence of the Laser Source (84),
ii. inside the Active Lamella Skin (48) on the Peripheral Edges (33) of each HF Active Lamella (29) of the Perforated Matrix Laminated Magnetic Core (22);
d. These Induced Current Loops (43) of each HF Active Lamella (29)
i. are spaced apart from each other,
ii. are each arranged in a loop plane parallel to the Stacking Plane (27), and substantially perpendicular to the surface of the Inspected Material (3);
iii. surround and rotate around the Magnetic Via Holes (41) of their HF Active Lamella (29);
iv. are located between the First Edge Face (36) facing the Inspected Material (3) and the Second Edge Face (37) facing the HF Electric Coil (6), and,
v. are positioned substantially perpendicularly to the two Edge Faces (36, 37);
So that a combined and interactive double physical effect occurs inside the Perforated Matrix Laminated Magnetic Core (22):
e. Each of the multiple parallel and topologically discrete Induced Current Loops (43) of each HF Active Lamella (29),
i. separately generates a high-frequency magnetic field,
ii. separately, locally, and discretely increases the high-frequency magnetic coupling between - a narrow Local Active Fraction (44) of the Inspected Surface (8) facing its HF Active Lamella (29), - and the HF Electric Coil (6), and,
iii. homogenizes the high-frequency coupling, and participates by mutualization in the overall reduction of high-frequency magnetic reluctance, and in the increase of the resolution of the EMAT (1);
f. The Inner Perimeter (45) of each Magnetic Via Hole (41) in each HF Active Lamella (29) of the Matrix (23),
i. creates a free internal Thermo-Conductive and Convective Surface (46) at the center of its HF Active Lamella (29), and,
ii. produces an internal Thermal Cooling effect to dissipate a fraction of the local electrical and thermal energy generated by the Induced Current Loop (43) of its specific HF Active Lamella (29), and,
iii. participates by mutualization in the improvement of the efficiency of the EMAT (1).

19. A Multi Laser-EMAT 3D Scanner (MLEMAT) (89), for detecting surface and/or internal Discontinuities (2) inside a moving cylindrical Conductive Structure (90), comprising the combination of:
a. A Conductive Structure (90) to be 3D scanned,
i. made of an electrically conductive Inspected Material (3),
ii. having a cylindrical structure generated along a Structure Axis (91),
iii. having a substantially constant Structure Section (92);
b. A Frame Chassis (93),
i. configured to surround the Conductive Structure (90) at a Frame Distance (Fd),
ii. whose Frame Plane (95) is substantially perpendicular to the Structure Axis (91) of the Conductive Structure (90);
c. A Multitude of Probes (96) made of at least two Laser-EMAT Probes (LEMAT) (82) according to claim 18, each of the Laser-EMAT Probes (82) being
i. fixed on the Frame Chassis (93), and,
ii. positioned and configured such that each of the First Edge Faces (36) of their Perforated Matrix Laminated Magnetic Core (22) faces the Conductive Structure (90);
d. Movement Means (97) configured to move linearly
i. the cylindrical Conductive Structure (90) relative to the Frame Chassis (93),
ii. in a Moving Direction (Md), substantially coinciding with the Structure Axis (91);
This Multi Laser-EMAT 3D Scanner (MLEMAT) (89) being **characterized in that**:
e. the Loop of Openings (99),
i. constituted by the virtual line joining the centers of each successive Slotted Cylindrical Opening (39) of the Perforated Matrix Laminated Magnetic Core (22) of each adjacent EMAT (1) of the Laser-EMAT Probes (LEMAT) (82) of the MLEMAT (89),
ii. encircles the Conductive Structure (90).

20. A Multi Laser-EMAT 3D Scanner (MLEMAT) (89) according to claim 19, **characterized in** combination **in that** its Multitude of Probes (96) made of Laser-EMAT (82) are fixed on the Frame Chassis (93) positioned and configured in a position such that:
a. The juxtaposition of the multitude of adjacent First Edge Faces (36) of the Perforated Matrix Laminated Magnetic Cores (22) of its adjacent Laser-EMAT Probes (LEMAT) (82), facing the Inspected Material (3), are substantially contiguous with each other; and,
b. It forms a substantially continuous slotted Inspection Ring (100), surrounding and covering the perimeter of the Conductive Structure (90), in a Structure Section (92) of the Conductive Structure (90) adjacent to the Frame Plane (95).

21. A Multi Laser-EMAT 3D Scanner (MLEMAT) (89) according to claim 19, of the type in which
a. The Laser Source (84) of each LEMAT (82) consists of an Optical Fiber (101), fixed on the Frame Chassis (95), having a Shooting End (102) facing the Conductive Structure (90); and,
b. Each Optical Fiber (101) is connected to a Laser Generator (103);
This Multi Laser-EMAT 3D Scanner (MLEMAT) (89) being **characterized in that** the Laser Shooting Loop (104),
c. constituted by the virtual line joining the Shooting Ends (102) of each adjacent Laser-EMAT Probe (LEMAT) (82) of the MLEMAT (89),
d. encircles the Conductive Structure (90) and is substantially parallel to the Loop of Openings (99).

22. A Multi Laser-EMAT 3D Scanner (MLEMAT) (89) according to claim 19, for detecting surface and/or internal Discontinuities (2) of a Metallurgical Slab (105), in which:
a. The Conductive Structure (90) is a mobile cylindrical Metallurgical Slab (105) relative to the MLEMAT (89);
This Multi Laser-EMAT 3D Scanner (MLEMAT) (89) being **characterized in that**:
b. The Loop of Openings (99), constituted by the virtual line joining the centers of each successive Slotted Cylindrical Opening (39) of the Perforated Matrix Laminated Magnetic Core (22) of each adjacent EMAT (1) of the Laser-EMAT Probes (LEMAT) (82) of the MLEMAT (89), encircles the mobile cylindrical Metallurgical Slab (105).

23. A Multi-Laser EMAT 3D Scanner (MLEMAT) (89) according to claim 22, for detecting surface and/or internal discontinuities (2) in a Steel Slab (105), of the type where:
a. The Conductive Structure (90) is a cylindrical Steel Slab (105) in motion, continuously cast in a steel mill at a Casting Temperature (TS) above 1000°C, and,
b. The hollow HF Active Plates (29) of each Perforated Matrix Laminated Magnetic Core (22) of each adjacent EMAT (1) of the MLEMAT (89) are made of a magnetic, ferromagnetic, or ferrimagnetic material, having a Curie Temperature (TC) lower than the Casting Temperature (TS);
This Multi-Laser EMAT 3D Scanner (MLEMAT) (89) being **characterized in** combination **in that** each Slotted Cylindrical Opening (39) of each Perforated Matrix Laminated Magnetic Core (22) of each adjacent EMAT (1) of the MLEMAT (89) is connected to Cooling Means (58) generating a Heat Flux (59) of a cooling Heat Fluid (60),
c. pushed under pressure inside each hole via (41, 57) of the Slotted Cylindrical Opening (39) of each Perforated Matrix Laminated Magnetic Core (22) of each adjacent EMAT (1) of the MLEMAT (89);
d. at a Cooling Temperature (TF) more than 50°C lower than the Curie Temperature (TC) of the magnetic material of the hollow HF Active Plates (29).

24. A Multi-Laser EMAT 3D Scanner (MLEMAT) (89) according to claim 23, for the automatic adjustment of the dynamic parameters of Soft Dynamic Reduction (DSR) of a continuously cast Steel Slab (105) in a steel mill at a Casting Temperature (TS) above 1000°C, of the type where:
a. The Steel Slab (105) is continuously pushed through a Soft Dynamic Reduction Device (DSRD), to suppress the formation of a macro-segregation zone and porosity zones inside the Steel Slab (105), by dynamically compensating for the steel solidification shrinkage and by interrupting the flow of suction of the residual molten metal in the Central Soft Zone (106);
b. The MLMAT (89) is coupled to this Soft Dynamic Reduction Device (DSRD) which comprises:
i. A Dynamic 3D Mapping System (3DMS), generating a Dynamic 3D Mapping (3DM) of the casting of the Steel Slab (105),
ii. A computerized DSR Optimization System (DSRM), generating Dynamic DSR Optimization Parameters (PCSD), based on the Dynamic 3D Mapping (3DM) and the casting parameters, and,
c. A Digital DSR Actuator (ASR), dynamically adjusting the Action Parameters of DSR (PASD) of the Soft Dynamic Reduction Device (DSRD), based on the PCSD generated by the DSRM;
This Multi-Laser EMAT 3D Scanner (MLEMAT) (89) being **characterized in** combination **in that**:
d. The HF Electric Coils (6a, 6b, 6) of each EMAT (1a, 1b, 1) of each Laser-EMAT (82a, 82b, 82) of the MLEMAT (89) are each connected to the Dynamic 3D Mapping System (3DMS), and transmit a signal of their Secondary Ultrasonic Electric Signal (88a, 88b, 88) induced in each HF Electric Coil (6a, 6b, 6) by the Eddy Currents of the Material (14) on the Front Zone (110) of the Inspected Material (3) of the Steel Slab (105) facing locally to each EMAT (1a, 1b, 1);
e. The DSR Optimization System (DSRM) is equipped with Analog and Digital Processing Means (MDAN) configured to:
i. Receive the multitude of Secondary Ultrasonic Electric Signals (88a, 88b, 88) included in the Secondary Ultrasonic Electric Currents (19a, 19b, 19) flowing through each HF Electric Coil (6a, 6b, 6) in each Laser-EMAT (82a, 82b, 82) of the MLEMAT (89), and,
ii. Identify changes and disturbances in each Secondary Ultrasonic Electric Signal (88a, 88b, 88) of each Laser-EMAT (82a, 82b, 82), caused by the Discontinuities (2) in the Local Active Fraction (44a, 44b, 44) of the Inspected Material (3) facing each Laser-EMAT (82a, 82b, 82), and deduce and generate digitally the Frontal Topology of Defects (DTa, DTb, DT) in this Local Active Fraction (44a, 44b, 44), and,
iii. Digitally combine the Frontal Topology of Defects (DTa, DTb, DT), and digitally generate a three-dimensional Dynamic 3D Mapping (3DM) physically observed by the MLEMAT (89) from inside the casting of the Steel Slab (105), in the Front Zone (110) facing the Inspection Ring (100) in the Structure Section (92) of the Frame Plane (95), based on the combination and digital analysis of combined signals from the multiple Secondary Ultrasonic Electric Signals (88a, 88b, 88); and,
f. The Cooling Means (58) generate a Heat Flow (59) of a cooling Heat Fluid (60),
i. pushed under pressure inside each hole via (41, 57) of the Slotted Cylindrical Opening (39) of each Perforated Matrix Laminated Magnetic Core (22) of each adjacent EMAT (1a, 1b, 1) of the MLEMAT (89);
ii. at a Cooling Temperature (TF) significantly lower (by at least 50°C) than the Curie Temperature (TC) of the magnetic material of the hollow HF Active Plates (29);
g. So that the Action Parameters of DSR (PASD) of the Soft Dynamic Reduction Device (DSRD) can be dynamically and automatically adjusted optimally, based on a Dynamic 3D Mapping (3DM) of the casting of the Steel Slab (105) physically observed by the MLEMAT (89), at a Casting Temperature (TS) above 1000°C.

25. A Multi-Laser EMAT 3D Scanner (MLEMAT) (89) according to claim 24, for the automatic adjustment of the dynamic parameters of Soft Dynamic Reduction (DSR) and for the Secondary Dynamic Cooling (DSC) of a continuously cast Steel Slab (105) in a steel mill at a Casting Temperature (TS) above 1000°C, **characterized in that** the MLMAT (89) is coupled to a Secondary Dynamic Cooling Device (DSCD) which further comprises:
a. A computerized DSC Optimization System (DSCM), generating Dynamic DSC Optimization Parameters (PCSC) for the Secondary Dynamic Cooling (DSC) based
i. on the Dynamic 3D Mapping (3DM) physically observed of the casting of the Steel Slab (105), in the Structure Section (92) of the Frame Plane (95), by combination and digital analysis of combined signals from the multiple Secondary Ultrasonic Electric Signals (88a, 88b, 88) in each Laser-EMAT (82a, 82b, 82) of the MLEMAT (89),
ii. and on the casting parameters;
b. A Digital DSC Actuator (ASC), dynamically adjusting the Action Parameters of DSC (PASC) of the water flow of the Secondary Dynamic Cooling (DSC), based on the PCSC generated by the DSC Optimization System (DSCM) based on the Dynamic 3D Mapping (3DM) physically observed by the MLEMAT (89)
